(19) Europäisches Patentamt
European Patent Office
Office européen des brevets

(11) Publication number : **0 333 496 B1**

# (12) EUROPEAN PATENT SPECIFICATION

(45) Date of publication of patent specification :
**21.06.95 Bulletin 95/25**

(51) Int. Cl.⁶ : **H04N 1/40**

(21) Application number : **89302645.0**

(22) Date of filing : **17.03.89**

(54) **Avoiding fine line disappearance in picture reduction processes.**

(30) Priority : **18.03.88 JP 63802/88**
**30.08.88 JP 213673/88**

(43) Date of publication of application :
**20.09.89 Bulletin 89/38**

(45) Publication of the grant of the patent :
**21.06.95 Bulletin 95/25**

(84) Designated Contracting States :
**DE FR GB**

(56) References cited :
**PATENT ABSTRACTS OF JAPAN vol. 12, no.
49 (E-582)(2896) 13 February 1988, & JP-A-62
196976 (NIPPON TELEGR & TELEPH CORP) 31
August 1987,**

(56) References cited :
**PATENT ABSTRACTS OF JAPAN vol. 10, no.
347 (E-457)(2403) 21 November 1986, & JP-
A-61 147668 (NIPPON TELEGr & TELEPH
CORP) 05 July 1986,
PATENT ABSTRACTS OF JAPAN vol. 12, no.
476 (E-693)(3323) 13 December 1988, & JP-A-63
197169 (hitachi LTD.) 16 August 1988**

(73) Proprietor : **FUJITSU LIMITED
1015, Kamikodanaka
Nakahara-ku
Kawasaki-shi Kanagawa 211 (JP)**

(72) Inventor : **Okada, Yoshiyuki
Shiti haitsu Ohkiddo 405
256-1, Tanaka
Isehara-shi Kanagawa 259-11 (JP)**

(74) Representative : **Fane, Christopher Robin King
et al
HASELTINE LAKE & CO.
Hazlitt House
28 Southampton Buildings
Chancery Lane
London, WC2A 1AT (GB)**

EP 0 333 496 B1

## Description

The present invention relates to avoiding fine line disappearance in picture reduction processes, for example in facsimile picture transmission.

The reduction or enlargement of a picture may be achieved by means of a change in the concentration of picture pixels when it is desired to convert between different facsimile transmission types, such as G3 and G4 prescribed by CCITT standards.

A high speed projection method type picture reduction can be used in which the monochrome pixel data (indicating whether a pixel is black or white) for a reduced picture is determined by performing logic calculations based on the original picture pixel data. In such a method, an area of the original picture is divided into sections, a logic calculation formula is provided for each of these sections, and a logic calculation is carried out for each of the reduced picture pixels according to the logic calculation formula so that the monochrome pixel data for the reduced picture is determined.

A picture reduction process utilizing this method employs respective monochrome values of a first set of pixels representing an original picture to be reduced, which pixels relate respectively to the points of a first two-dimensional array of points on the original picture, to derive respective monochrome values of a second set of pixels representing a converted version of the original picture, which pixels are smaller in number than the pixels of the first set and which relate respectively to the points of a second two-dimensional array of points on the converted version of the original picture; which process comprises the following steps for each pixel in turn of the said second set, when the said second array is considered as superimposed on the first array in a predetermined relationship therewith such that rows and columns of the second array are parallel respectively to rows and columns of the first array: calculating the location on the first array of the second-array point to which the second-set pixel concerned relates; and employing predetermined logical calculations to derive the monochrome value of the second-set pixel concerned from the monochrome value of the first-set pixel whose point is located closest to the said calculated location or from the respective monochrome values of first-set pixels whose respective points are located in the vicinity of the said calculated location.

However, in such a high speed projection method type picture reduction process, there may be problems associated with the disappearance of fine lines. In practice, vertical lines having a width of less than 1/p where p is the reduction factor along the X-axis, and horizontal lines having a width of less than 1/q where q is the corresponding reduction factor along the Y-axis, will disappear (fail to reproduce) in the reduction process. This may be most disadvantageous in a picture reduction process involving a change in the concentration of picture pixels for use in converting between different facsimile transmission types.

It is therefore desirable to provide an improved process and apparatus for reducing a picture in which the disappearance of fine lines is prevented, thereby achieving a more reliable and satisfactory picture reduction.

According to a first aspect of the present invention there is provided picture reduction process for employing respective monochrome values of a first set of pixels representing an original picture to be reduced, which pixels relate respectively to the points of a first two-dimensional array of points on the original picture, to derive respective monochrome values of a second set of pixels representing a converted version of the original picture, which pixels are smaller in number than the pixels of the first set and which relate respectively to the points of a second two-dimensional array of points on the converted version of the original picture; which process comprises the following steps for each pixel in turn of the said second set, when the said second array is considered as superimposed on the first array in a predetermined relationship therewith such that rows and columns of the second array are parallel respectively to rows and columns of the first array: (a) calculating the location on the first array of the second-array point to which the second-set pixel concerned relates; and (b) employing predetermined logical calculations to derive the monochrome value of the second-set pixel concerned from the monochrome value of the first-set pixel whose point is located closest to the said calculated location or from the respective monochrome values of first-set pixels whose respective points are located in the vicinity of the said calculated location; characterised by the steps of: (c) determining which one of a predetermined plurality of different regions, of a unit cell of the first array that contains the said calculated location, contains that calculated location; and (d) determining whether the respective monochrome values of a group of first-set pixels whose points are in the vicinity of the calculated location, the members of which group are selected in dependence upon the determined region, match any one of a plurality of predetermined patterns of monochrome values of first-set pixels, some of the patterns of the said plurality representing respective line portions which could be portions of the original picture that extend in the column direction of the first array and that are each of a width less than the distance from one second-array point to the next in the row direction, and the other patterns of the said plurality representing respective line portions which could be portions of the original picture that extend in the row direction of the first array and that are each of a width less than the distance from one second-array point to the next in the column direction, and producing line maintenance data if such a match is found; and also characterised in that in step (b) the said logical calculations of the monochrome values of the second-set pixels are dependent upon any such line maintenance data produced, and serve to reproduce, in the said converted version of the original picture, any such line portion in the original picture.

According to a second aspect of the present invention there is provided picture reduction apparatus for employing respective monochrome values of a first set of pixels representing an original picture to be reduced, which pixels relate respectively to the points of a first two-dimensional array of points on the original picture, to derive respective monochrome values of a second set of pixels representing a converted version of the original picture, which pixels are smaller in number than the pixels of the first set and which relate respectively to the points of a second two-dimensional array of points on the converted version of the original picture; which apparatus comprises: monochrome data receiving means for receiving each pixel in turn of the said second set, when the said second array is considered as superimposed on the first array in a predetermined relationship therewith such that rows and columns of the second array are parallel respectively to rows and columns of the first array; means for calculating the location on the first array of the second-array point to which the second-set pixel concerned ($R_{11}$) relates; and monochrome data calculation means connected to the said monochrome data receiving means for receiving therefrom such first-set pixel monochrome values and operable to employ predetermined logical calculations to derive the monochrome value of the second-set pixel concerned from the monochrome value of that first-set pixel whose point is located closest to the said calculated location or from the respective monochrome values of first-set pixels whose respective points are located in the vicinity of the said calculated location; characterised by control means including: a region discrimination portion operable to determine which one of a predetermined plurality of different regions, of a unit cell of the first array that contains the said calculated location, contains that calculated location; and a line maintenance data generation portion connected to the said monochrome data receiving means for receiving therefrom the respective monochrome values of a group of first-set pixels whose points are in the vicinity of the calculated location, the members of which group are selected in dependence upon the determined region, and operable to determine whether those monochrome values match any one of a plurality of predetermined patterns of monochrome values of first-set pixels, some of the patterns of the said plurality representing respective line portions which could be portions of the original picture that extend in the column direction of the first array and that are each of a width less than the distance from one second-array point to the next in the row direction, and the other patterns of the said plurality representing respective line portions which could be portions of the original picture that extend in the row direction of the first array and that are each of a width less than the distance from one second-array point to the next in the column direction, and to produce line maintenance data if such a match is found; and also characterised in that the said monochrome data calculation means are connected to the said control means for receiving therefrom any such line maintenance data produced by the said line maintenance data generation portion, and in that the said logical calculations of the monochrome values of the second-set pixels are dependent upon any such line maintenance data produced, and serve to reproduce, in the said converted version of the original picture, any such line portion in the original picture.

Incidentally, further picture reduction processes addressing the problem of fine line disappearance are disclosed in JP-A-62-196976 and JP-A-61-147668.

Reference will now be made, by way of example, to the accompanying drawings, in which:

Fig. 1 illustrates the basic method of reduction of a picture;

Fig. 2 illustrates one form of division of respective areas of a plane picture into sections;

Fig. 3 shows an equation used to define a curve shown in Fig. 2;

Fig. 4 shows a logic calculation table for the sections of Fig. 2;

Fig. 5 illustrates basic fine line disappearance in a reduction of a picture;

Fig. 6 illustrates the distribution of original picture pixels with respect to reduced picture pixels;

Fig. 7 shows an example of distribution of original picture pixels;

Fig. 8 illustrates a location of a reduced picture pixel;

Fig. 9 shows a method of determining regions employed in an embodiment of the invention;

Fig. 10 illustrates the selection of a group of reference original picture pixels in an embodiment of the invention;

Fig. 11 illustrates the different possibilities for fine line disappearance for the different regions in Figure 9;

Figs. 12A to 12D show a table of the conditions for detecting pixels which are susceptible to disappearance;

Figs. 13A to 13C show sections and a logic calculation table for an embodiment of the present invention;

Figs. 14A and 14B show the schematic diagrams of an apparatus for carrying out a process of reducing a picture according to the above-mentioned embodiment of the present invention;

Fig. 15 shows patterns, corresponding to fine lines of unit width, that are susceptible to disappearance when the reduction factor p is 1/2 > p ≧ 1/3;

Fig. 16 shows fine line patterns, corresponding to fine lines of double the unit width, that susceptible to disappearance when the reduction factor p is 1/2 > p ≧ 1/3;

Fig. 17 shows a block diagram of an apparatus for carrying out a process for reducing a picture according to a modified version of the above-mentioned embodiment of the present invention;

Fig. 18 is a diagram corresponding to Fig. 6 but illustrating the distribution of original picture pixels in the Fig. 17 apparatus;

Fig. 19 illustrates a method of determining regions used in the apparatus of Fig. 17;

Fig. 20 illustrates the selection of a group of reference original picture pixels in the apparatus of Fig. 17;

Figs. 21A to 21D correspond to Figs. 12A to 12D but show a table of the conditions for detecting a disappearance of pixels based on the Fig. 20 group;

Fig. 22 shows a table of the logic calculations for the apparatus of Fig. 17;

Fig. 23 illustrates the selection of another group of reference original picture pixels which can be used in the apparatus of Fig. 17;

Figs. 24A to 24D illustrate basic patterns used in the apparatus of Fig. 17 to detect fine line disappearance with the Fig. 23 group;

Figs. 25A to 25D show a table of the conditions for detecting a disappearance of pixels based on the Fig. 23 group;

Fig. 26 shows a table of logic calculations used in the operation of the apparatus of Fig. 17 with the Fig. 23 group;

Fig. 27 shows a block diagram of an apparatus for carrying out a process for reducing a picture according to another embodiment of the present invention;

Fig. 28 is a diagram corresponding to Fig. 6 illustrating the distribution of original picture pixels in the Fig. 27 apparatus;

Fig. 29 illustrates a method of determining regions used in the apparatus of Fig. 27;

Fig. 30 illustrates the selection of a group of reference original picture pixels in the apparatus of Fig. 27;

Figs. 31A to 31D correspond to Figs. 12A to 12D but show a table of the conditions for detecting disappearance of pixels in the Fig. 27 apparatus;

Fig. 32 shows a table of the logic calculations used in the operation of the apparatus of Fig. 27;

Figs. 33A, 33B, and 33C show an example of the structure of an apparatus for carrying out a process of reducing a picture according to a further embodiment of the present invention; and

Figs. 34A, 34B, and 34C illustrate an example of the operation of an apparatus for carrying out a process of reducing a picture according to an embodiment of the present invention.

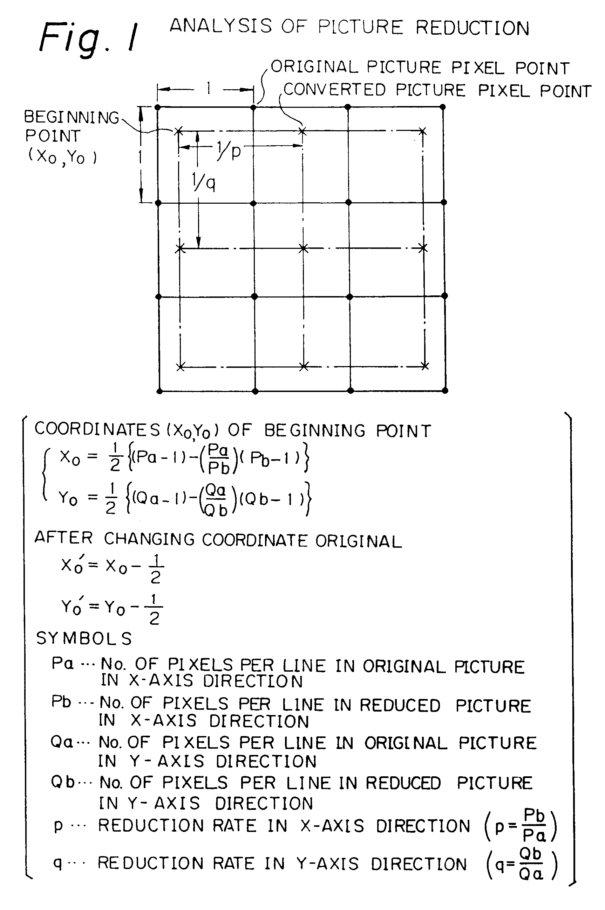

An analysis of the reduction of a picture is illustrated in Fig. 1. It is assumed that each pixel of a picture is represented by a monochrome (i.e., black or white) dot placed at the centre of the pixel. The pixels are arrayed in rows (X-direction) and columns (Y-direction). In the reduction shown in Fig. 1, four original picture pixels represented as black dots along the X-axis direction are converted into three reduced picture pixels represented as crosses along the X-axis direction. Thus, the reduction factor p along the X-axis is p = 3/4. Similarly, the reduction factor q along the Y-axis is q = 3/4. It is assumed that the distance between the adjacent original picture pixels along the X-axis direction is 1. Thus the distance between the adjacent reduced picture pixels the along X-axis is l/p. Similarly, the distance between the adjacent original picture pixels in the Y-axis direction is 1, and the distance between the adjacent reduced picture pixels along the Y-axis is l/q.

$P_a$ is the number of pixels per line in the original picture along the X-axis direction, $P_b$ is the number of pixels per line in the reduced picture along the X-axis direction, $Q_a$ is the number of pixels per line in the original picture along the Y-axis direction, and $Q_b$ is the number of pixels per line in the reduced picture along the Y-axis direction.

The X and Y coordinates of the beginning pixel point of the reduced picture pixels are calculated as follows.

$$\text{X coordinate} \; - \; - \; - \; X_0 = \frac{1}{2}\{(P_a - 1) - (\frac{P_a}{P_b})(P_b - 1)\}$$

$$\text{Y coordinate} \; - \; - \; - \; Y_0 = \frac{1}{2}\{(Q_a - 1) - (\frac{Q_a}{Q_b})(Q_b - 1)\}$$

By changing the original coordinates, the X and Y coordinates are as follows.

$$\text{X - coordinate} \; - \; - \; - \; X_0 - 1/2$$
$$\text{Y - coordinate} \; - \; - \; - \; Y_0 - 1/2$$

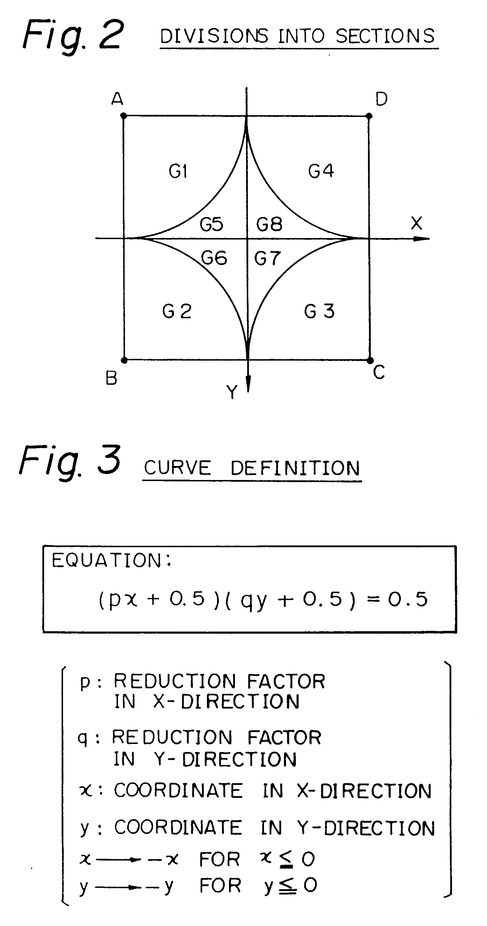

The division into sections is illustrated in Fig. 2. In Fig. 2, the area defined by four original picture pixels A, B, C, and D is divided into eight sections $G_1$, $G_2$, $G_3$, $G_4$, $G_5$, $G_6$, $G_7$, and $G_8$. Hyperbola curves are used to divide the sections. The definition of the curve is given by an equation (px + 0.5) (qy + 0.5) = 0.5 as shown in

4

Fig. 3.

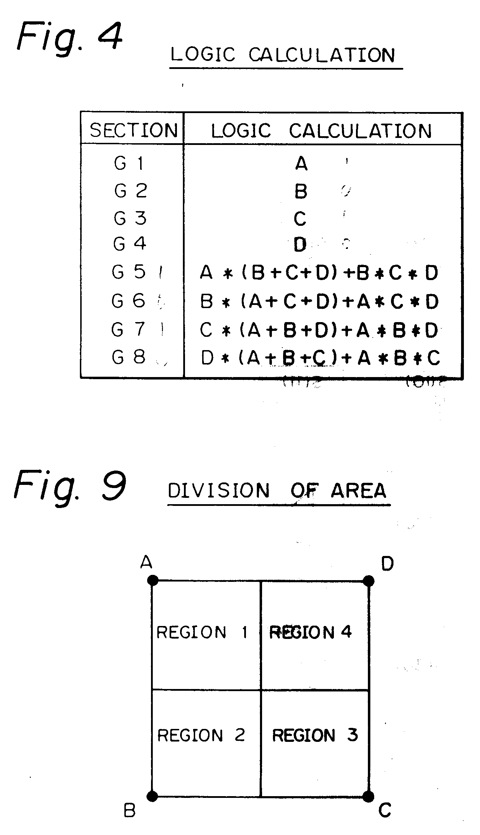

In a process of picture reduction of a high speed projection type, the logic calculation can be carried out using a logic calculation table shown in Fig. 4.

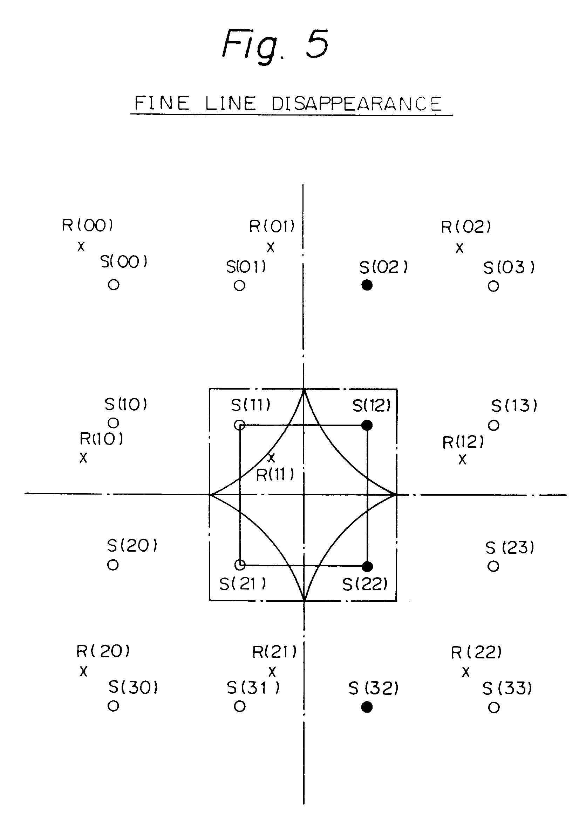

However, in such a process for reducing a picture, fine lines of the original picture may not appear in the reduced picture. The possibility of disappearance of fine lines in the reduction of an original picture will be explained with reference to Figs 5 to 10.

In Fig. 5, the original picture pixels S are shown superposed on the reduced picture pixels R. S(00), S(10), S(20), S(30), S(01), S(11), S(21), S(31), S(03), S(13), S(23), and S(33) represent white pixels of the original picture, S(02), S(12), S(22), and S(32) represent black pixels of the original picture, and R(00), R(10), R(20), R(30), R(01), R(11), R(21), R(02), R(12), R(22), and R(22) represent pixels of the reduced picture.

Looking at the monochrome data of reduced picture pixels R(11), R(21), R(12) and R(22) which are in the vicinity of original picture black pixels S(12), S(22), and S(32) which constitute a fine black line in the original picture, for example, since R(11) is located in section G5 in Fig. 2, the logical calculation $A*(B + C + D) + B*C*D$ for G5 as shown in Fig. 4 is carried out to produce the calculation result of white ("0") for R(11). Similarly, the calculation results for R(21), R(12), and R(22) are all white ("0"). This shows that the black information of S(12), S(22), and S(32) of the original picture is not reproduced in the corresponding region of the reduced picture, and thus the vertical fine black line constituted by S(12), S(22), and S(32) disappears in the reduced picture. The situation is similar in the case of a horizontal fine black line.

Thus, there has been a problem that a vertical line having a width of less than l/p and a horizontal line having a width of less than 1/q, where p and q are the respective reduction factors in the X-axis and Y-axis directions in original picture, are susceptible to disappearance in the reduced picture.

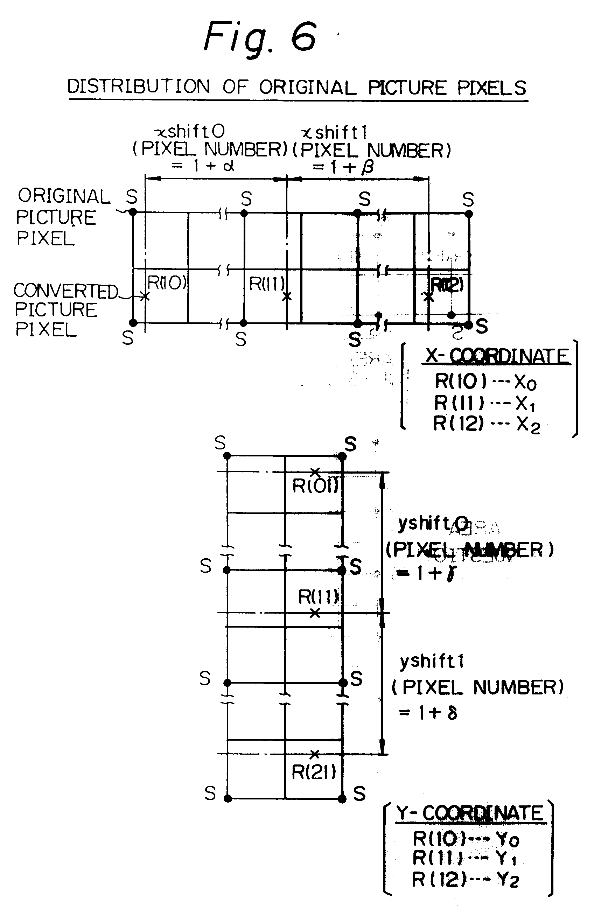

In Fig. 6, a distribution of original picture pixels with respect to reduced picture pixels is shown. $X_0$ represents the X-ordinate (row-direction ordinate) of the preceding reduced picture pixel R(10), $X_1$ represents the X-ordinate of the present reduced picture pixel R(11), and $X_2$ represents the X-ordinate of the subsequent reduced picture pixel R(12). xshift0 represents the number of original picture pixels between R(11) and R(10), and xshiftl represents the number of original picture pixels between R(11) and R(12).

$Y_0$ represents the Y-ordinate (column-direction ordinate) of the preceding reduced picture pixel R(01), $Y_1$ represents the Y-coordinate of the present reduced picture pixel R(11), and $Y_2$ represents the Y-ordinate of the subsequent reduced picture pixel R(21). yshift0 represents the number of original picture pixels between R(11) and R(01), and yshiftl represents the number of original picture pixels between R(11) and R(21).

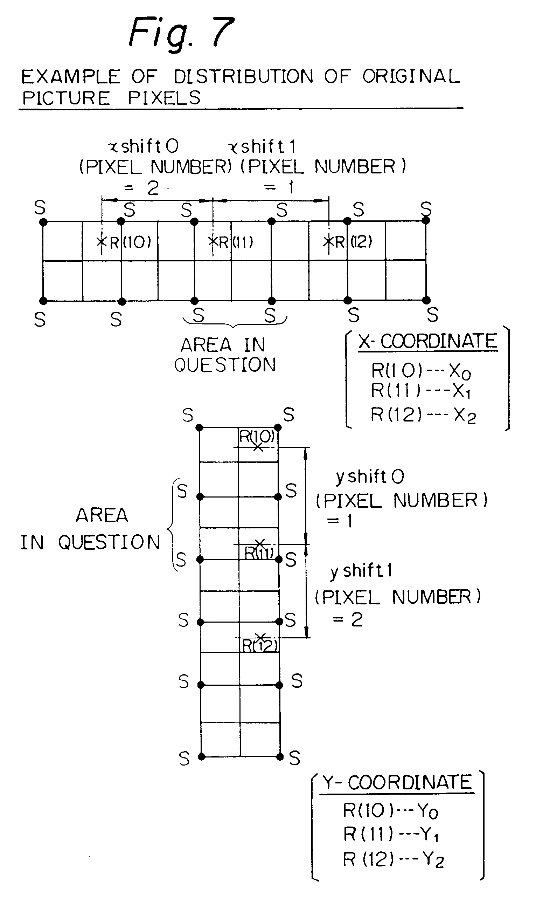

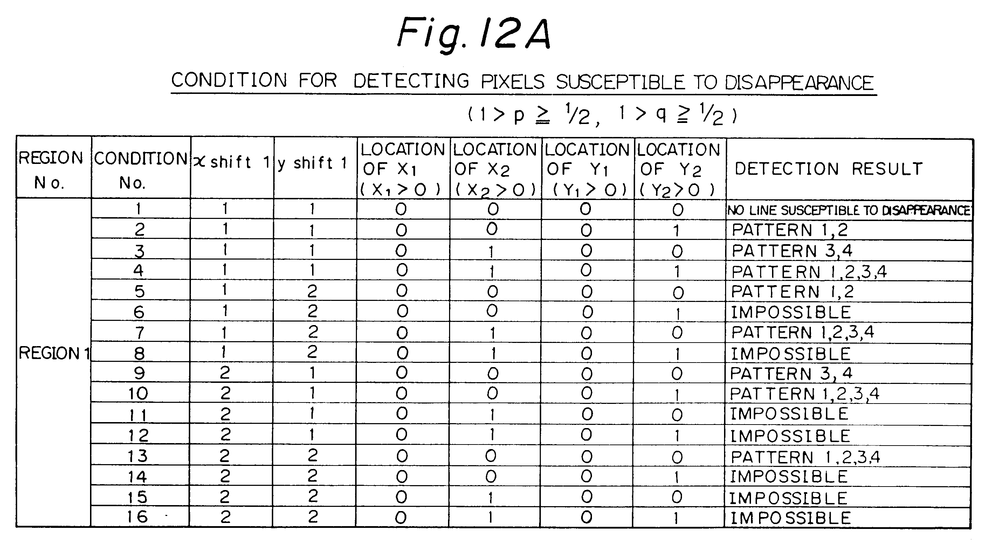

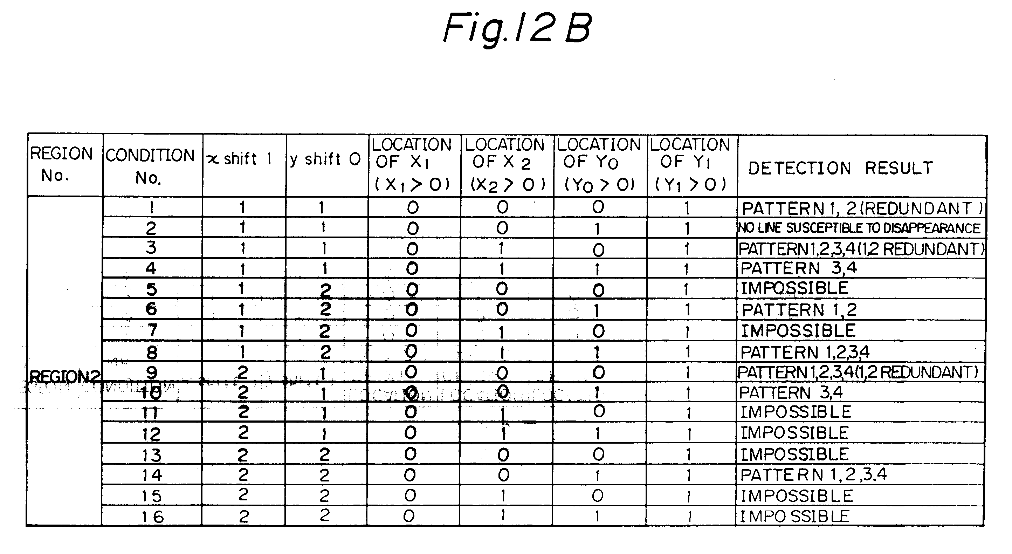

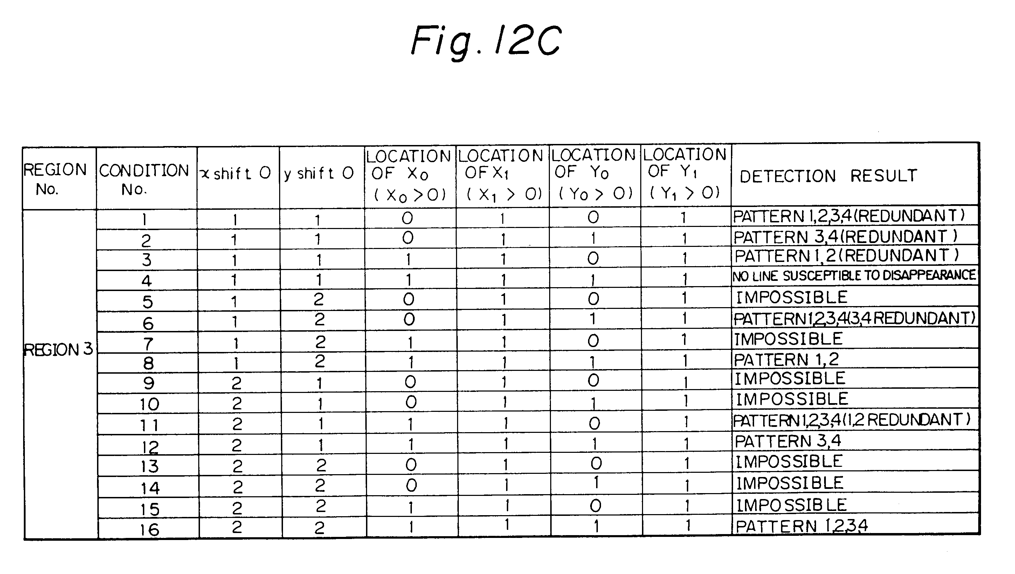

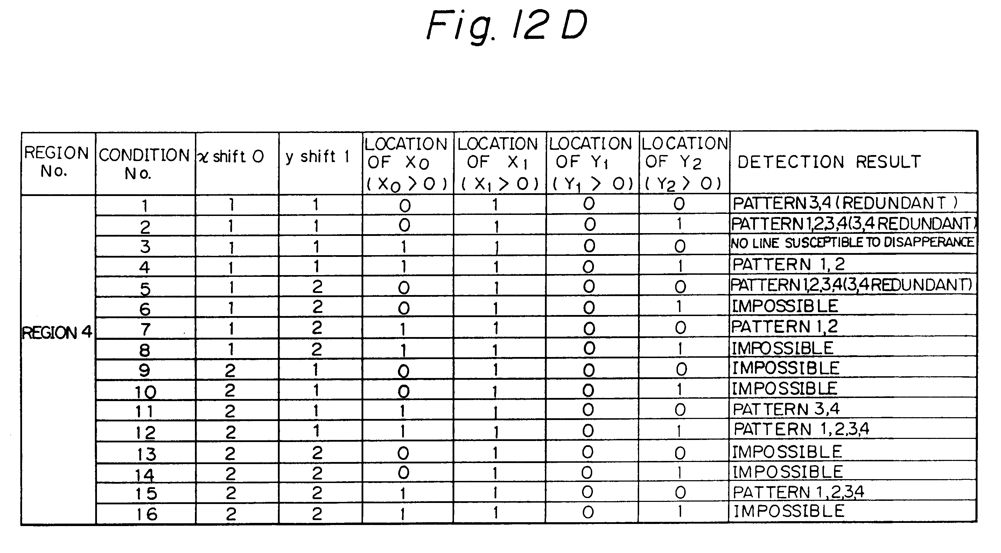

In Fig. 7, an example of distribution of original picture pixels is shown, to illustrate the basis of the table of conditions for detecting pixels susceptible to disappearance shown in Figs. 12A to 12D. In the upper pattern of Fig. 7, the pixel number xshift0 is equal to 2, and the pixel number xshiftl is equal to 1. With respect to the x-axis the position of R(11) is in the left-hand half ("0") of the area in question.

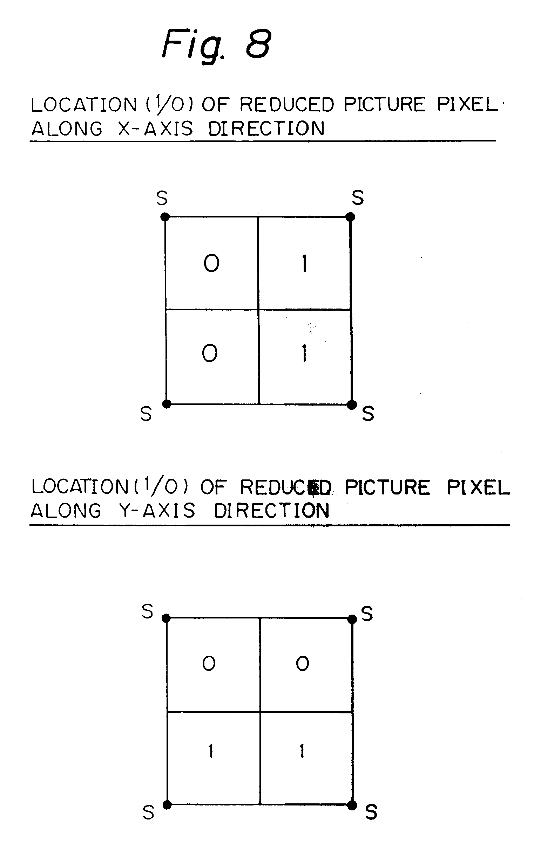

In the lower pattern of Fig. 7, the pixel number yshift0 is equal to 1, and the pixel number yshiftl is equal to 2. With respect to the area in question, the position of R(11) is in the lower half ("1") in the Y-axis direction (Fig. 8).

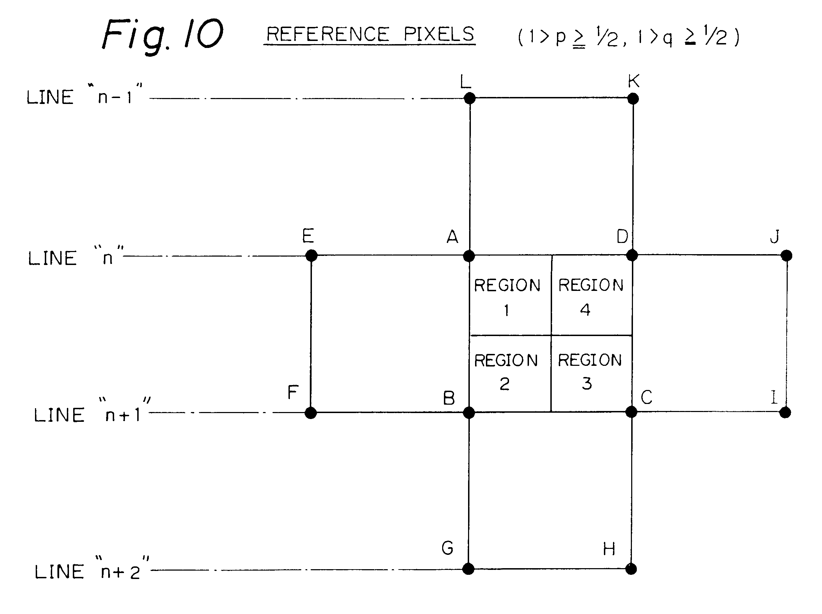

In Fig. 9, a division of a unit cell (the area formed by pixels A, B, C, and D) into four regions 1 to 4 for use in relation to the conditions for detection of pixels susceptible to disappearance is illustrated. In Fig. 10, a group of reference pixels for use in relation to the conditions for detection of pixels susceptible to disappearance is illustrated.

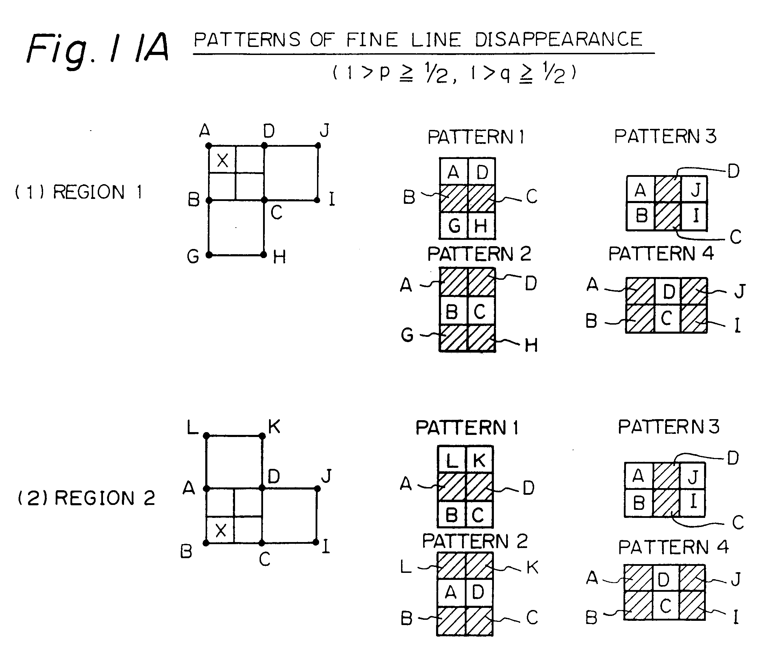

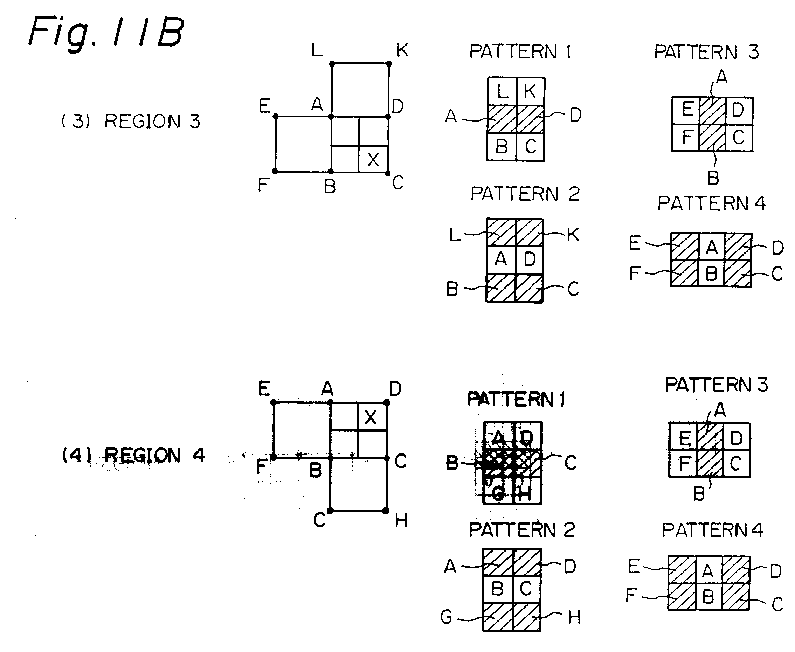

In Fig. 11, the patterns of fine line disappearance associated with regions 1 to 4 of Fig. 9 are illustrated. In the patterns, hatching denotes black portions.

As a basis of a process embodying the present invention, a table of conditions for detecting pixels susceptible to disappearance will be explained with reference to Figs. 12A to 12D. For example, in Fig. 12A, conditions (numbered 1 to 16) are listed for the situation in which the present pixel in the reduced picture is in region 1, and columns are provided for the region number, the condition number, the number xshiftl of pixels, the number yshiftl of pixels, the present converted (reduced) picture pixel position ($X_1$), the subsequent converted picture pixel position ($X_2$), the present converted picture pixel position ($Y_1$), the subsequent converted picture pixel position ($Y_2$), and the determination of the fine line susceptible to disappearance. The table of Figs. 12A to 12D should be interpreted in relation with Figs. 6 to 11.

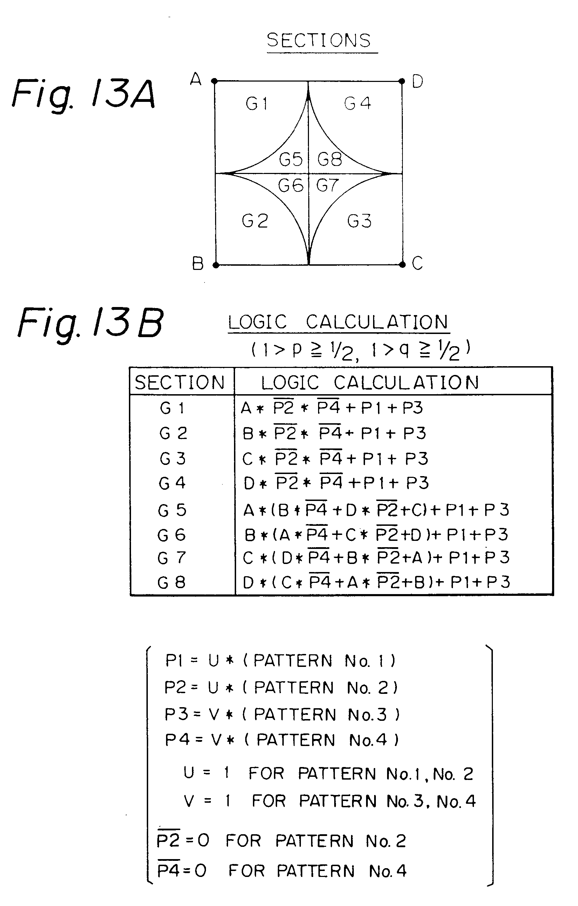

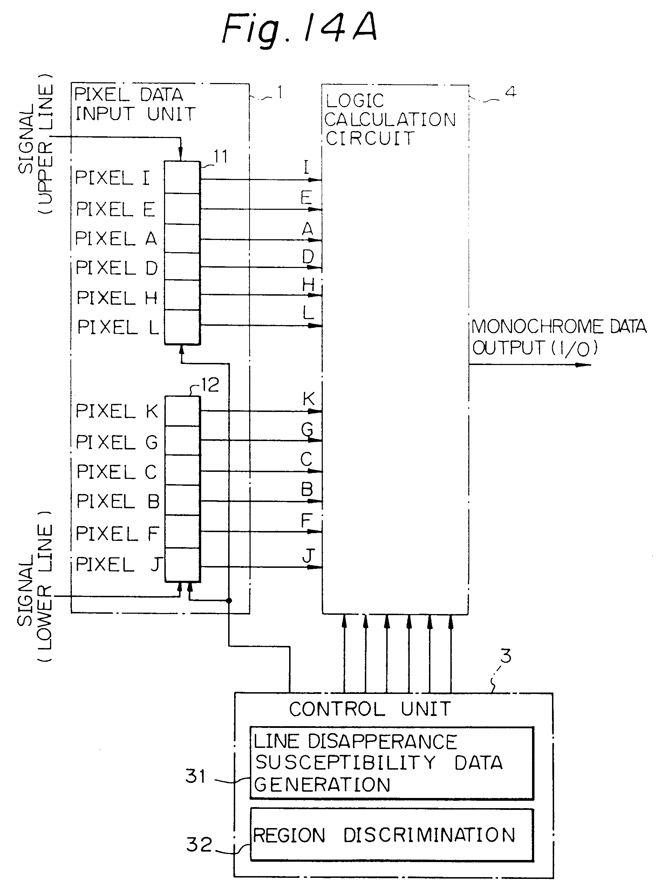

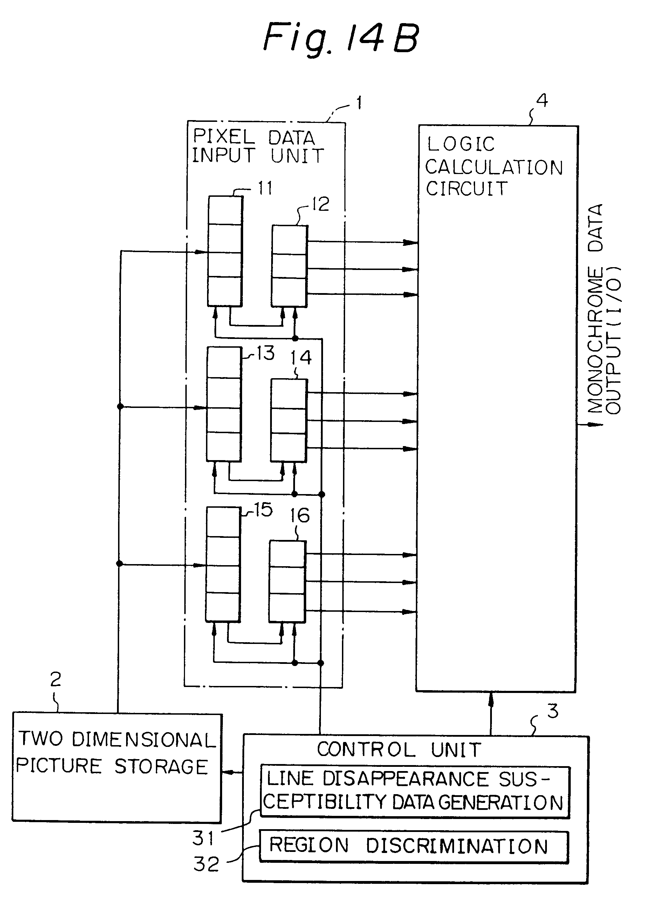

Logic calculation tables for the calculation in the monochrome calculation circuit of the apparatus for carrying out this process according to an embodiment of the present invention shown in Fig. 14, are shown in Fig. 13B.

An apparatus for carrying out a process of reducing a picture according to an embodiment of the present invention is shown in Figs. 14A and 14B. Figure 14A is an illustration in a simplified form showing the structure for X-axis direction, and Fig. 14B is an illustration in a more detailed form showing the structure for X- and Y-axis directions. The apparatus of Figs. 14A and 14B, is of the high speed projection method type and uses a division of 8 sections. In the apparatus of Figs. 14A and 14B, a reduction factor of p, where $1 > p \geqq 1/2$, for example, is used.

The apparatus of Fig. 14A includes a pixel data input unit 1 having a shift register 11 and a shift register 12, a control unit 3 having a line maintenance data generation portion 31 and a region discrimination portion 32, and a logic calculation circuit 4.

The shift register 11 receives a sequence of signals of original picture pixels of an upper line of an original picture pixel group, and holds the received signal sequence by a shifting operation. The shift register 11 receives a sequence of signals of original picture pixels of a lower line of an original picture pixel group, and holds the received signal sequence by a shifting operation.

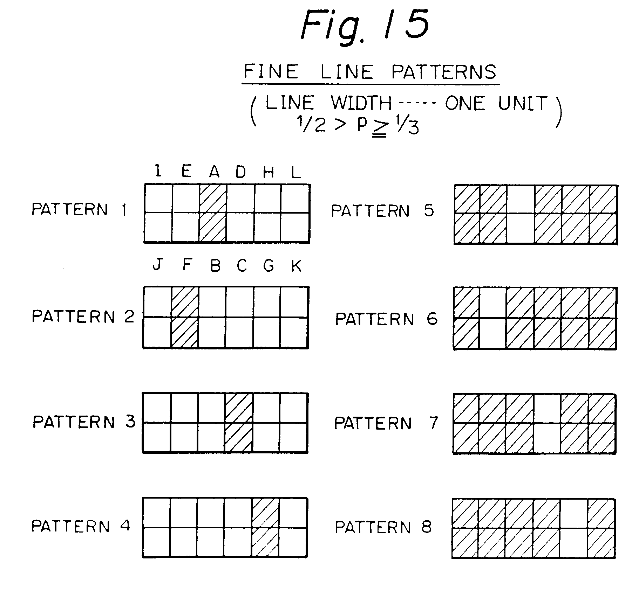

Elements I, E, A, D, H, L and elements K, G, C, B, F, J of the shift registers 11 and 12 correspond to positions of original picture pixels I, E, A, D, H, L, J, F, B, C, G, and K shown in Fig. 15.

In the control unit 3, the line maintenance data is generated and the regions are discriminated based on the reduction factors p and q.

The operation of the control unit 3 is carried out in accordance with the tables of Figs. 12A to 12D showing the condition for detecting the pixels susceptible to disappearance for the case where $1 > p \geqq 1/2$, and $1 > q \geqq 1/2$.

In the tables of Figs. 12A to 12D, xshift0 represents the number of original picture pixels between $R_{11}$ and $R_{10}$, and xshiftl represents the number of original picture pixels between $R_{11}$ and $R_{12}$. In the "location" columns for converted picture pixel positions, "1" indicates that the converted picture pixel position is situated in the first half (right side in X-direction, lower side in Y-direction) of the area in question, and "0" indicates that the converted picture pixel position is situated in the second half (left side in X-direction, upper side in Y-direction) of the area in question, as will be understood from Fig. 7 and Fig. 8.

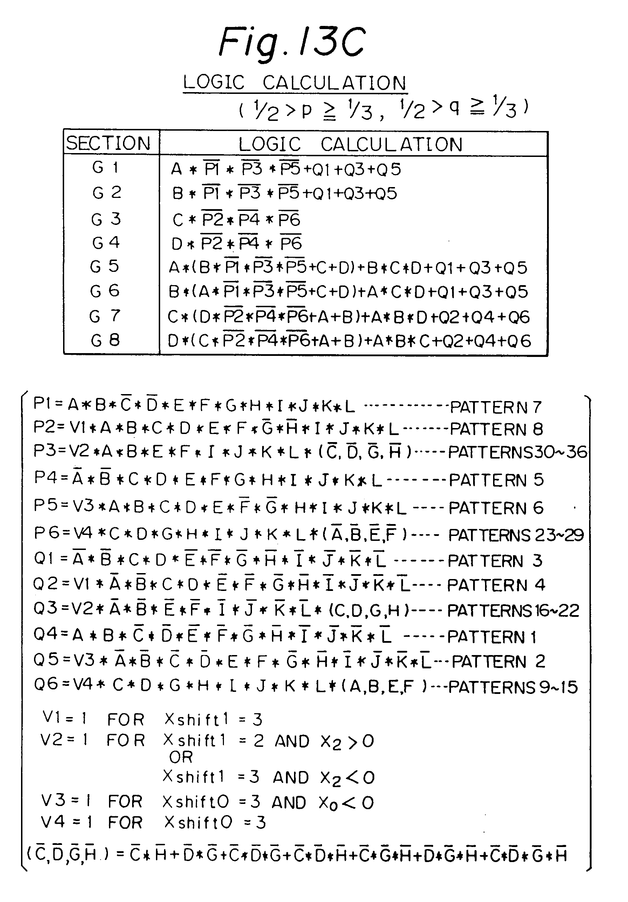

In the logic calculation circuit 4, the logic calculation is carried out in accordance with the table shown in Fig. 13B or the table shown in Fig. 13C. The table of Fig. 13B is for a factor of $1 > p \geqq 1/2$ and $1 > q \geqq 1/2$, and the table of Fig. 13C is for a factor of $1/2 > p \geqq 1/3$ and $1/2 > q \geqq 1/3$.

In the case where $1 > p \geqq 1/2$, it is possible that the disappearance of "one line" (i.e. a line of unit width in the row or column direction) will occur, and in the case where $1/2 > p \geqq 1/3$, it is possible that the disappearance of one or two lines (i.e. a line of twice the unit width in the row or column direction) will occur.

The discrimination of regions in the region discrimination portion 32 of the control unit 3 is carried out in accordance with a division into sections based on the curve defined in Fig. 3 and shown in Fig. 2.

It is assumed that the pixels of the original picture are located as shown in Fig. 5 in which the monochrome data of original picture pixels S(02), S(12), S(22), and S(32) are all black, and the monochrome data of the other original picture pixels are all white. Black is represented as "1", and white is represented as "0", and it is assumed that the present converted picture pixel is R(11).

It is established that the converted picture pixel R(11) is surrounded by the four adjacent original picture pixels S(11), S(21), S(22), and S(12) and the converted picture pixel R(11) belongs to range (section) G5.

These four original picture pixels define a unit cell, and the information that R(11) is located in the second half of the area (unit cell), R(12) is located in the first half of the area (unit cell), and the number of pixels xshiftl is equal to one, is supplied from the control unit 3 to the logic calculation circuit 4.

In the logic calculation circuit 4, the monochrome data of the converted picture pixel R(11) is calculated in accordance with the table shown in Fig. 12A based on the information of the location of R(11), that is G5, and the information of the monochrome data of the original picture pixels.

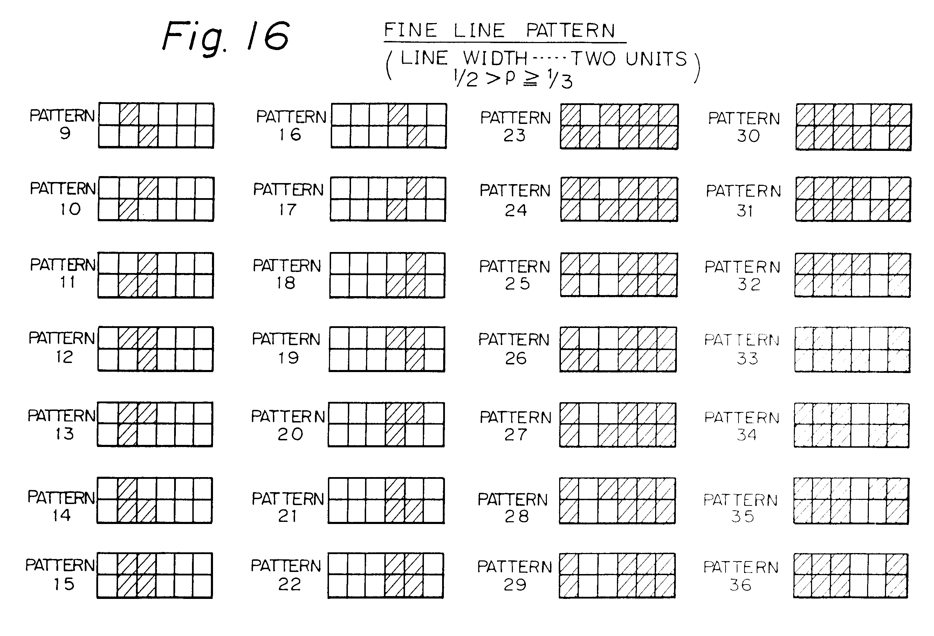

The fine line patterns for a line width of one unit and a reduction factor of $1/2 > p \geqq 1/3$ are shown in Fig. 15, and those for a line width of two units and the same reduction factor of $1/2 > p \geqq 1/3$ are shown in Fig. 16.

Although in the above, the description is given mainly for the X-axis direction, the process embodying the present invention is carried out in the same manner for the Y-axis direction.

Although in the above, the description is given mainly for reduction factors such that $1 > p \geqq 1/3$ and $1 > q \geqq 1/3$, the process according to the present invention can be carried out in a similar manner for reduction factors outside the above-mentioned range.

Heretofore, the descriptions are made for the case of the disappearance of a black fine line in a white background. However, it will be easily understood that the situation is similar for the case of the disappearance of a white fine line in a black background, and the above-described techniques can be applied similarly to the latter case.

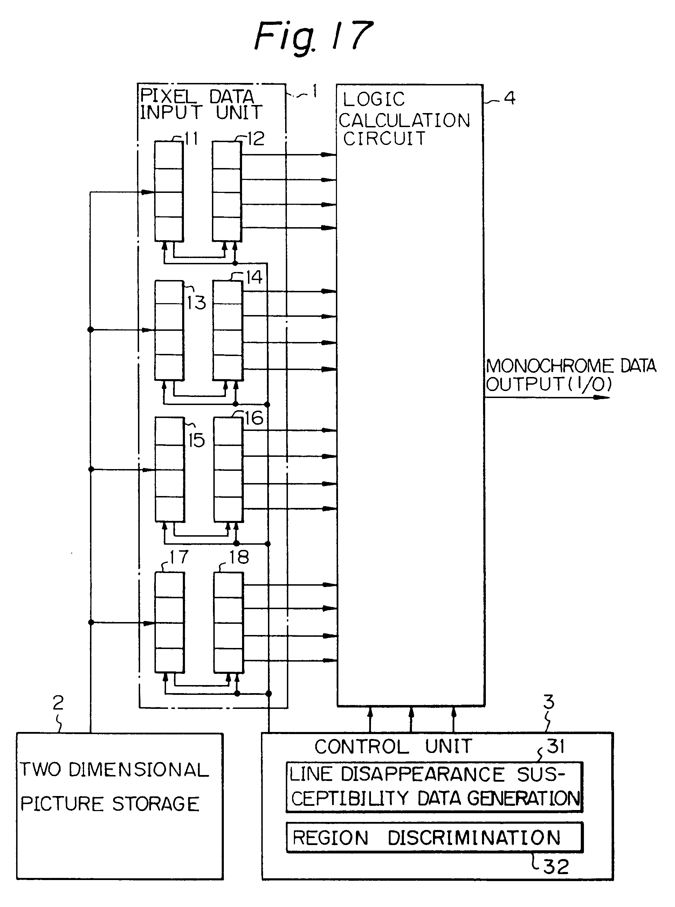

An apparatus for carrying out a process for reducing a picture according to a modified version of the above-described embodiment of the present invention is shown in Fig. 17. The apparatus of Fig. 17 is of the high speed projection method type and uses the division of 4 sections. In the apparatus of Fig. 17, the reduction rate of, for example, $1 > p \geqq 1/3$ is used.

The apparatus of Fig. 17 includes a pixel data input unit 1, a two dimensional picture storage unit 2, a control unit 3, and a monochrome data logic calculation circuit 4. The pixel data input unit 1 includes eight shift registers 11 to 18. The shift registers 11 and 12 hold data of the original picture pixels on the first line, the shift registers 13 and 14, the second line, the shift registers 15 and 16, the third line, and the shift registers 17 and 18, the fourth line.

The control unit 3 includes a line disappearance susceptibility data generation portion 31 and a region discrimination portion 32.

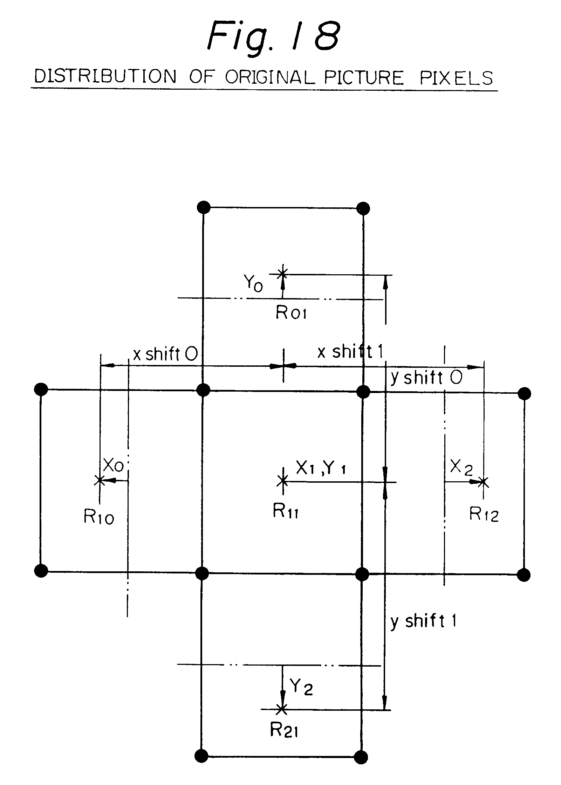

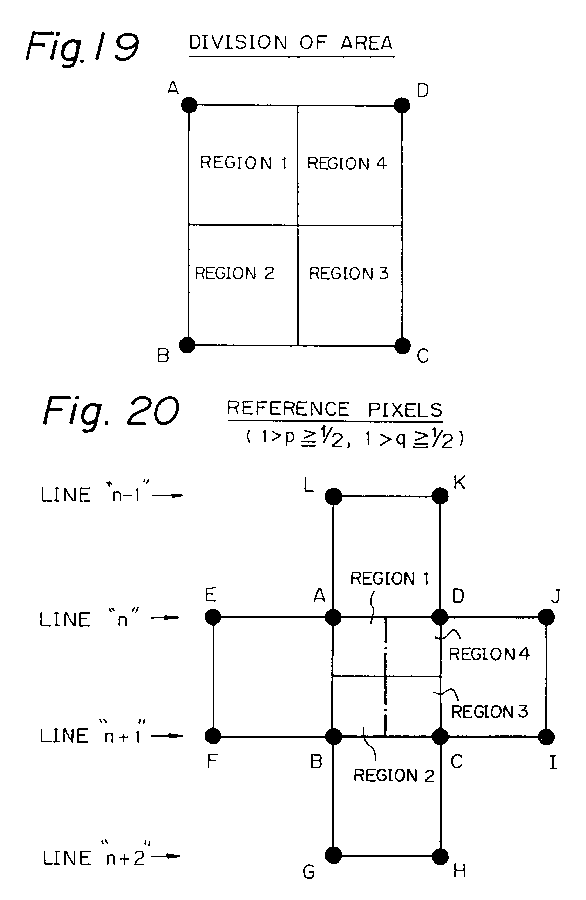

The distribution of original picture pixels in relation to the detection of pixels susceptible to disappearance is illustrated in Fig. 18. The determination of regions (division of area) and the group of reference pixels in relation to the detection of lines susceptible to disappearance are illustrated in Figs. 19 and 20 for the case where $1 > p \geqq 1/2$ and $1 > q \geqq 1/2$.

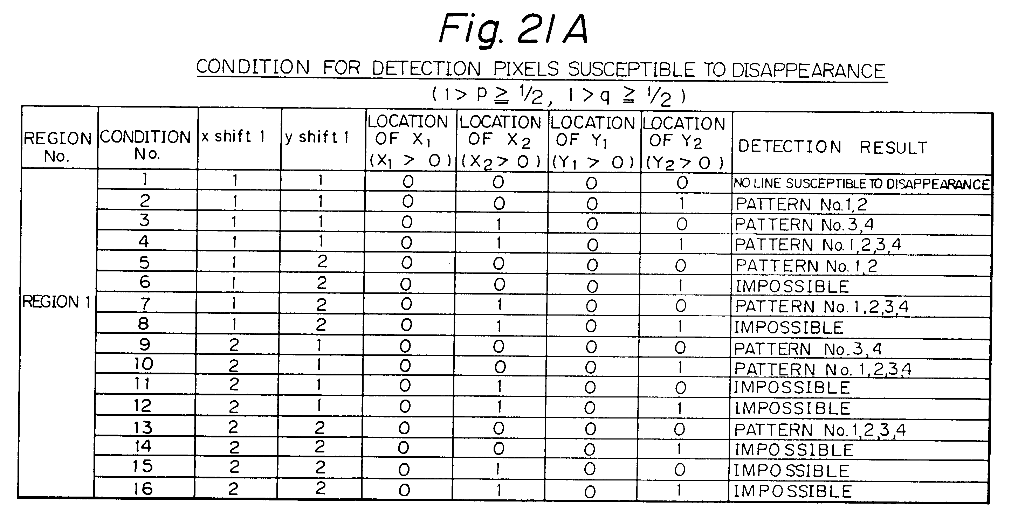

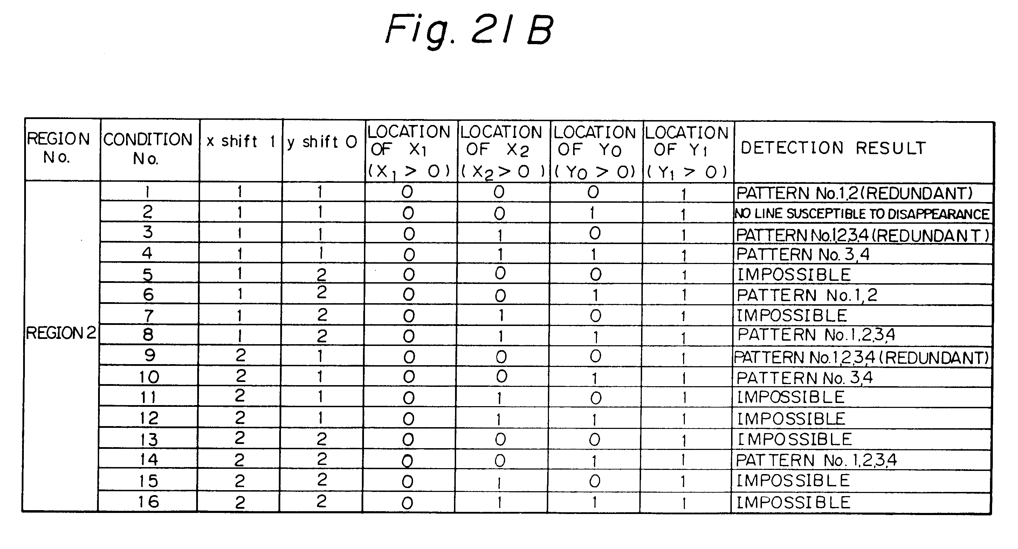

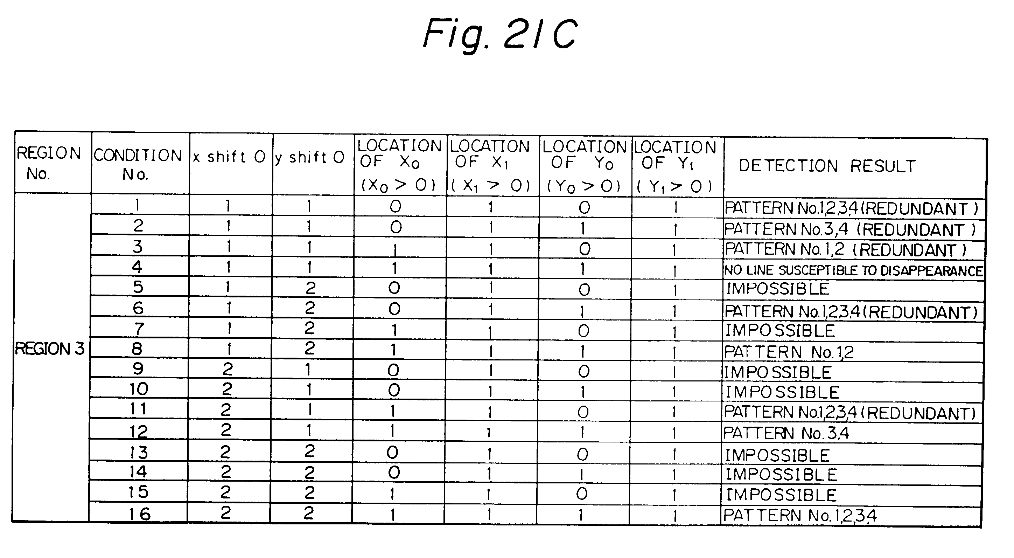

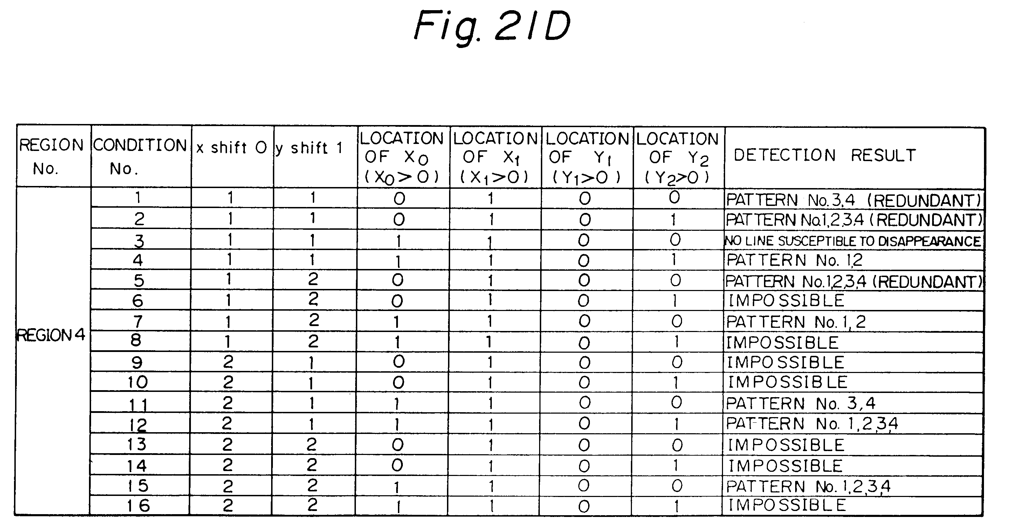

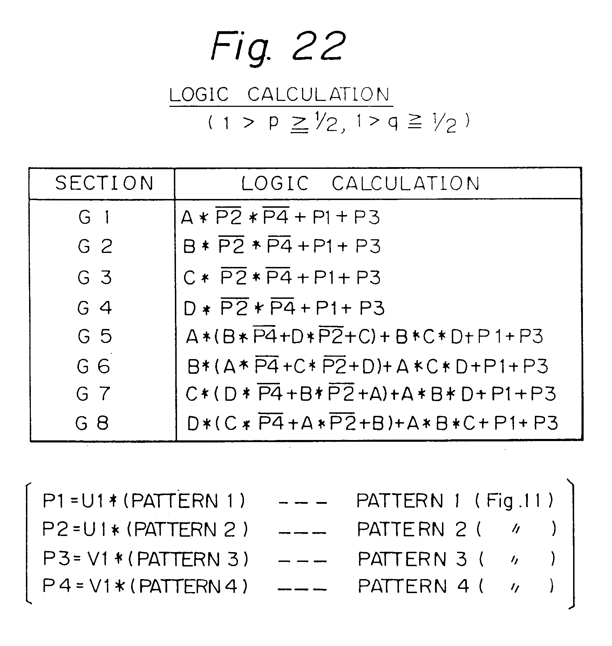

A table of the conditions for detecting pixels susceptible to disappearance in a picture reduction process in which $1 > p \geqq 1/2$ and $1 > q \geqq 1/2$ is shown in Fig. 21A to 21D. This table provides the basis of the operation of the apparatus of Fig. 17 in the case in which $1 > p \geqq 1/2$ and $1 > q \geqq 1/2$. A table of logic calculations for the apparatus of Fig. 17 in this case is shown in Fig. 22.

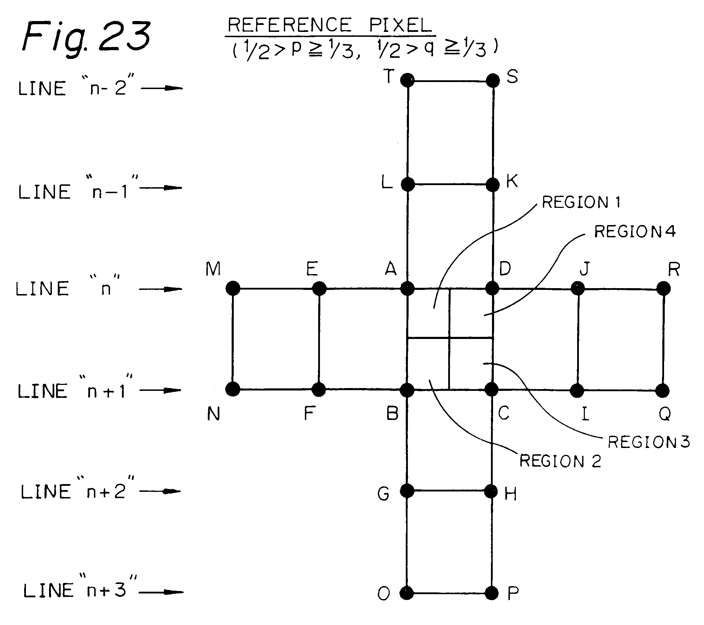

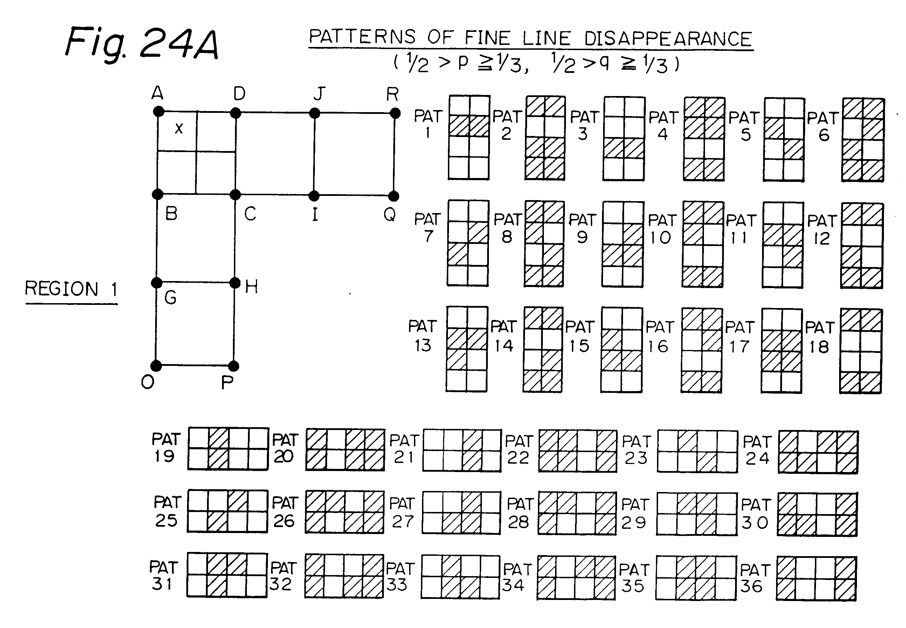

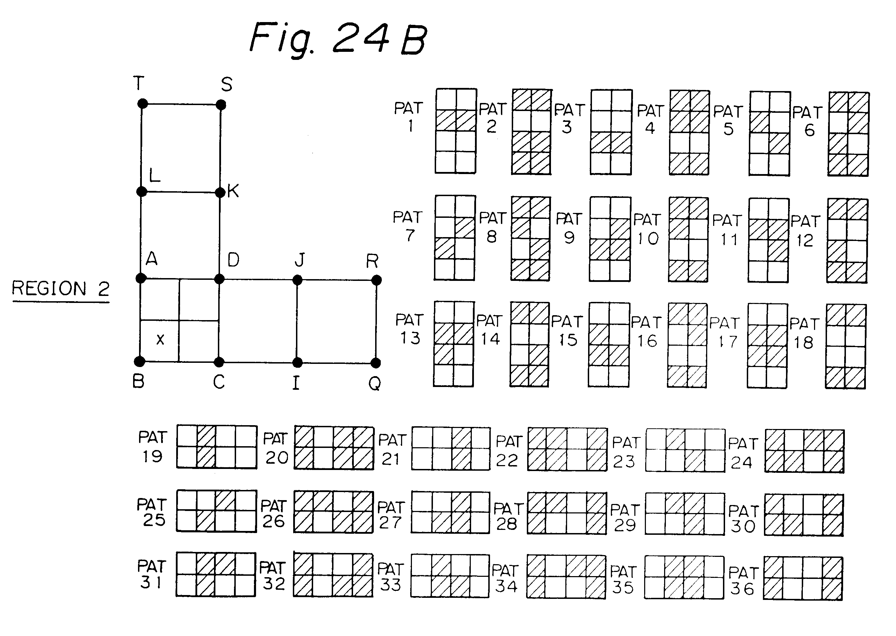

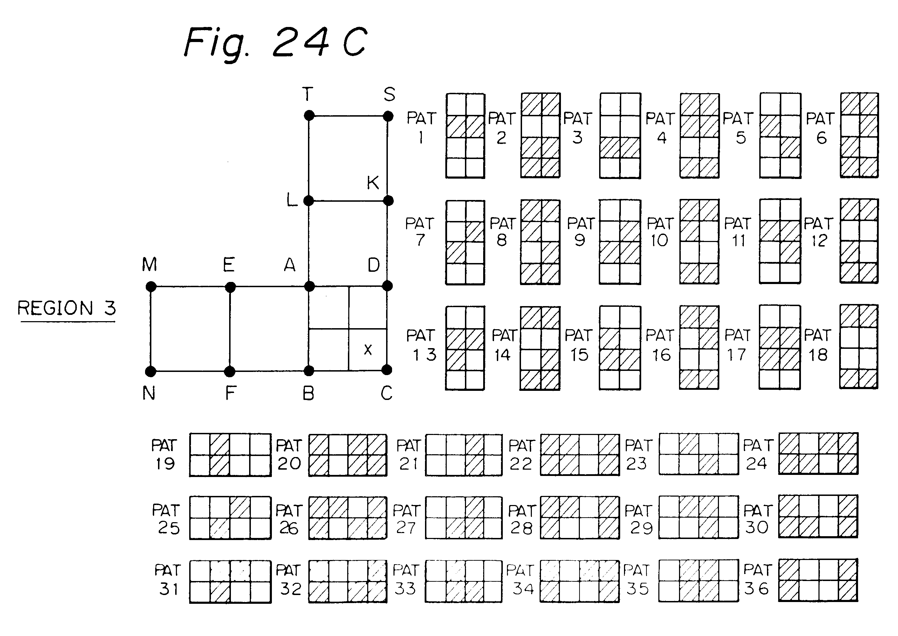

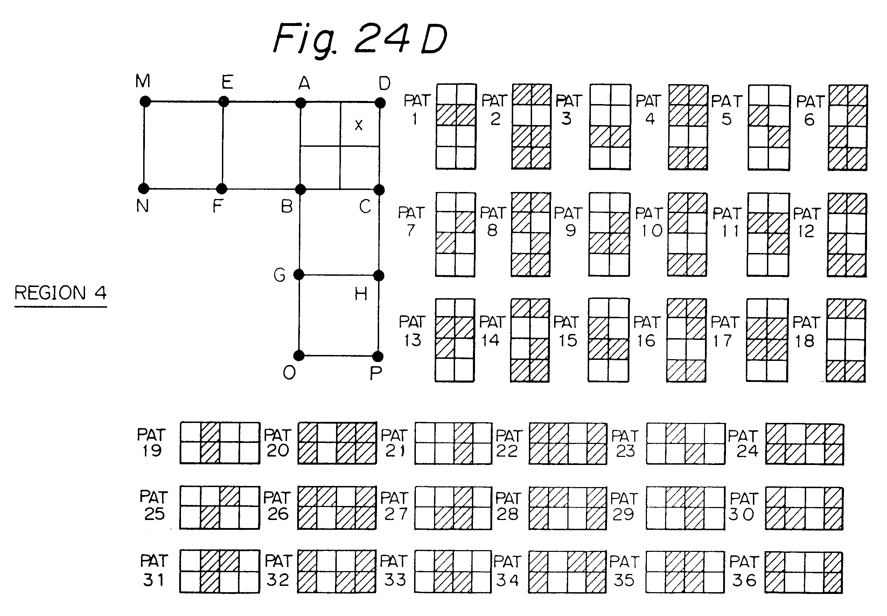

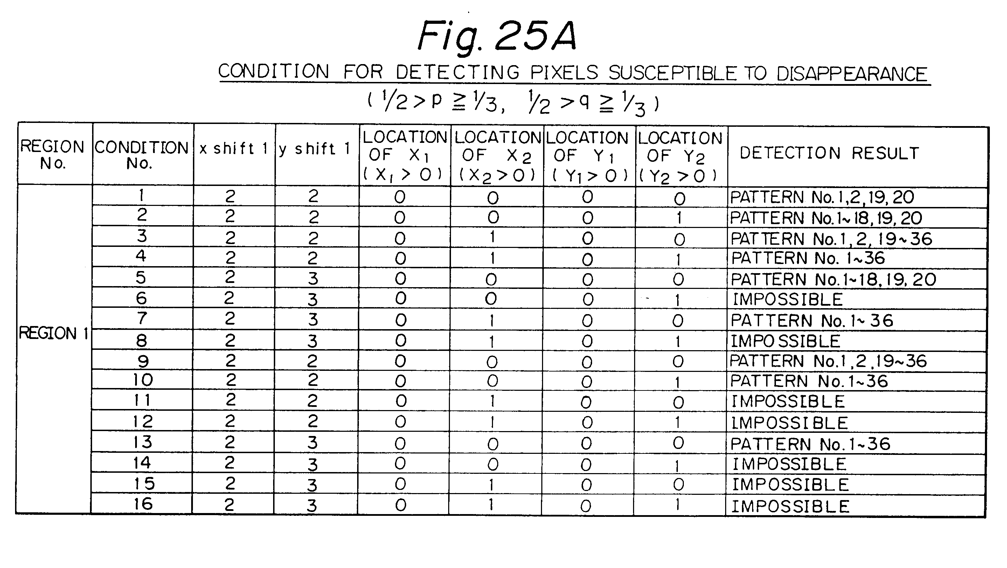

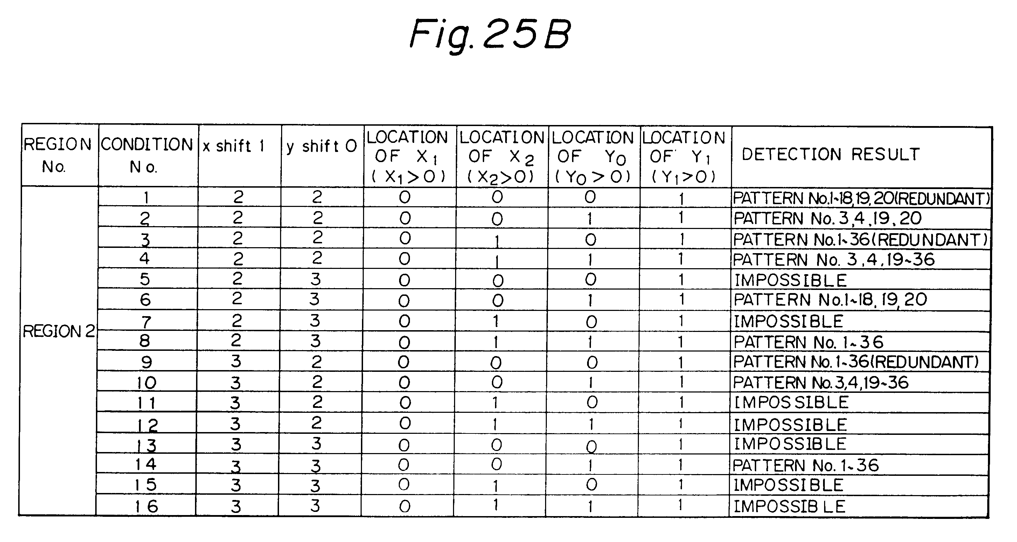

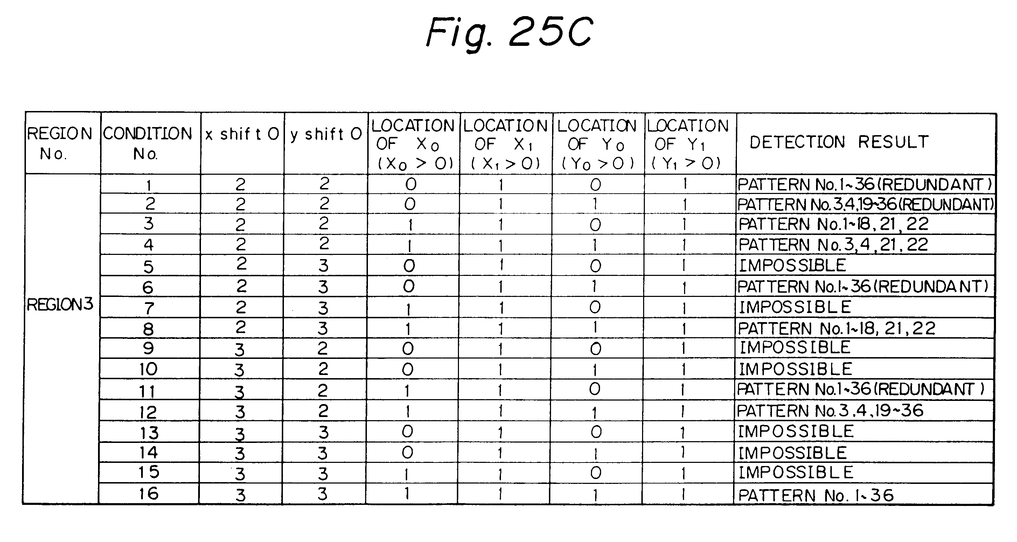

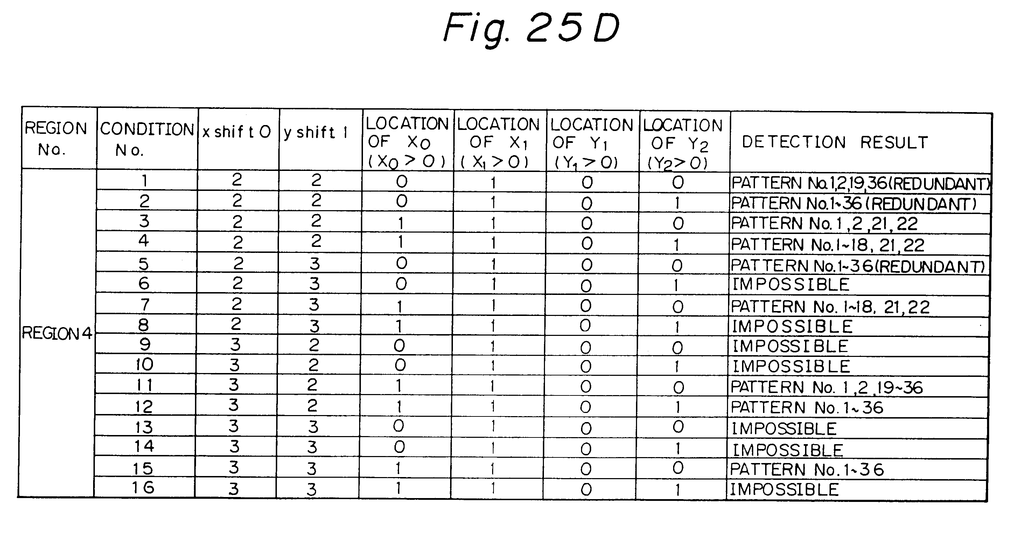

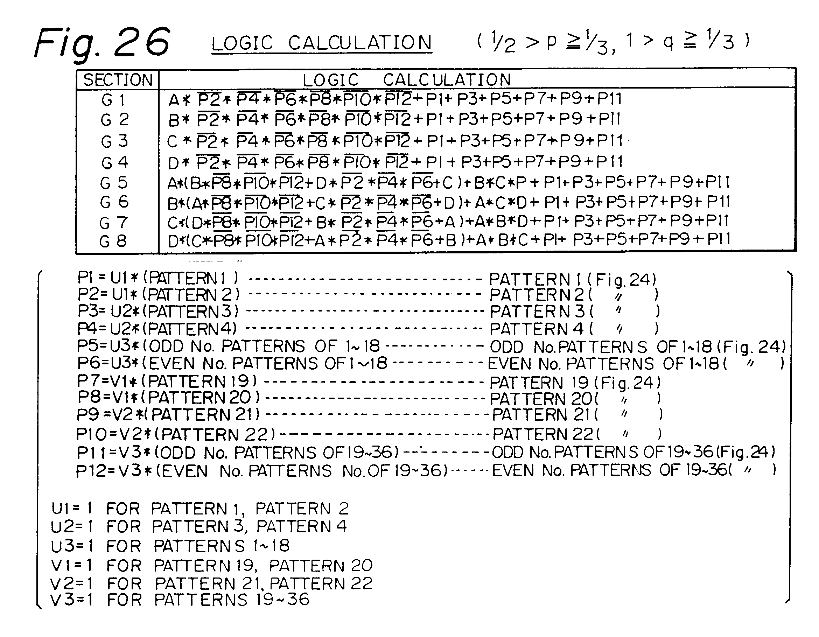

In the case in which $1 > p \geqq 1/3$ and $1 > q \geqq 1/3$ a group of reference pixels used in the apparatus of Fig. 17 is illustrated in Fig. 23. Basic patterns of fine line disappearance in relation with the apparatus of Fig. 17 are illustrated in Figs. 24A to 24D. A table of the conditions for detecting pixels susceptible to disappearance in the picture reduction process is shown in Figs. 25A to 25D and provides the basis of the operation of the apparatus of Fig. 17. A table of logic calculations used in the operation of the apparatus of Fig. 17 is shown in Fig. 26.

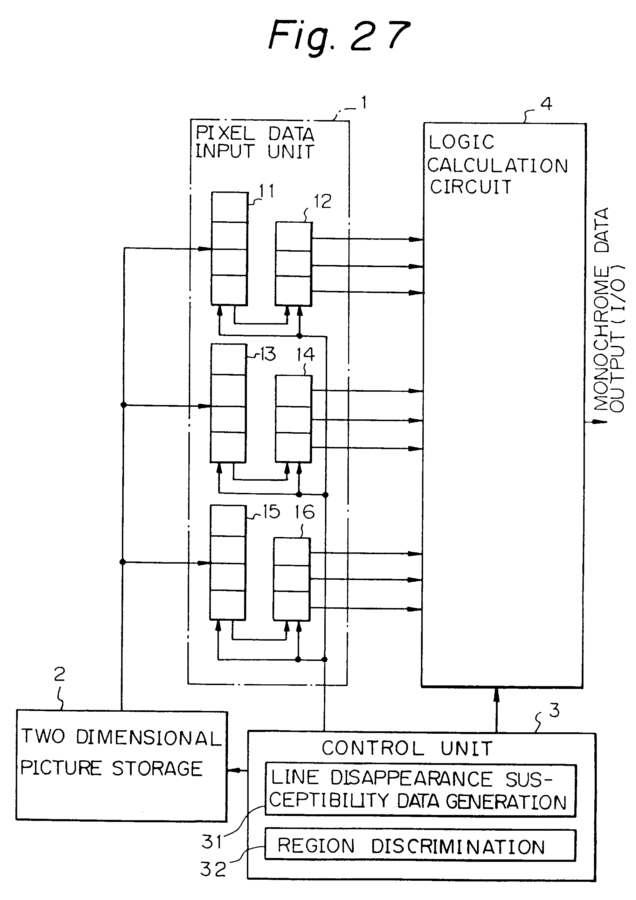

An apparatus for carrying out a process for reducing a picture according to another embodiment of the present invention is shown in Fig. 27. The apparatus of Fig. 27 is of the selective processing conversion method type and uses the division of 4 sections. In the apparatus of Fig. 27, a reduction factor of p, where for example $1 > p \geqq 1/3$, is used.

The apparatus of Fig. 27 includes a pixel data input unit 1, a two dimensional picture storage 2, a control unit 3, and a monochrome data logic calculation circuit 4. The pixel data input unit 1 includes shift registers 11 to 16, the shift registers 11 and 12 hold the data of the original picture pixels in the first line, the shift registers 13 and 14, the second line, and the shift registers 15 and 16, the third line. The control unit 3 includes a line maintenance data generation portion 31 and a region discrimination portion 32.

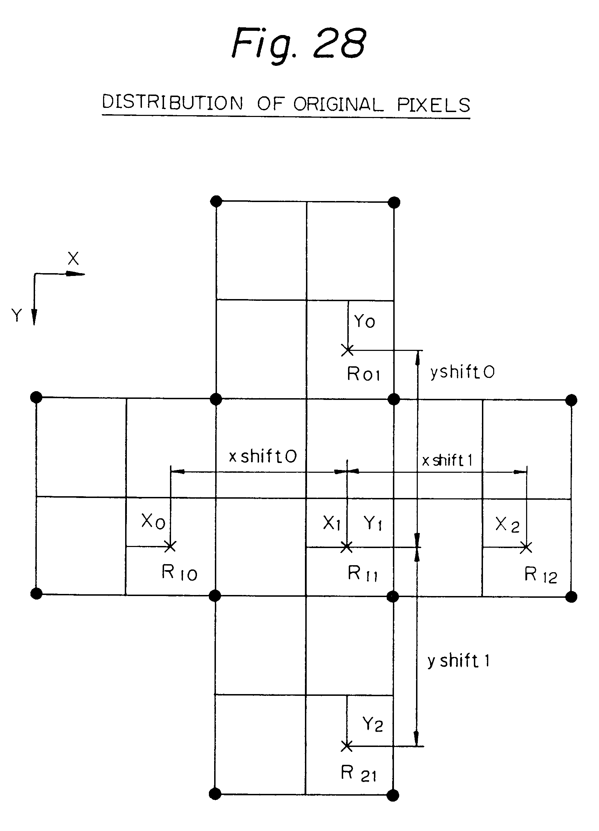

In the operation of the apparatus of Fig. 27, in order to produce data for maintaining a line susceptible to disappearance the following steps are performed (Fig. 28): affirmations, with regard to the Y-axis direction, of an inequality that the preceding pixel position Y-ordinate $(Y_0)$ of the converted picture is greater than a reference position Y-ordinate (y ref), an inequality that the present pixel position Y-ordinate $(Y_1)$ is greater than a reference position ordinate (y ref), and an inequality that the subsequent pixel position Y-ordinate $(Y_2)$ is greater than a reference position Y-ordinate (y ref); and determination of the number of original picture pixels between the present pixel position Y-ordinate $(Y_1)$ and the preceding pixel position Y-ordinate $(Y_0)$ or the subsequent pixel position Y-ordinate $(Y_2)$.

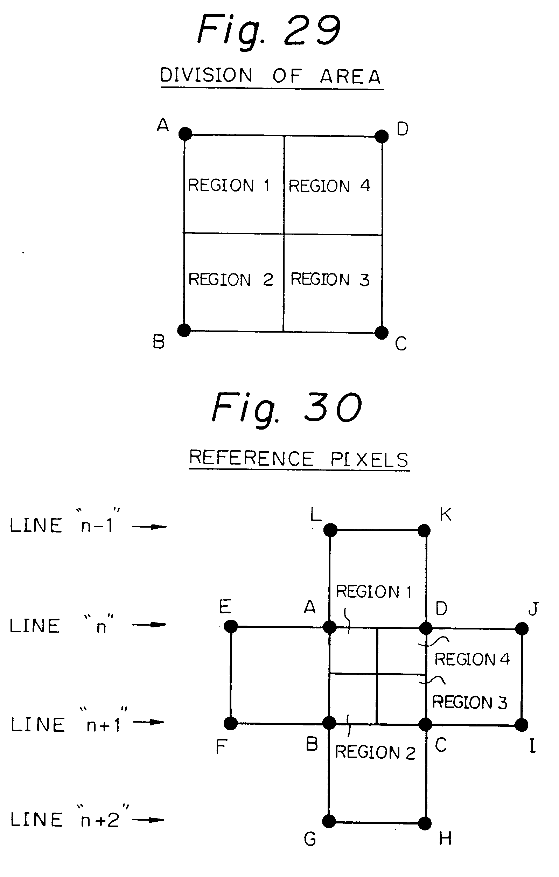

In the operation of the apparatus of Fig. 27, in the region discrimination step (Fig. 29), the region of the unit cell which contains the calculation location $(X_1, Y_1)$ of the present converted picture pixel $(R_{11})$ is determined by carrying out an affirmation, with regard to the X-axis direction, of an inequality that the present pixel position X-ordinate $(X_1)$ of the converted picture is greater than a reference position X-ordinate (x ref), and an affirmation, with regard to the Y-axis direction, of an inequality that the present pixel position Y-ordinate $(Y_1)$ of the converted picture is greater than a reference position Y-ordinate (y ref).

As shown in Fig. 28 for example, the reference position X- and Y-ordinates (x ref, y ref) for the various converted picture pixels may be regarded as being defined by respective reference lines extending in the Y- and X-axis directions respectively.

In the operation of the apparatus of Fig. 27, in the monochrome data calculation step, a logic calculation to preserve a fine line, based on line maintenance data, is added to a logic calculation step for combination with the most adjacent pixel of the original picture or the pixels close to the most adjacent pixel of original picture.

In the operation of the apparatus of Fig. 27, assuming that the overall reduction factor in the X-axis direction is P, the overall reduction factor in the Y-axis direction is Q, the number n of lines is given as $n = 2^m$ (m = 0, 1, 2, ...), and $1 > p \geqq 1/n$ and $1 > q \geqq l/n$, reduction processes with a reduction rate of $p = 1/2$ and $q = 1/2$ are carried out "m-l" times and one reduction process with reduction rates of $p=2^{m-1}*P$ and $q=2^{m-1}*Q$ are carried out.

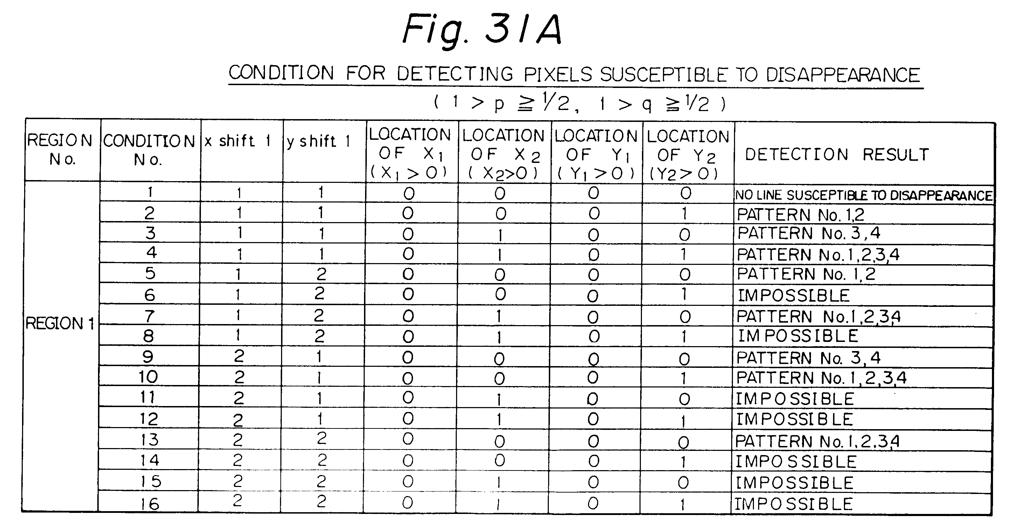

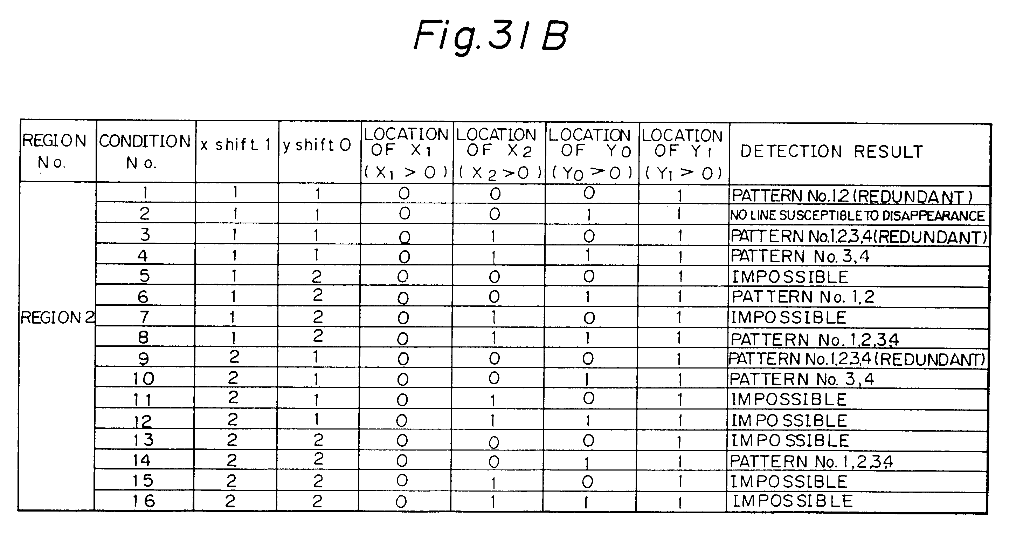

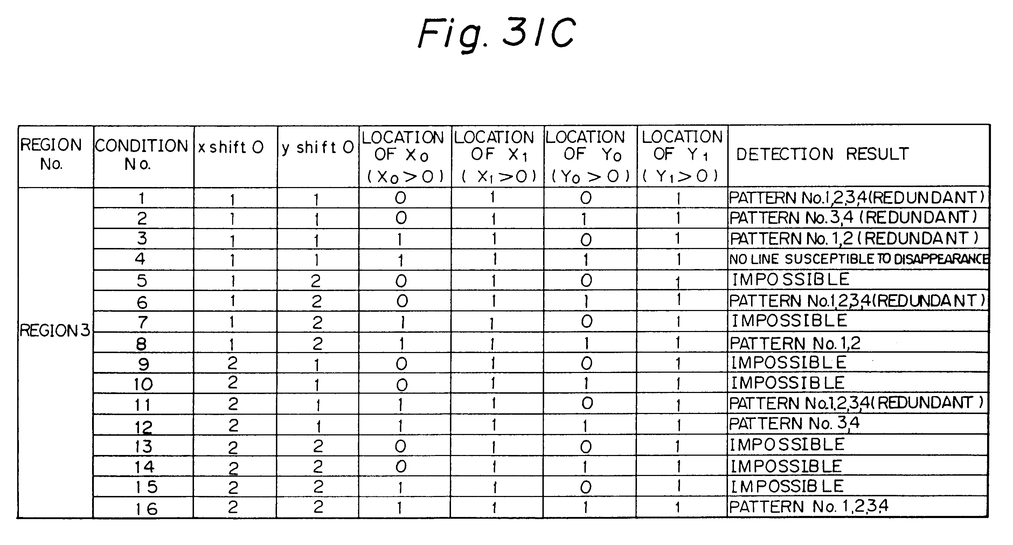

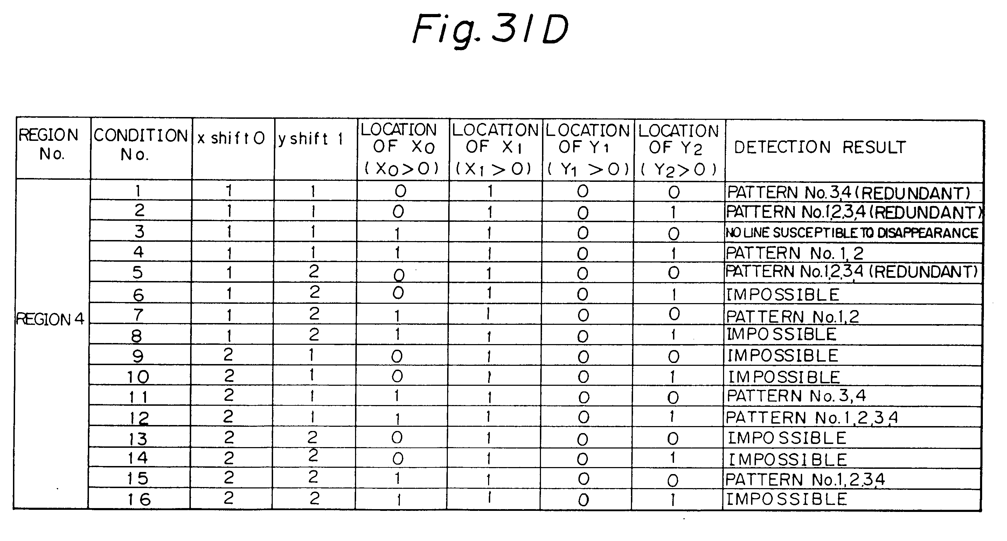

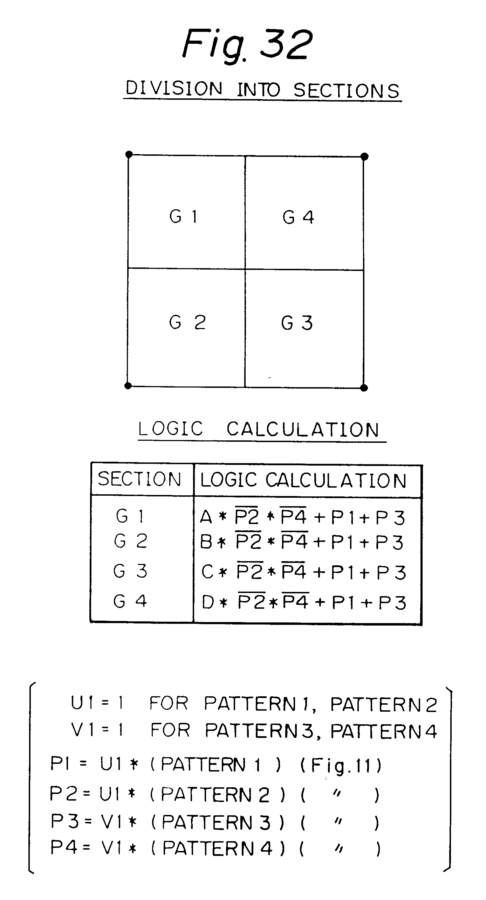

The distribution of original picture pixels with respect to reduced picture pixels used in the apparatus of Fig. 27 is illustrated in Fig. 28. A method of division into regions used in the apparatus of Fig. 27 is illustrated in Fig. 29. An assumption of reference pixels used in the apparatus of Fig. 27 is illustrated in Fig. 30. A table of the condition for detecting disappearance of pixels to be converted as the basis of the operation of the apparatus is shown in Figs. 31A to 31D, and a table of the logic calculations used in the operation of the apparatus of Fig. 27 is shown in Fig. 32.

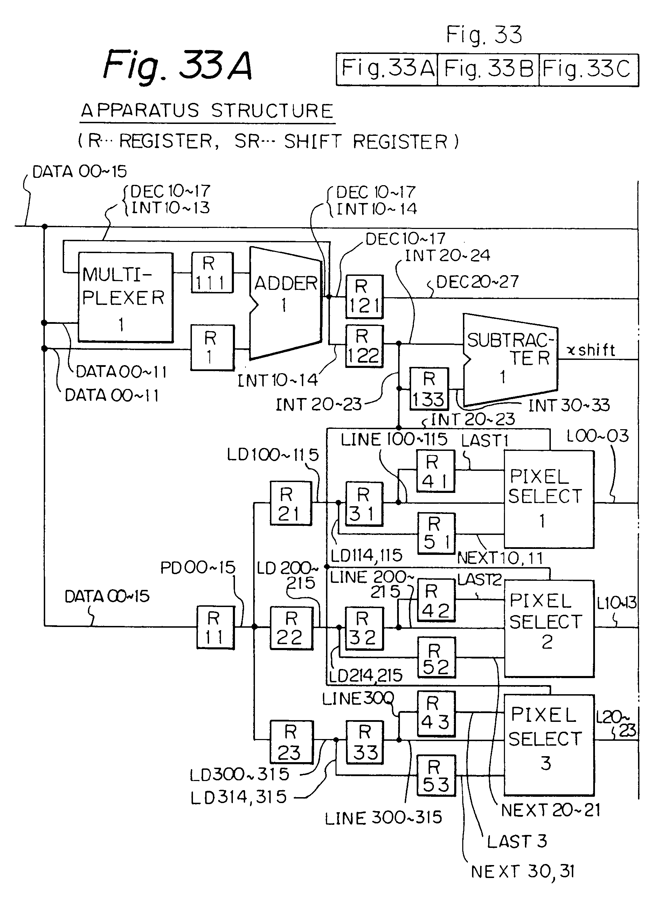

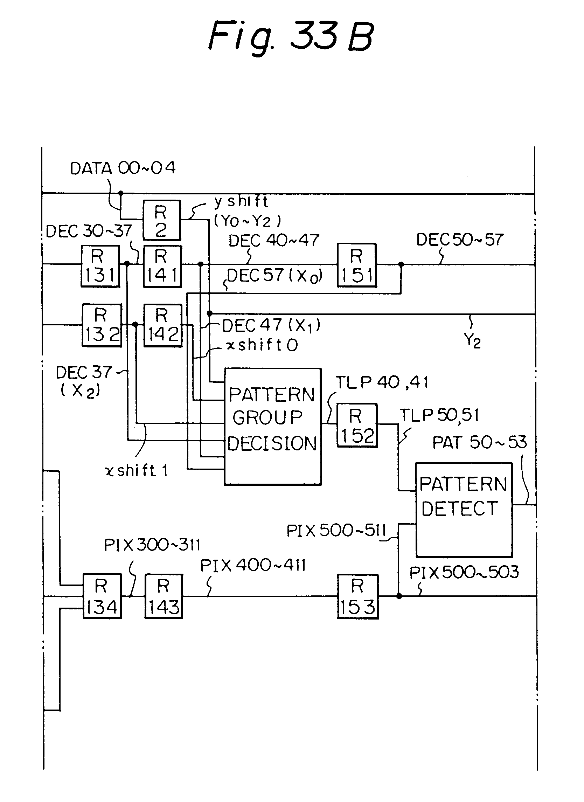

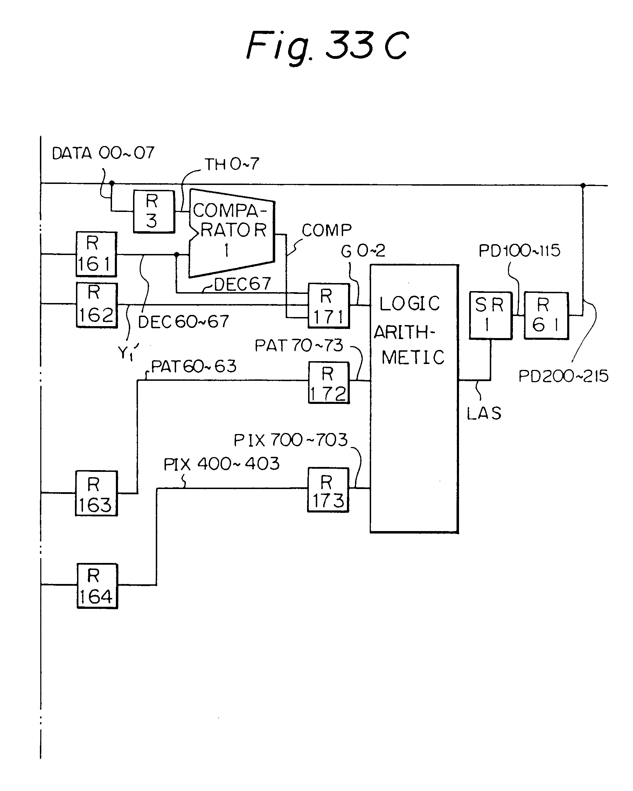

An example of the structures of an apparatus for carrying out a process for reducing a picture according to an embodiment of the present invention is shown in Figs. 33A, 33B and 33C.

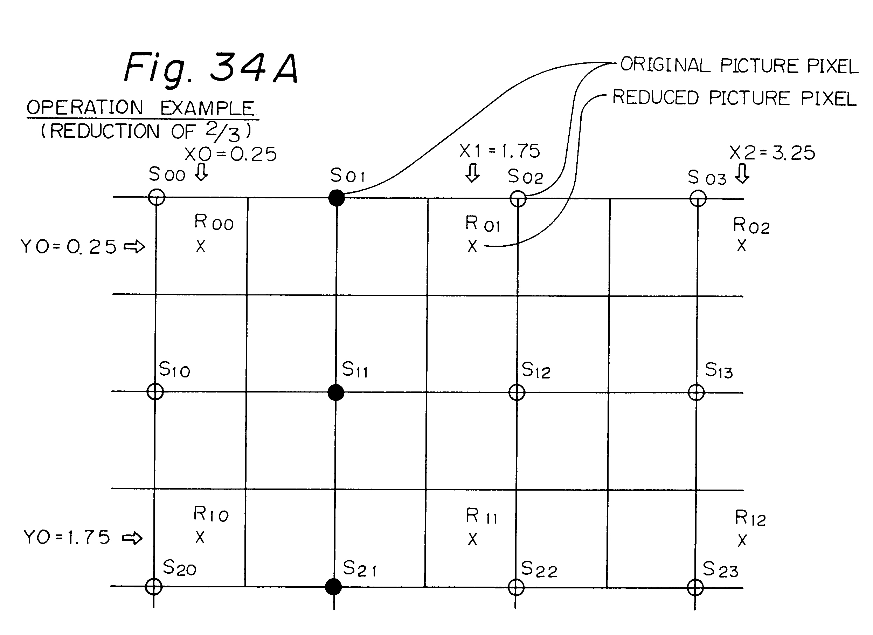

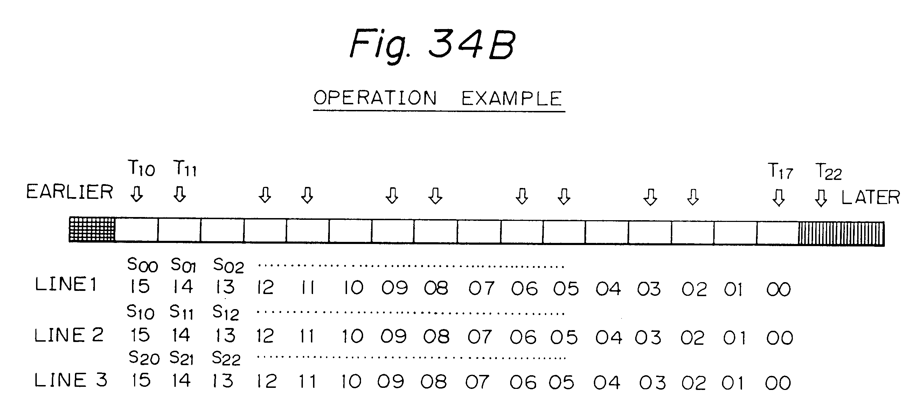

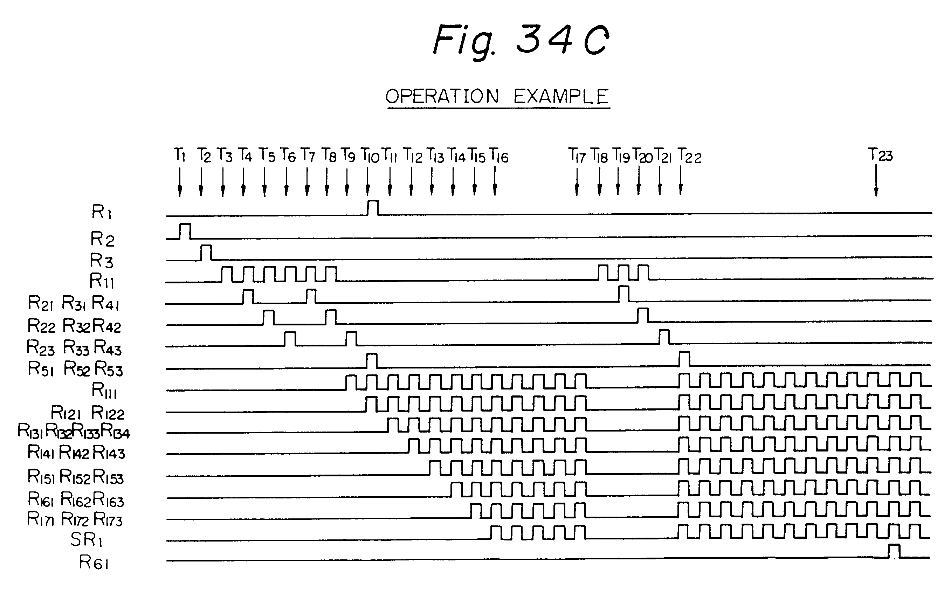

An example of the operation of an apparatus for carrying out a process for reducing a picture according to an embodiment of the present invention is shown in Figs. 34A, 34B, and 34C.

In Fig. 33, the multiplexer-1, the adder-1, and the register R111 and R1 constitute an Xi coordinate calculation portion, the pixel selection circuits-1, -2, and -3, the registers R11, R21 to R23, R31 to R33, R41 to 43, R51 to 53, and R134 constitute an original picture pixel input portion, the subtracter-1, and the register R122, R132, R133, and R142 constitute a disappearance susceptibility data generation portion, the pattern group decision circuit, and the registers R131, R132, R141, R142, and R151 constitute a pattern group decision portion, the pattern detection circuit and the registers R152 and R153 constitute a pattern detection portion, the comparator-1 and the registers R3, R161, and R171 constitute a region division decision portion, and the logic arithmetic circuit and the registers R171, R172, and R61, and the shift register SR1 constitute a logic arithmetic portion.

In Figs. 33A, B, and C, the registers R1 to R3 are applied to an operation in units of one line, the registers R11, R21 to R23, R31 to R33, R41 to R43, RS1 to R53, and R61 are applied to an operation in units of one word, i.e., 16 pixels, and the registers R111, R121, R122, R131 to R134, R141 to R143, R151 to R153, R161 to R164, and R171 to R173 are applied to an operation in units of one pixel.

In Figs. 33A, B, and C, in the pixel selection circuits-1, -2, and -3, a selection of 4 reference pixels is carried out for detecting a line susceptible to disappearance from among 19 pixels, i.e., 16 pixels plus 3 adjacent pixels per 3 lines in question. In the pattern group decision circuit, a decision concerning fine line pattern disappearance is carried out by using the table of conditions of detection of disappearance. In the pattern detection circuit, a decision of whether or not a fine line pattern susceptible to disappearance appears in the reference pixel group is made. In the logic arithmetic circuit, the monochrome data of the converted picture pixel is decided from the decision of a region, the detection of a fine line pattern, and the data of the reference pixel.

An example of operation of the apparatus according to an embodiment of the present invention will be described in the TABLE below with reference to Fig. 34A illustrating a 2/3 reduction, Fig. 34B illustrating standard pixel for the reference pixel group in correspondence with the timings, and Fig. 34C illustrating the timings.

## TABLE
### (PART 1)

| TIMING | OPERATIONS |
|---|---|
| $T_1$ | Store following data into R2:<br>yshift0 = 1, yshift1 = 0, $Y_0$location = 1,<br>$Y_1$location = 0, $Y_2$location = 1. |
| $T_2$ | Store following data in R3:<br>coordinate of intersecting point between $Y = Y_1 = 0.25$<br>and division equation. |
| $T_3$ | Store following data into R11:<br>16 bit/word picture data including reference pixels<br>$S_{00}$ , $S_{01}$ , $S_{02}$ , $\cdots$ |
| $T_4$ | Store following data into R21:<br>16 bit/word picture data including reference pixels<br>$S_{00}$ , $S_{01}$ , $S_{02}$ , $\cdots$ of R11.<br>Store following data into R11:<br>16 bit/word picture data including reference pixels<br>$S_{10}$ , $S_{11}$ , $S_{12}$ $\cdots$ |
| $T_5$ | Store following data into R22:<br>16 bit/word picture data including reference pixels<br>$S_{10}$ , $S_{11}$ , $S_{12}$ , $\cdots$ of R11.<br>Store following data into R11:<br>16 bit/word picture data including reference pixels<br>$S_{20}$ , $S_{21}$ , $S_{22}$ $\cdots$ |

TABLE
(PART 2)

| TIMING | OPERATIONS |
|--------|-----------|
| $T_6$ | Store following data into R23: 16 bit/word picture data including reference pixels $S_{20}$ , $S_{21}$ , $S_{22}$ , ... of R11. Store following data into R11: picture data subsequent to 16 bit/word picture data including reference pixels $S_{00}$ , $S_{01}$ , $S_{02}$. |
| $T_7$ | Store following data into R31: 16 bit/word picture data including reference pixels $S_{00}$ , $S_{01}$ , $S_{02}$ , ... of R21. Store following data into R21: picture data subsequent to 16 bit/word picture data including reference pixels $S_{00}$ , $S_{01}$ , $S_{02}$ , ... of R11. Store following data into R11: picture data subsequent to 16 bit/word picture data including reference pixels $S_{10}$ , $S_{11}$ , $S_{12}$ ... |
| $T_8$ | Store following data into R32: 16 bit/word picture data including reference pixels $S_{10}$ , $S_{11}$ , $S_{12}$ , ... of R22. Store following data into R22: picture data subsequent to 16 bit/word picture data including reference pixels $S_{10}$ , $S_{11}$ , $S_{12}$ , ... of R11. Store following data into R11: picture data subsequent to 16 bit/word picture data including reference pixels $S_{20}$ , $S_{21}$ , $S_{22}$ , ... |

TABLE
(PART 3)

| TIMING | OPERATIONS |
|---|---|
| $T_9$ | Store following data into R33: 16 bit/word picture data including reference pixels $S_{20}$ , $S_{21}$ , $S_{22}$ , ... of R23. Store following data into R23: 16 bit/word picture data including reference pixels $S_{20}$ , $S_{21}$ , $S_{22}$ , ... of R11. Store following data into R111: the initial X-coordinate $X_0$ = 0.25 Calculate the coordinate $X_0$ by the adder-1 during period from $T_9$ to $T_{10}$. |
| $T_{10}$ | Store distance 1/P between converted pixels into R1 where 1/P = 3/2. Store beginning 2 bits: LD114, 115 of 16 bit/word data processed subsequent to R21 into R51. Store beginning 2 bits: LD214, 215 of 16 bit/word data processed subsequent to R22 into R52. Store beginning 2 bits: LD314, 315 of 16 bit/word data processed subsequent to R23 into R53. Store initial X-coordinate: $X_0$ = 0.25 as output of adder-1 into R111. Calculate coordinate of $X_1$: $X_1$ = 0.25 + 1.5 = 1.75 by adder-1 during period from $T_{10}$ to $T_{11}$. Store integer portion INT10 to 14 of initial X-coordinate as output of adder-1 into R122, decimal portion DEC10 to 17 into R121. |

TABLE
(PART 4)

| TIMING | OPERATIONS |
|--------|------------|
| $T_{10}$ | Calculate line disappearance data x shift by subtracter-1 during period from $T_{10}$ to $T_{11}$.<br>Select 4 pixels from 19 bits consisting of 16 bit/word of each of R31, R41, and R51 and preceding 1 bit and subsequent 2 bits by pixel selection circuits-1, -2 and -3 according to output INT20 to 23 of R122 during period from $T_{10}$ to $T_{11}$. |
| $T_{11}$ | Store X-coordinate of $X_1$: $X_1 = 1.75$ as output of adder-1 into R111.<br>Calculate X-coordinate of $X_2$: $X_2 = 1.75 + 1.5 = 3.25$ by adder-1 during period from $T_{11}$ to $T_{12}$. (Hereinafter, coordinate calculations by adder-1 are abbreviated.)<br>Store integer portion INT10 to 14 of X-coordinate of $X_1$ as output of adder-1 into R122, decimal portion DEC 10 to 17 into R121.<br>(Explanations of similar storing operations at later timings are abbreviated.)<br>Store x shift = 1 as output of subtracter-1 into R132.<br>Store INT20 to 23 as output of R122, into R133.<br>Calculate disappearance data x shift by subtracter-1 during period $T_{11}$ to $T_{12}$.<br>(Hereinafter, such disappearance data calculations are abbreviated.)<br>Store data corresponding to 12 reference pixels selected by pixel selection circuits: Pixel Selection-1, -2, and -3 into R134.<br>(Explanation of similar storing operations at later timings are abbreviated.) |

TABLE
(PART 5)

| TIMING | OPERATIONS |
|---|---|
| $T_{12}$ | Store xshift0 = 1 as output of R132 into R142.<br>Store xshift1 = 0 as output of subtracter-1 into R132.<br>Produce signal TLP 40, 41 representing fine line pattern during period $T_{12}$ to $T_{13}$ from following 10 data:<br>yshift0 = 1, yshift1 = 0, $Y_0$ location = 1,<br>$Y_1$ location = 0, $Y_2$ location = 1 as Y-axis line disappearance data from R2<br><br>xshift0 = 1 as output of R142, xshift1 = 0 as output of R132, location of $X_0$ = 0 from DEC57 of R151, location of $X_1$ = 0 from DEC47 of R141, location of $X_2$ = 1 from DEC37 of R131.<br>(Explanation of similar operations at later timings are abbreviated.) |
| $T_{13}$ | Store output TLP40, 41 of pattern group decision circuit of R152.<br>Store 12 reference pixel data as outputs PIX400 to 411 of R143 to R153.<br>Detect existence of fine line operation in actual picture by pattern detection circuit during period T13 to T14 based on TIP50, 51 representing fine line pattern from R152 and PIX500 to 511 representing 12 reference pixel data from T153.<br>(Explanations of similar operations at later timings are abbreviated.) |

TABLE
(PART 6)

| TIMING | OPERATIONS |
|---|---|
| $T_{14}$ | Store output DEC 50 to 57 of R151 into R161. Store data of $Y_1$ location = 0 of R2 into R162. Compare output TH 0 to 7 of R3 and output DEC 60 to 67 of R161 by comparator-1 during period from T14 to T15 to determine left/right with respect to border of regions. (Explanations of similar operations at later timings are abbreviated.) |
| $T_{15}$ | Store output COMP of comparator-1, output DEX 67 of R161, and output $Y_1'$ of R162 into R171. Store output TAP 60 to 63 of R163 into R172. Store output PIX 600 to 603 for reference pixels A, B, C, D, of R164 into R173. Carry out calculation in arithmetic circuit during period from T15 to T16 based on output G0 to 2 of R171 as region signal, output PAT 70 to 73 of R172 as disappearance indication signal, and output PIX 701 to 703 of R173 as reference pixel indication signal for reference pixels A, B, C, D, according to logic calculation formula, and from result of this calculation deliver output for determining monochrome data of converted picture pixel. (Explanations of similar operations at later timings are abbreviated.) |
| $T_{16}$ | Store output LAS of logic arithmetic circuit into shift register SR1. |

## TABLE
### (PART 7)

| TIMING | OPERATIONS |
| --- | --- |
| $T_{17}$ | Prepare for receiving next 16 bit/word picture data at later timing, because value of adder-1 becomes greater than 16. Operations of R111 and so on are stopped until receipt of data. |
| $T_{18}$ to $T_{21}$ | Store next 16 bit/word picture data into $R_{21}$, $R_{22}$, and $R_{23}$ through R11. |
| $T_{22}$ | Release stopping of operations of elements for re-starting processes for pixel units, because next 16 bit/ word picture data has been stored into R21, R22, and R23. |
| $T_{23}$ | Store output PD 00 to 15 of SR1 into R61 and transfer data through common bus, because 16 converted picture pixels have been stored into SR1.<br>(After that, processes with unit of pixel, word, and line are carried out in similar manner.) |

## Claims

1. A picture reduction process for employing respective monochrome values of a first set of pixels (S) representing an original picture to be reduced, which pixels (S) relate respectively to the points of a first two-dimensional array of points on the original picture, to derive respective monochrome values of a second set of pixels (R) representing a converted version of the original picture, which pixels (R) are smaller in number than the pixels (S) of the first set and which relate respectively to the points of a second two-dimensional array of points on the converted version of the original picture;

   which process comprises the following steps for each pixel (R) in turn of the said second set, when the said second array is considered as superimposed on the first array in a predetermined relationship therewith such that rows and columns of the second array are parallel respectively to rows and columns of the first array:

   (a) calculating the location $(X_1, Y_1)$ on the first array of the second-array point to which the second-set pixel concerned $(R_{11})$ relates; and

   (b) employing predetermined logical calculations (for example Fig. 13B) to derive the monochrome value of the second-set pixel concerned $(R_{11})$ from the monochrome value of the first-set pixel whose point is located closest to the said calculated location or from the respective monochrome values of first-set pixels (A to D) whose respective points are located in the vicinity of the said calculated location $(X_1, Y_1)$;

   characterised by the steps of:

   (c) determining which one of a predetermined plurality of different regions (REGION 1 to 4) of a unit cell of the first array that contains the said calculated location $(X_1, Y_1)$, contains that calculated location; and

   (d) determining whether the respective monochrome values of a group (A to K) of first-set pixels whose points are in the vicinity of the calculated location $(X_1, Y_1)$, the members of which group are selected in dependence upon the determined region, match any one of a plurality of predetermined patterns (PATTERN 1,2,3,4) of monochrome values of first-set pixels, some of the patterns of the said plurality representing respective line portions which could be portions of the original picture that extend in the column direction (Y) of the first array and that are each of a width less than the distance (1/p) from one second-array point to the next in the row direction (X), and the other patterns of the said plurality representing respective line portions which could be portions of the original picture that extend in the row direction (X) of the first array and that are each of a width less than the distance (1/q) from one second-array point to the next in the column direction (Y), and producing line maintenance data (P1,P2,P3,P4) if such a match is found;

and further characterised in that in step (b) the said logical calculations of the monochrome values of the second-set pixels (R) are dependent upon any such line maintenance data produced, and serve to reproduce, in the said converted version of the original picture, any such line portion in the original picture.

2. A picture reduction process as claimed in claim 1, wherein the said line maintenance data is derived in dependence upon logical data indicative of whether or not:

(i) the row-direction ordinate $(X_0)$ of the calculated location $(X_0,Y_0)$ on the first array of the second array point to which the previous second-set pixel $(R_{10})$ in the row direction (X) relates is greater than the row-direction ordinate (x ref) of a predetermined reference line for that pixel $(R_{10})$, which line extends in the said column direction (Y);

(ii) the row-direction ordinate $(X_1)$ of the calculated location $(X_1,Y_1)$ on the first array of the second-array point to which the present second array pixel $(R_{11})$ relates is greater than the row-direction ordinate (x ref) of a predetermined reference line for that pixel $(R_{11})$, which line extends in the said column direction (Y); and

(iii) the row-direction ordinate $(X_2)$ of the calculated location on the first array of the second-array point to which the next second-set pixel $(R_{12})$ in the row direction (X) relates is greater than the row-direction ordinate (x ref) of a predetermined reference line for that pixel $(R_{12})$, which line extends in the said column direction (Y);

and also in dependence upon the number (xshift0, xshift1) of first-array points (S), measured in the row direction (X) of the superposed arrays, between the respective second-array points relating to the said previous second-set pixel $(R_{10})$ in the row direction and the said present second-set pixel $(R_{11})$ or between the said respective second-array points relating to the present second-set pixel $(R_{11})$ and the said next second-set pixel $(R_{12})$ in the row direction.

3. A picture reduction process as claimed in claim 2, wherein the said line maintenance data (P1,P2,P3,P4) is also derived in dependence upon logical data indicative of whether or not:

(i) the column-direction ordinate $(Y_0)$ of the calculated location $(X_0,Y_0)$ on the first array of the second-array point to which the previous second-set pixel $(R_{01})$ in the column direction (Y) relates is greater than the column-direction ordinate (y ref) of a predetermined reference line for that pixel $(R_{01})$, which line extends in the said row direction (X);

(ii) the column-direction ordinate $(Y_1)$ of the calculated location $(X_1,Y_1)$ on the first array of the second-array point to which the present second-set pixel $(R_{11})$ relates is greater than the column-direction ordinate (y ref) of a predetermined reference line for that pixel $(R_{11})$, which line extends in the said row direction (X); and

(iii) the column-direction ordinate $(Y_2)$ of the calculated location $(X_2,Y_2)$ on the first array of the second-array point to which the next second-set pixel $(R_{12})$ in the column direction (Y) relates is greater than the column-direction ordinate (y ref) of a predetermined reference line for that pixel $(R_{12})$, which line extends in the said row direction (X);

and also in dependence upon the number (yshift0, yshift1) of first-array points (S), measured in the column direction (Y) of the superposed arrays, between the respective second-array points relating to the said previous second-set pixel $(R_{01})$ in the column direction and the said present second-set pixel $(R_{11})$ or between the respective second-array points relating to the said present second-set pixel $(R_{11})$ and the said next second-set pixel $(R_{21})$ in the column direction.

4. A picture reduction process as claimed in any preceding claim, wherein in step (c) the said region, of the said unit cell (A to D) of the first array which contains the said calculated location $(X_1,Y_1)$ of the present pixel $(R_{11})$ of the second set, is determined according to whether or not the row-direction ordinate $(X_1)$ of that calculated location is greater than the row-direction ordinate (x ref) of a predetermined reference line extending in the said column direction (Y) and whether or not the column-direction ordinate $(Y_1)$ of that calculated location is greater than the column-direction ordinate (y ref) of a predetermined reference line extending in the said row direction (X).

EP 0 333 496 B1

5. A picture reduction process as claimed in any preceding claim, wherein the said logical calculations (for example Figure 13B) are selected in dependence upon which one of a predetermined plurality of different sections (G1 to G8), of the said unit cell (A to D) of the first array, contains the calculated location $(X_1,Y_1)$ of the present second-set pixel $(R_{11})$.

6. An iterative picture reduction process for reducing an original picture having n lines, where $n=2^m$ and m is 0 or a positive integer, the required reduction factors in the row and column directions of the picture being P and Q respectively, where $1 > P \geqq 1/n$ and $1 > Q \geqq 1/n$, wherein a picture reduction process as claimed in any preceding claim is carried out m-1 times with a picture reduction rate in each of the row and column directions of 1/2 and a single picture reduction process as claimed in any preceding claim is carried out with a picture reduction rate in the row direction of $2^{m-1}*P$ and a picture reduction rate in the column direction of $2^{m-1}*Q$.

7. Picture reduction apparatus for employing respective monochrome values of a first set of pixels (S) representing an original picture to be reduced, which pixels (S) relate respectively to the points of a first two-dimensional array of points on the original picture, to derive respective monochrome values of a second set of pixels (R) representing a converted version of the original picture, which pixels (R) are smaller in number than the pixels (S) of the first set and which relate respectively to the points of a second two-dimensional array of points on the converted version of the original picture;

which apparatus comprises:

monochrome data receiving means (1) for receiving each pixel (R) in turn of the said second set, when the said second array is considered as superimposed on the first array in a predetermined relationship therewith such that rows and columns of the second array are parallel respectively to rows and columns of the first array;

means for calculating the location $(X_1,Y_1)$ on the first array of the second-array point to which the second-set pixel concerned $(R_{11})$ relates; and

monochrome data calculation means (4) connected to the said monochrome data receiving means for receiving therefrom such first-set pixel monochrome values and operable to employ predetermined logical calculations (for example Fig. 13B) to derive the monochrome value of the second-set pixel concerned $(R_{11})$ from the monochrome value of that first-set pixel whose point is located closest to the said calculated location or from the respective monochrome values of first-set pixels (A to D) whose respective points are located in the vicinity of the said calculated location $(X_1,Y_1)$;

characterised by control means (3) including:

a region discrimination portion (32) operable to determine which one of a predetermined plurality of different regions (REGION 1 to 4), of a unit cell (A to D) of the first array that contains the said calculated location $(X_1,Y_1)$, contains that calculated location; and

a line maintenance data generation portion (31) connected to the said monochrome data receiving means for receiving therefrom the respective monochrome values of a group (A to K) of first-set pixels whose points are in the vicinity of the calculated location $(X_1,Y_1)$, the members of which group are selected in dependence upon the determined region, said line maintenance data generation portion (31) comprising means for determining whether those monochrome values match any one of a plurality of predetermined patterns (PATTERN 1,2,3,4) of monochrome values of first-set pixels, some of the patterns of the said plurality representing respective line portions which could be portions of the original picture that extend in the column direction (Y) of the first array and that are each of a width less than the distance (1/p) from one second-array point to the next in the row direction (X), and the other patterns of the said plurality representing respective line portions which could be portions of the original picture that extend in the row direction (X) of the first array and that are each of a width less than the distance (1/q) from one second-array point to the next in the column direction (Y), said line maintenance data generation portion (31) further comprising means for producing line maintenance data (P1,P2,P3,P4) if such a match is found;

and further characterised in that the said monochrome data calculation means (4) are connected to the said control means (3) for receiving therefrom any such line maintenance data produced by the said line maintenance data generation portion, and in that the said logical calculations of the monochrome values of the second-set pixels (R) in the monochrome data calculation means (4) are dependent upon any such line maintenance data produced, and serve to reproduce, in the said converted version of the original picture, any such line portion in the original picture.

17

**Patentansprüche**

1. Bildverkleinerungsverfahren zur Verwendung entsprechender monochromer Werte eines ersten Satzes von Pixeln (S), die ein zu verkleinerndes Originalbild repräsentieren, welche Pixel (S) sich jeweils auf die Punkte eines ersten zweidimensionalen Arrays von Punkten auf dem Originalbild beziehen, um entsprechende monochrome Werte eines zweiten Satzes von Pixeln (R), die eine konvertierte Version des Originalbildes repräsentieren, abzuleiten, welche Pixel (R) in einer geringeren Anzahl vorliegen als die Pixel (S) des ersten Satzes, und welche sich jeweils auf die Punkte eines zweiten zweidimensionalen Arrays von Punkten auf der konvertierten Version des Originalbildes beziehen;

   welches Verfahren die folgenden Schritte für jedes Pixel (R) nacheinander des genannten zweiten Satzes umfaßt, wenn angenommen wird, daß das genannte zweite Array über das erste Array gelegt wird in einer vorherbestimmten Beziehung damit, so daß die Reihen und Spalten des zweiten Arrays jeweils parallel zu den Reihen und Spalten des ersten Arrays sind:

   (a) Berechnen des Ortes $(X_1, Y_1)$ auf dem ersten Array des Punktes des zweiten Arrays, auf den sich das betreffende Pixel $(R_{11})$ des zweiten Satzes bezieht; und

   (b) Verwenden vorherbestimmter logischer Berechnungen (beispielsweise Fig.13B), um den monochromen Wert des betreffenden Pixels $(R_{11})$ des zweiten Satzes vom monochromen Wert des Pixels des ersten Satzes, dessen Punkt dem genannten berechneten Ort am nächsten liegt, oder von den entsprechenden monochromen Werten der Pixel des ersten Satzes (A bis D), deren entsprechende Punkte in der Nähe des genannten berechneten Ortes $(X_1, Y_1)$ angeordnet sind, abzuleiten;

   gekennzeichnet durch die Schritte:

   (c) Bestimmen, welche einer vorherbestimmten Vielzahl verschiedener Regionen (REGION 1 bis 4) einer Zelleneinheit des ersten Arrays, das den genannten berechneten Ort $(X_1, Y_1)$ enthält, diesen berechneten Ort enthält; und

   (d) Bestimmen, ob die entsprechenden monochromen Werte einer Gruppe (A bis K) von Pixeln des ersten Satzes, deren Punkte in der Nähe des berechneten Ortes $(X_1, Y_1)$ sind, wobei die Mitglieder dieser Gruppe in Abhängigkeit von der bestimmten Region ausgewählt werden, mit irgendeinem einer Vielzahl vorherbestimmter Muster (MUSTER 1, 2, 3, 4) monochromer Werte von Pixeln des ersten Satzes übereinstimmen, wobei einige der Muster der genannten Vielzahl entsprechende Linienteile repräsentieren, welche Teile des Originalbildes sein könnten, die in der Spaltenrichtung (Y) des ersten Arrays verlaufen, und die jeweils eine geringere Breite aufweisen als die Distanz (1/p) von einem Punkt des zweiten Arrays zum nächsten in der Reihenrichtung (X), und die anderen Muster der genannten Vielzahl entsprechende Linienteile repräsentieren, welche Teile des Originalbildes sein könnten, die in der Reihenrichtung (X) des ersten Arrays verlaufen, und die jeweils eine geringere Breite aufweisen als die Distanz (1/q) von einem Punkt des zweiten Arrays zum nächsten in der Spaltenrichtung (Y), und Erzeugen von Linienaufrechterhaltungsdaten (P1, P2, P3, P4), wenn eine derartige Übereinstimmung gefunden wird;

   und ferner dadurch gekennzeichnet, daß in Schritt (b) die genannten logischen Berechnungen der monochromen Werte der Pixel des zweiten Satzes (R) von irgendwelchen derartigen erzeugten Linienaufrechterhaltungsdaten abhängig sind, und zur Reproduktion, in der genannten konvertierten Version des Originalbildes, irgendeines derartigen Linienteils im Originalbild dienen.

2. Bildverkleinerungsverfahren nach Anspruch 1, bei welchem die genannten Linienaufrechterhaltungsdaten in Abhängigkeit von logischen Daten abgeleitet werden, die angeben, ob oder nicht:

   (i) die Reihenrichtungsordignate $(X_0)$ des berechneten Ortes $(X_0, Y_0)$ auf dem ersten Array des Punktes des zweiten Arrays, auf den sich das vorherige Pixel $(R_{10})$ des zweiten Satzes in der Reihenrichtung (X) bezieht, größer ist als die Reihenrichtungsordinate (x ref) einer vorherbestimmten Referenzlinie für dieses Pixel $(R_{10})$, welche Linie in der genannten Spaltenrichtung (Y) verläuft;

   (ii) die Reihenrichtungsordinate $(X_1)$ des berechneten Ortes $(X_1, Y_1)$ auf dem ersten Array des Punktes des zweiten Arrays, auf den sich das aktuelle Pixel $(R_{11})$ des zweiten Arrays bezieht, größer ist als die Reihenrichtungsordinate (x ref) einer vorherbestimmten Referenzlinie für dieses Pixel $(R_{11})$, welche Linie in der genannten Spaltenrichtung (Y) verläuft;

   (iii) die Reihenrichtungsordinate $(X_2)$ des berechneten Ortes auf dem ersten Array des Punktes des zweiten Arrays, auf den sich das nächste Pixel $(R_{12})$ des zweiten Satzes in der Reihenrichtung (X) bezieht, größer ist als die Reihenrichtungsordinate (x ref) einer vorherbestimmten Referenzlinie für dieses Pixel $(R_{12})$, welche Linie in der genannten Spaltenrichtung (Y) verläuft;

   und auch in Abhängigkeit von der Anzahl (xshift0, xshift1) von Punkten (S) des ersten Arrays, gemessen in der Reihenrichtung (X) der übereinandergelegten Arrays, zwischen entsprechenden Punkten des zweiten Arrays, die sich auf das genannte vorherige Pixel ($R_{10}$) des zweiten Satzes in der Reihenrichtung beziehen, und dem genannten aktuellen Pixel ($R_{11}$) des zweiten Satzes oder zwischen den genannten entsprechenden Punkten des zweiten Arrays, die sich auf das aktuelle Pixel ($R_{11}$) des zweiten Satzes beziehen, und dem genannten nächsten Pixel ($R_{12}$) des zweiten Satzes in der Reihenrichtung.

3. Bildverkleinerungsverfahren nach Anspruch 2, bei welchem die genannten Linienaufrechterhaltungsdaten (P1, P2, P3, P4) auch in Abhängigkeit von logischen Daten abgeleitet werden, die angeben, ob oder nicht:

(i) die Spaltenrichtungsordignate ($Y_0$) des berechneten Ortes ($X_0$, $Y_0$) auf dem ersten Array des Punktes des zweiten Arrays, auf den sich das vorherige Pixel ($R_{01}$) des zweiten Satzes in der Spaltenrichtung (Y) bezieht, größer ist als die Spaltenrichtungsordinate (y ref) einer vorherbestimmten Referenzlinie für dieses Pixel ($R_{01}$), welche Linie in der genannten Reihenrichtung (X) verläuft;

(ii) die Spaltenrichtungsordinate ($Y_1$) des berechneten Ortes ($X_1$, $Y_1$) auf dem ersten Array des Punktes des zweiten Arrays, auf den sich das aktuelle Pixel ($R_{11}$) des zweiten Satzes bezieht, größer ist als die Spaltenrichtungsordinate (y ref) einer vorherbestimmten Referenzlinie für dieses Pixel ($R_{11}$), welche Linie in der genannten Reihenrichtung (X) verläuft;

(iii) die Spaltenrichtungsordinate ($Y_2$) des berechneten Ortes ($X_2$, $Y_2$) auf dem ersten Array des Punktes des zweiten Arrays, auf den sich das nächste Pixel ($R_{12}$) des zweiten Satzes in der Spaltenrichtung (Y) bezieht, größer ist als die Spaltenrichtungsordinate (y ref) einer vorherbestimmten Referenzlinie für dieses Pixel ($R_{12}$), welche Linie in der genannten Reihenrichtung (Y) verläuft;

und auch in Abhängigkeit von der Anzahl (yshift0, yshift1) der Punkte (S) des ersten Arrays, gemessen in der Spaltenrichtung (Y) der übereinandergelegten Arrays, zwischen den entsprechenden Punkten des zweiten Arrays, die sich auf das genannte vorherige Pixel ($R_{01}$) des zweiten Satzes in der Spaltenrichtung beziehen, und dem genannten aktuellen Pixel ($R_{11}$) des zweiten Satzes oder zwischen den genannten entsprechenden Punkten des zweiten Arrays, die sich auf das genannte aktuelle Pixel ($R_{11}$) des zweiten Satzes beziehen, und dem genannten nächsten Pixel ($R_{12}$) des zweiten Satzes in der Spaltenrichtung.

4. Bildverkleinerungsverfahren nach einem der vorhergehenden Ansprüche, bei welchem in Schritt (c) die genannte Region der genannten Zelleneinheit (A bis D) des ersten Arrays, die den genannten berechneten Ort ($X_1$, $Y_1$) des aktuellen Pixels ($R_{11}$) des zweiten Satzes enthält, in Übereinstimmung damit bestimmt wird, ob die Reihenrichtungsordinate ($X_1$) dieses berechneten Ortes größer ist als die Reihenrichtungsordinate (x ref) einer vorherbestimmten Referenzlinie, die in der genannten Spaltenrichtung (Y) verläuft, oder nicht, und ob die Spaltenrichtungsordinate ($Y_1$) dieses berechneten Ortes größer ist als die Spaltenrichtungsordinate (y ref) einer vorherbestimmten Referenzlinie, die in der genannten Reihenrichtung (X) verläuft, oder nicht.

5. Bildverkleinerungsverfahren nach einem der vorhergehenden Ansprüche, bei welchem die genannten logischen Berechnungen (beispielsweise Fig. 13B) in Abhängigkeit davon ausgewählt werden, welcher einer vorherbestimmten Vielzahl von Abschnitten (G1 bis G8) der genannten Zelleneinheit (A bis D) des ersten Arrays den berechneten Ort ($X_1$, $Y_1$) des aktuellen Pixels ($R_{11}$) des zweiten Satzes enthält.

6. Iteratives Bildverkleinerungsverfahren zum Verkleinern eines Originalbildes mit n Zeilen, wobei $n = 2^m$, und m Null oder eine positive ganze Zahl ist, wobei die erforderlichen Verkleinerungsfaktoren in der Reihen- und Spaltenrichtung des Bildes P bzw. Q sind, wobei $1 > P \geqq 1/n$, und $1 > Q \geqq 1/n$, bei welchem ein Bildverkleinerungsverfahren nach einem der vorhergehenden Ansprüche m-1 Male mit einer Bildverkleinerungsrate sowohl in der Reihen- als auch Spaltenrichtung von 1/2 durchgeführt wird, und ein einzelnes Bildverkleinerungsverfahren nach einem der vorhergehenden Ansprüche mit einer Bildverkleinerungsrate in der Reihenrichtung von $2^{m-1}*P$ und einer Bildverkleinerungsrate in der Spaltenrichtung von $2^{m-1}*$ durchgeführt wird.

7. Bildverkleinerungsvorrichtung zur Verwendung entsprechender monochromer Werte eines ersten Satzes von Pixeln (S), die ein zu verkleinerndes Originalbild repräsentieren, welche Pixel (S) sich jeweils auf die Punkte eines ersten zweidimensionalen Arrays von Punkten auf dem Originalbild beziehen, um entsprechende monochrome Werte eines zweiten Satzes von Pixeln (R), die eine konvertierte Version des Originalbildes repräsentieren, abzuleiten, welche Pixel (R) in einer geringeren Anzahl vorliegen als die Pixel (S) des ersten Satzes, und welche sich jeweils auf die Punkte eines zweiten zweidimensionalen Arrays von Punkten auf der konvertierten Version des Originalbildes beziehen;

welche Vorrichtung umfaßt:

eine monochrome Datenempfangseinrichtung (1) zum Empfangen jedes Pixels (R) nacheinander des genannten zweiten Satzes, wenn angenommen wird, daß das genannte zweite Array über das erste Array gelegt wird in einer vorherbestimmten Beziehung damit, so daß die Reihen und Spalten des zweiten Arrays jeweils parallel zu den Reihen und Spalten des ersten Arrays sind;

eine Einrichtung zum Berechnen des Ortes ($X_1$, $Y_1$) auf dem ersten Array des Punktes des zweiten Arrays, auf den sich das betreffende Pixel ($R_{11}$) des zweiten Satzes bezieht; und

eine monochrome Datenberechnungseinrichtung (4), die mit der genannten monochromen Datenempfangseinrichtung verbunden ist, um von dieser derartige monochrome Werte von Pixeln des ersten Satzes zu empfangen, und die betreibbar ist, um vorherbestimmte logische Berechnungen (beispielsweise Fig.13B) zu verwenden, um den monochromen Wert des betreffenden Pixels ($R_{11}$) des zweiten Satzes vom monochromen Wert des Pixels des ersten Satzes, dessen Punkt dem genannten berechneten Ort am nächsten liegt, oder von den entsprechenden monochromen Werten der Pixel des ersten Satzes (A bis D), deren entsprechende Punkte in der Nähe des genannten berechneten Ortes ($X_1$, $Y_1$) angeordnet sind, abzuleiten;

gekennzeichnet durch eine Steuereinrichtung (3), welche enthält:

einen Regiondiskriminierungsteil (32), der betreibbar ist, um zu bestimmen, welche einer vorherbestimmten Vielzahl verschiedener Regionen (REGION 1 bis 4) einer Zelleneinheit (A bis D) des ersten Arrays, das den genannten Ort ($X_1$, $Y_1$) enthält, diesen berechneten Ort enthält; und

einen Linienaufrechterhaltungsdaten-Erzeugungsteil (31), der mit der genannten monochromen Datenempfangseinrichtung verbunden ist, um von dieser die entsprechenden monochromen Werte einer Gruppe (A bis K) von Pixeln des ersten Satzes zu empfangen, deren Punkte in der Nähe des berechneten Ortes ($X_1$, $Y_1$) sind, wobei die Mitglieder dieser Gruppe in Abhängigkeit von der bestimmten Region ausgewählt werden, welcher Linienaufrechterhaltungsdaten-Erzeugungsteil (31) eine Einrichtung umfaßt, um zu bestimmen, ob diese monochromen Werte mit irgendeinem einer Vielzahl vorherbestimmter Muster (MUSTER 1, 2, 3, 4) monochromer Werte von Pixeln des ersten Satzes übereinstimmen, wobei einige der Muster der genannten Vielzahl entsprechende Linienteile repräsentieren, welche Teile des Originalbildes sein könnten, die in der Spaltenrichtung (Y) des ersten Arrays verlaufen, und die jeweils eine geringere Breite aufweisen als die Distanz (1/p) von einem Punkt des zweiten Arrays zum nächsten in der Reihenrichtung (X), und die anderen Muster der genannten Vielzahl entsprechende Linienteile repräsentieren, welche Teile des Originalbildes sein könnten, die in der Reihenrichtung (X) des ersten Arrays verlaufen, und die jeweils eine geringere Breite aufweisen als die Distanz (1/q) von einem Punkt des zweiten Arrays zum nächsten in Spaltenrichtung (Y), und welcher Linienaufrechterhaltungsdaten-Erzeugungsteil (31) ferner eine Einrichtung umfaßt, um Linienaufrechterhaltungsdaten (P1, P2, P3, P4) zu erzeugen, wenn eine derartige Übereinstimmung gefunden wird;

und ferner dadurch gekennzeichnet, daß die genannte monochrome Datenberechnungseinrichtung (4) mit der genannten Steuereinrichtung (3) verbunden ist, um von dieser irgendwelche derartige Linienaufrechterhaltungsdaten zu empfangen, die vom genannten Linienaufrechterhaltungsdaten-Erzeugungsteil erzeugt werden, und daß die genannten logischen Berechnungen der monochromen Werte der Pixel (R) des zweiten Satzes in der monochromen Datenberechnungseinrichtung (4) von irgendwelchen derartigen erzeugten Linienaufrechterhaltungsdaten abhängig sind, und zur Reproduktion, in der genannten konvertierten Version des Originalbildes, irgendeines derartigen Linienteils im Originalbild dienen.

## Revendications

1.  Procédé de réduction d'image permettant d'utiliser des valeurs monochromes respectives d'un premier jeu de pixels (S) représentant une image originale qui doit être réduite, lesquels pixels (S) concernent respectivement les points d'un premier réseau bidimensionnel de points sur l'image originale, afin de dériver des valeurs monochromes respectives d'un second jeu de pixels (R) représentant une version convertie de l'image originale, lesquels pixels (R) sont en un nombre inférieur au nombre des pixels (S) du premier jeu et lesquels pixels concernent respectivement les points d'un second réseau bidimensionnel de points sur la version convertie de l'image originale ;

lequel procédé comprend les étapes suivantes, pour chaque pixel (R) dudit second jeu tour à tour, lorsque ledit second réseau est considéré comme étant superposé sur le premier réseau selon une relation prédéterminée entre eux de telle sorte que des rangées et des colonnes du second réseau soient respectivement parallèles à des rangées et des colonnes du premier réseau :

(a) calcul de l'emplacement $(X_1, Y_1)$ sur le premier réseau du point de second réseau auquel le pixel de second jeu concerné $(R_{11})$ se rapporte ; et

(b) utilisation de calculs logiques prédéterminés (par exemple figure 13B) pour dériver la valeur monochrome du pixel de second jeu concerné $(R_{11})$ à partir de la valeur monochrome du pixel de premier jeu dont le point est situé le plus proche dudit emplacement calculé ou à partir des valeurs monochromes respectives de pixels de premier jeu (A à D) dont les points respectifs sont positionnés au voisinage dudit emplacement calculé $(X_1, Y_1)$ ;

caractérisé par les étapes de :

(c) détermination, parmi une pluralité prédéterminée de différentes régions (REGIONS 1 à 4) d'une cellule unitaire du premier réseau qui contient ledit emplacement calculé $(X_1, Y_1)$, de la région qui contient cet emplacement calculé ; et

(d) détermination de si oui ou non les valeurs monochromes respectives d'un groupe (A à K) de pixels de premier jeu dont des points sont au voisinage de l'emplacement calculé $(X_1, Y_1)$, les éléments de ce groupe étant sélectionnés en fonction de la région déterminée, correspondent à l'un quelconque d'une pluralité de motifs prédéterminés (MOTIFS 1, 2, 3, 4) de valeurs monochromes de pixels de premier jeu, certains des motifs de ladite pluralité représentant des parties de ligne respectives qui peuvent être des parties de l'image originale, lesquelles s'étendent suivant la direction de colonne (Y) du premier réseau et qui sont chacune d'une largeur inférieure à la distance (1/p) depuis un point de second réseau jusqu'au suivant suivant la direction de rangée (X), et les autres motifs de ladite pluralité représentant les parties de ligne respectives qui peuvent être des parties de l'image originale qui s'étendent suivant la direction de rangée (X) du premier réseau et qui sont chacune d'une largeur inférieure à la distance (1/q) depuis un point de second réseau jusqu'au suivant suivant la direction de colonne (Y), et production de données de maintien de ligne (P1, P2, P3, P4) si une telle correspondance est trouvée ;

et caractérisé en outre en ce que, au niveau de l'étape (b), lesdits calculs logiques des valeurs monochromes des pixels de second jeu (R) dépendent de quelconques données de maintien de ligne de ce type produites et servent à reproduire, dans ladite version convertie de l'image originale, une quelconque partie de ligne dans l'image originale.

2.  Procédé de réduction d'image selon la revendication 1, dans lequel lesdites données de maintien de ligne sont dérivées en fonction de données logiques indicatives de si oui ou non :

(i) l'ordonnée de direction de rangée $(X_0)$ de l'emplacement calculé $(X_0, Y_0)$ sur le premier réseau du point de second réseau auquel le pixel de second jeu précédent $(R_{10})$ suivant la direction de rangée (X) se rapporte est supérieure à l'ordonnée de direction de rangée (x ref) d'une ligne de référence prédéterminée pour ce pixel $(R_{10})$, laquelle ligne s'étend suivant ladite direction de colonne (Y) ;

(ii) l'ordonnée de direction de rangée $(X_1)$ de l'emplacement calculé $(X_1, Y_1)$ sur le premier réseau du point de second réseau auquel le pixel courant de second réseau $(R_{11})$ se rapporte est supérieure à l'ordonnée de direction de rangée (x ref) d'une ligne de référence prédéterminée pour ce pixel $(R_{11})$, laquelle ligne s'étend suivant ladite direction de colonne (Y) ; et

(iii) l'ordonnée de direction de rangée $(X_2)$ de l'emplacement calculé sur le premier réseau du point de second réseau auquel le pixel suivant de second jeu $(R_{12})$ suivant la direction de rangée (X) se rapporte est supérieure à l'ordonnée de direction de rangée (x ref) d'une ligne de référence prédéterminée pour ce pixel $(R_{12})$, laquelle ligne s'étend suivant ladite direction de colonne (Y) ;

et également en fonction du nombre (xshift0, xshift1) de points de premier réseau (S), mesuré suivant la direction de rangée (X) des réseaux superposés, entre les points respectifs de second réseau concernant ledit pixel précédent de second jeu $(R_{10})$ suivant la direction de rangée et ledit pixel courant de second jeu $(R_{11})$ ou entre lesdits points respectifs de second réseau concernant le pixel courant de second jeu $(R_{11})$ et ledit pixel suivant de second jeu $(R_{12})$ suivant la direction de rangée.

3.  Procédé de réduction d'image selon la revendication 2, dans lequel lesdites données de maintien de ligne (P1, P2, P3, P4) sont également dérivées en fonction de données logiques indicatives de si oui ou non :

(i) l'ordonnée de direction de colonne $(Y_0)$ de l'emplacement calculé $(X_0, Y_0)$ sur le premier réseau du point de second réseau auquel le pixel précédent de second jeu $(R_{01})$ suivant la direction de colonne (Y) se rapporte est supérieure à l'ordonnée de direction de colonne (y ref) d'une ligne de référence prédéterminée pour ce pixel $(R_{01})$, laquelle ligne s'étend suivant ladite direction de rangée (X) ;

(ii) l'ordonnée de direction de colonne $(Y_1)$ de l'emplacement calculé $(X_1, Y_1)$ sur le premier réseau du point de second réseau auquel le pixel courant de second jeu $(R_{11})$ se rapporte est supérieure à l'ordonnée de direction de colonne (y ref) d'une ligne de référence prédéterminée pour ce pixel ($R_{11}$), laquelle ligne s'étend suivant ladite direction de rangée (X) ; et

(iii) l'ordonnée de direction de colonne ($Y_2$) de l'emplacement calculé ($X_2$, $Y_2$) sur le premier réseau du point de second réseau auquel le pixel suivant de second jeu ($R_{12}$) suivant la direction de colonne (Y) se rapporte est supérieure à l'ordonnée de direction de colonne (y ref) d'une ligne de référence prédéterminée pour ce pixel ($R_{12}$), laquelle ligne s'étend suivant ladite direction de rangée (X) ;

et également en fonction du nombre (yshift0, yshift1) de points de premier réseau (S), mesuré suivant la direction de colonne (Y) des réseaux superposés, entre les points respectifs de second réseau concernant ledit pixel précédent de second jeu ($R_{01}$) suivant la direction de colonne et ledit pixel courant de second jeu ($R_{11}$) ou entre les points respectifs de second réseau concernant ledit pixel courant de second jeu ($R_{11}$) et ledit pixel suivant de second jeu ($R_{21}$) suivant la direction de colonne.

4.  Procédé de réduction d'image selon l'une quelconque des revendications précédentes, dans lequel, au niveau de l'étape (c), ladite région de ladite cellule unitaire (A à D) du premier réseau qui contient ledit emplacement calculé ($X_1$, $Y_1$) du pixel courant ($R_{11}$) du second jeu est déterminée conformément à si oui ou non l'ordonnée de direction de rangée ($X_1$) de cet emplacement calculé est supérieure à l'ordonnée de direction de rangée (x ref) d'une ligne de référence prédéterminée qui s'étend suivant ladite direction de colonne (Y) et à si oui ou non l'ordonnée de direction de colonne ($Y_1$) de cet emplacement calculé est supérieure à l'ordonnée de direction de colonne (y ref) d'une ligne de référence prédéterminée s'étendant suivant ladite direction de rangée (X).

5.  Procédé de réduction d'image selon l'une quelconque des revendications précédentes, dans lequel lesdits calculs logiques (par exemple figure 13B) sont choisis en fonction de celle d'une pluralité prédéterminée de sections différentes (G1 à G8) de ladite cellule unitaire (A à D) du premier réseau qui contient l'emplacement calculé ($X_1$, $Y_1$) du pixel courant de second jeu ($R_{11}$).

6.  Procédé de réduction d'image itératif permettant de réduire une image originale comportant n lignes où $n=2^m$ et m est égal à 0 ou est un entier positif, les facteurs de réduction requis suivant les directions de rangée et de colonne de l'image étant respectivement P et Q où $1 > P \geq 1/n$ et $1 > Q \geq 1/n$, dans lequel un procédé de réduction d'image tel que revendiqué selon l'une quelconque des revendications précédentes est mis en oeuvre m-1 fois moyennant un taux de réduction d'image suivant chacune des directions de rangée et de colonne de 1/2 et un unique procédé de réduction d'image tel que revendiqué selon l'une quelconque des revendications précédentes est mis en oeuvre moyennant un taux de réduction d'image suivant la direction de rangée de $2^{m-1} \times P$ et un taux de réduction d'image suivant la direction de colonne de $2^{m-1} \times Q$.

7.  Appareil de réduction d'image permettant d'utiliser des valeurs monochromes respectives d'un premier jeu de pixels (S) représentant une image originale qui doit être réduite, lesquels pixels (S) se rapportent respectivement aux points d'un premier réseau bidimensionnel de points sur l'image originale, afin de dériver des valeurs monochromes respectives d'un second jeu de pixels (R) représentant une version convertie de l'image originale, lesquels pixels (R) sont en un nombre inférieur au nombre de pixels (S) du premier jeu et lesquels pixels se rapportent respectivement aux points d'un second réseau bidimensionnel de points sur la version convertie de l'image originale,

lequel appareil comprend :

un moyen de réception de données monochromes (1) pour recevoir chaque pixel (R) dudit second jeu tour à tour, lorsque ledit second réseau est considéré comme étant superposé sur le premier réseau selon une relation prédéterminée entre eux de telle sorte que des rangées et des colonnes du second réseau soient respectivement parallèles à des rangées et des colonnes du premier réseau ;

un moyen pour calculer l'emplacement ($X_1$, $Y_1$) sur le premier réseau du point de second réseau auquel le pixel de second jeu concerné ($R_{11}$) se rapporte ; et

un moyen de calcul de données monochromes (4) connecté audit moyen de réception de données monochromes pour en recevoir ces valeurs monochromes de pixel de premier jeu et pouvant fonctionner pour utiliser les calculs logiques prédéterminés (par exemple figure 13B) pour dériver la valeur monochrome du pixel de second jeu concerné ($R_{11}$) à partir de la valeur monochrome de ce pixel de premier jeu dont le point est situé le plus proche dudit emplacement calculé ou à partir des valeurs monochromes respectives de pixels de premier jeu (A à D) dont des points respectifs sont positionnés au voisinage dudit emplacement calculé ($X_1$, $Y_1$),

caractérisé en ce que le moyen de commande (3) inclut :

une partie de discrimination de région (32) pouvant opérer pour déterminer parmi une pluralité prédéterminée de régions différentes (REGIONS 1 à 4) d'une cellule unitaire (A à D) du premier réseau qui contient ledit emplacement calculé ($X_1$, $Y_1$), de la région qui contient cet emplacement calculé ; et

une partie de génération de données de maintien de ligne (31) connectée audit moyen de réception de données monochromes pour en recevoir les valeurs monochromes respectives d'un groupe (A à K) de pixels de premier jeu dont des points sont au voisinage de l'emplacement calculé ($X_1$, $Y_1$), les éléments de ce groupe étant sélectionnés en fonction de la région déterminée, ladite partie de génération de données de maintien de ligne (31) comprenant un moyen pour déterminer si oui ou non ces valeurs monochromes correspondent à l'une quelconque d'une pluralité de motifs prédéterminés (MOTIFS 1, 2, 3, 4) de valeurs monochromes de pixels de premier jeu, certains des motifs de ladite pluralité représentant des parties de ligne respectives qui peuvent être des parties de l'image originale qui s'étendent suivant la direction de colonne (Y) du premier réseau et qui sont chacune d'une largeur inférieure à la distance (1/p) depuis un point de second réseau jusqu'au suivant suivant la direction de rangée (X) et les autres motifs de ladite pluralité représentant des parties de ligne respectives qui peuvent être des parties de l'image originale qui s'étendent suivant la direction de rangée (X) du premier réseau et qui sont chacune d'une largeur inférieure à la distance (1/q) depuis un point de second réseau jusqu'au suivant suivant la direction de colonne (Y), ladite partie de génération de données de maintien de ligne (31) comprenant en outre un moyen pour produire des données de maintien de ligne (P1, P2, P3, P4) si une telle correspondance est trouvée,

et caractérisé en outre en ce que le moyen de calcul de données monochromes (4) est connecté audit moyen de commande (3) pour en recevoir de quelconques données de maintien de ligne de ce type produites par ladite partie de génération de données de maintien de ligne et en ce que lesdits calculs logiques des valeurs monochromes des pixels de second jeu (R) dans le moyen de calcul de données monochromes (4) dépendent de quelconques données de maintien de ligne de ce type produites et servent à reproduire, dans ladite version convertie de l'image originale, une quelconque partie de ligne de ce type dans l'image originale.

23

## Fig. 1   ANALYSIS OF PICTURE REDUCTION

COORDINATES $(X_0, Y_0)$ OF BEGINNING POINT

$$\begin{cases} X_0 = \frac{1}{2}\left\{ (Pa-1)-\left(\frac{Pa}{Pb}\right)(Pb-1)\right\} \\ Y_0 = \frac{1}{2}\left\{ (Qa-1)-\left(\frac{Qa}{Qb}\right)(Qb-1)\right\} \end{cases}$$

AFTER CHANGING COORDINATE ORIGINAL

$$X_0' = X_0 - \frac{1}{2}$$

$$Y_0' = Y_0 - \frac{1}{2}$$

SYMBOLS

Pa ··· No. OF PIXELS PER LINE IN ORIGINAL PICTURE IN X-AXIS DIRECTION

Pb ··· No. OF PIXELS PER LINE IN REDUCED PICTURE IN X-AXIS DIRECTION

Qa ··· No. OF PIXELS PER LINE IN ORIGINAL PICTURE IN Y-AXIS DIRECTION

Qb ··· No. OF PIXELS PER LINE IN REDUCED PICTURE IN Y-AXIS DIRECTION

p ··· REDUCTION RATE IN X-AXIS DIRECTION $\left(p = \frac{Pb}{Pa}\right)$

q ··· REDUCTION RATE IN Y-AXIS DIRECTION $\left(q = \frac{Qb}{Qa}\right)$

# Fig. 2  DIVISIONS INTO SECTIONS

# Fig. 3  CURVE DEFINITION

EQUATION:

$$(px + 0.5)(qy + 0.5) = 0.5$$

p : REDUCTION FACTOR
   IN X-DIRECTION

q : REDUCTION FACTOR
   IN Y-DIRECTION

x : COORDINATE IN X-DIRECTION

y : COORDINATE IN Y-DIRECTION

$x \longrightarrow -x$ FOR $x \leq 0$

$y \longrightarrow -y$ FOR $y \leq 0$

25

# Fig. 4   LOGIC CALCULATION

| SECTION | LOGIC CALCULATION |
|---------|-------------------|
| G 1 | A |
| G 2 | B |
| G 3 | C |
| G 4 | D |
| G 5 | A * (B + C + D) + B * C * D |
| G 6 | B * (A + C + D) + A * C * D |
| G 7 | C * (A + B + D) + A * B * D |
| G 8 | D * (A + B + C) + A * B * C |

# Fig. 9   DIVISION OF AREA

A                    D

| REGION 1 | REGION 4 |
|----------|----------|
| REGION 2 | REGION 3 |

B                    C

# Fig. 5

## FINE LINE DISAPPEARANCE

# Fig. 6

## DISTRIBUTION OF ORIGINAL PICTURE PIXELS

xshift0
(PIXEL NUMBER)
$= 1 + \alpha$

xshift1
(PIXEL NUMBER)
$= 1 + \beta$

ORIGINAL PICTURE PIXEL

CONVERTED PICTURE PIXEL

R(10) R(11) R(12)

| X-COORDINATE |
|---|
| $R(10) \cdots X_0$ |
| $R(11) \cdots X_1$ |
| $R(12) \cdots X_2$ |

R(01)

R(11)

R(21)

yshift0
(PIXEL NUMBER)
$= 1 + \gamma$

yshift1
(PIXEL NUMBER)
$= 1 + \delta$

| Y-COORDINATE |
|---|
| $R(10) \cdots Y_0$ |
| $R(11) \cdots Y_1$ |
| $R(12) \cdots Y_2$ |

# Fig. 7

EXAMPLE OF DISTRIBUTION OF ORIGINAL
PICTURE PIXELS

X- COORDINATE

R(10) --- $X_0$
R(11) --- $X_1$
R(12) --- $X_2$

Y- COORDINATE

R(10) --- $Y_0$
R(11) --- $Y_1$
R(12) --- $Y_2$

29

# Fig. 8

LOCATION (1/0) OF REDUCED PICTURE PIXEL
ALONG X-AXIS DIRECTION

LOCATION (1/0) OF REDUCED PICTURE PIXEL
ALONG Y-AXIS DIRECTION

EP 0 333 496 B1

# Fig. 10

REFERENCE PIXELS $(1 > p \geq \frac{1}{2}, 1 > q \geq \frac{1}{2})$

LINE "n-1" ————————————— L ———————————— K

LINE "n" ————— E ————— A ————— D ————— J

REGION 1 | REGION 4

REGION 2 | REGION 3

LINE "n+1" ————— F ————— B ————— C ————— I

LINE "n+2" ————————————— G ———————————— H

EP 0 333 496 B1

*Fig. 11A* <u>PATTERNS OF FINE LINE DISAPPEARANCE</u>

$$( 1 > p \geqq \tfrac{1}{2}, \ 1 > q \geqq \tfrac{1}{2} )$$

(1) REGION 1

PATTERN 1

PATTERN 3

PATTERN 2

PATTERN 4

(2) REGION 2

PATTERN 1

PATTERN 3

PATTERN 2

PATTERN 4

# Fig. 11B

(3) REGION 3

PATTERN 1

PATTERN 3

PATTERN 2

PATTERN 4

(4) REGION 4

PATTERN 1

PATTERN 3

PATTERN 2

PATTERN 4

EP 0 333 496 B1

# Fig. 12A

CONDITION FOR DETECTING PIXELS SUSCEPTIBLE TO DISAPPEARANCE

$$( 1 > p \geq \tfrac{1}{2}, \quad 1 > q \geq \tfrac{1}{2} )$$

| REGION No. | CONDITION No. | $x$ shift 1 | $y$ shift 1 | LOCATION OF $X_1$ $(X_1 > 0)$ | LOCATION OF $X_2$ $(X_2 > 0)$ | LOCATION OF $Y_1$ $(Y_1 > 0)$ | LOCATION OF $Y_2$ $(Y_2 > 0)$ | DETECTION RESULT |
|---|---|---|---|---|---|---|---|---|
| | 1 | 1 | 1 | O | O | O | O | NO LINE SUSCEPTIBLE TO DISAPPEARANCE |
| | 2 | 1 | 1 | O | O | O | 1 | PATTERN 1,2 |
| | 3 | 1 | 1 | O | 1 | O | O | PATTERN 3,4 |
| | 4 | 1 | 1 | O | 1 | O | 1 | PATTERN 1,2,3,4 |
| | 5 | 1 | 2 | O | O | O | O | PATTERN 1,2 |
| | 6 | 1 | 2 | O | O | O | 1 | IMPOSSIBLE |
| | 7 | 1 | 2 | O | 1 | O | O | PATTERN 1,2,3,4 |
| REGION 1 | 8 | 1 | 2 | O | 1 | O | 1 | IMPOSSIBLE |
| | 9 | 2 | 1 | O | O | O | O | PATTERN 3, 4 |
| | 10 | 2 | 1 | O | O | O | 1 | PATTERN 1,2,3,4 |
| | 11 | 2 | 1 | O | 1 | O | O | IMPOSSIBLE |
| | 12 | 2 | 1 | O | 1 | O | 1 | IMPOSSIBLE |
| | 13 | 2 | 2 | O | O | O | O | PATTERN 1,2,3,4 |
| | 14 | 2 | 2 | O | O | O | 1 | IMPOSSIBLE |
| | 15 | 2 | 2 | O | 1 | O | O | IMPOSSIBLE |
| | 16 | 2 | 2 | O | 1 | O | 1 | IMPOSSIBLE |

# Fig.12 B

| REGION No. | CONDITION No. | x shift 1 | y shift 0 | LOCATION OF X1 ($X_1 > 0$) | LOCATION OF X2 ($X_2 > 0$) | LOCATION OF Y0 ($Y_0 > 0$) | LOCATION OF Y1 ($Y_1 > 0$) | DETECTION RESULT |
|---|---|---|---|---|---|---|---|---|
| | 1 | 1 | 1 | O | O | O | 1 | PATTERN 1, 2 (REDUNDANT) |
| | 2 | 1 | 1 | O | O | 1 | 1 | NO LINE SUSCEPTIBLE TO DISAPPEARANCE |
| | 3 | 1 | 1 | O | 1 | O | 1 | PATTERN 1,2,3,4 (1,2 REDUNDANT) |
| | 4 | 1 | 1 | O | 1 | 1 | 1 | PATTERN 3,4 |
| | 5 | 1 | 2 | O | O | O | 1 | IMPOSSIBLE |
| | 6 | 1 | 2 | O | O | 1 | 1 | PATTERN 1,2 |
| | 7 | 1 | 2 | O | 1 | O | 1 | IMPOSSIBLE |
| | 8 | 1 | 2 | O | 1 | 1 | 1 | PATTERN 1,2,3,4 |
| REGION2 | 9 | 2 | 1 | O | O | O | 1 | PATTERN 1,2,3,4 (1,2 REDUNDANT) |
| | 10 | 2 | 1 | O | O | 1 | 1 | PATTERN 3,4 |
| | 11 | 2 | 1 | O | 1 | O | 1 | IMPOSSIBLE |
| | 12 | 2 | 1 | O | 1 | 1 | 1 | IMPOSSIBLE |
| | 13 | 2 | 2 | O | O | O | 1 | IMPOSSIBLE |
| | 14 | 2 | 2 | O | O | 1 | 1 | PATTERN 1,2,3,4 |
| | 15 | 2 | 2 | O | 1 | O | 1 | IMPOSSIBLE |
| | 16 | 2 | 2 | O | 1 | 1 | 1 | IMPOSSIBLE |

EP 0 333 496 B1

# Fig. 12C

| REGION No. | CONDITION No. | x shift 0 | y shift 0 | LOCATION OF $X_0$ ($X_0 > 0$) | LOCATION OF $X_1$ ($X_1 > 0$) | LOCATION OF $Y_0$ ($Y_0 > 0$) | LOCATION OF $Y_1$ ($Y_1 > 0$) | DETECTION RESULT |
|---|---|---|---|---|---|---|---|---|
| REGION 3 | 1 | 1 | 1 | O | 1 | O | 1 | PATTERN 1,2,3,4 (REDUNDANT) |
| | 2 | 1 | 1 | O | 1 | 1 | 1 | PATTERN 3,4 (REDUNDANT) |
| | 3 | 1 | 1 | 1 | 1 | O | 1 | PATTERN 1,2 (REDUNDANT) |
| | 4 | 1 | 1 | 1 | 1 | 1 | 1 | NO LINE SUSCEPTIBLE TO DISAPPEARANCE |
| | 5 | 1 | 2 | O | 1 | O | 1 | IMPOSSIBLE |
| | 6 | 1 | 2 | O | 1 | 1 | 1 | PATTERN 1,2,3,4 (3,4 REDUNDANT) |
| | 7 | 1 | 2 | 1 | 1 | O | 1 | IMPOSSIBLE |
| | 8 | 1 | 2 | 1 | 1 | 1 | 1 | PATTERN 1,2 |
| | 9 | 2 | 1 | O | 1 | O | 1 | IMPOSSIBLE |
| | 10 | 2 | 1 | O | 1 | 1 | 1 | IMPOSSIBLE |
| | 11 | 2 | 1 | 1 | 1 | O | 1 | PATTERN 1,2,3,4 (1,2 REDUNDANT) |
| | 12 | 2 | 1 | 1 | 1 | 1 | 1 | PATTERN 3,4 |
| | 13 | 2 | 2 | O | 1 | O | 1 | IMPOSSIBLE |
| | 14 | 2 | 2 | O | 1 | 1 | 1 | IMPOSSIBLE |
| | 15 | 2 | 2 | 1 | 1 | O | 1 | IMPOSSIBLE |
| | 16 | 2 | 2 | 1 | 1 | 1 | 1 | PATTERN 1,2,3,4 |

EP 0 333 496 B1

# Fig. 12 D

| REGION No. | CONDITION No. | x shift 0 | y shift 1 | LOCATION OF $X_0$ ($X_0 > 0$) | LOCATION OF $X_1$ ($X_1 > 0$) | LOCATION OF $Y_1$ ($Y_1 > 0$) | LOCATION OF $Y_2$ ($Y_2 > 0$) | DETECTION RESULT |
|---|---|---|---|---|---|---|---|---|
| REGION 4 | 1 | 1 | 1 | O | 1 | O | O | PATTERN 3,4 (REDUNDANT) |
| | 2 | 1 | 1 | O | 1 | O | 1 | PATTERN 1,2,3,4(3,4 REDUNDANT) |
| | 3 | 1 | 1 | 1 | 1 | O | O | NO LINE SUSCEPTIBLE TO DISAPPERANCE |
| | 4 | 1 | 1 | 1 | 1 | O | 1 | PATTERN 1,2 |
| | 5 | 1 | 2 | O | 1 | O | O | PATTERN 1,2,3,4(3,4 REDUNDANT) |
| | 6 | 1 | 2 | O | 1 | O | 1 | IMPOSSIBLE |
| | 7 | 1 | 2 | 1 | 1 | O | O | PATTERN 1,2 |
| | 8 | 1 | 2 | 1 | 1 | O | 1 | IMPOSSIBLE |
| | 9 | 2 | 1 | O | 1 | O | O | IMPOSSIBLE |
| | 10 | 2 | 1 | O | 1 | O | 1 | IMPOSSIBLE |
| | 11 | 2 | 1 | 1 | 1 | O | O | PATTERN 3,4 |
| | 12 | 2 | 1 | 1 | 1 | O | 1 | PATTERN 1,2,3,4 |
| | 13 | 2 | 2 | O | 1 | O | O | IMPOSSIBLE |
| | 14 | 2 | 2 | O | 1 | O | 1 | IMPOSSIBLE |
| | 15 | 2 | 2 | 1 | 1 | O | O | PATTERN 1,2,3,4 |
| | 16 | 2 | 2 | 1 | 1 | O | 1 | IMPOSSIBLE |

SECTIONS

*Fig. 13A*

*Fig. 13B*

LOGIC CALCULATION

$$( 1 > p \geqq \tfrac{1}{2}, \ 1 > q \geqq \tfrac{1}{2} )$$

| SECTION | LOGIC CALCULATION |
|---------|-------------------|
| G 1 | $A * \overline{P2} * \overline{P4} + P1 + P3$ |
| G 2 | $B * \overline{P2} * \overline{P4} + P1 + P3$ |
| G 3 | $C * \overline{P2} * \overline{P4} + P1 + P3$ |
| G 4 | $D * \overline{P2} * \overline{P4} + P1 + P3$ |
| G 5 | $A * (B + \overline{P4} + D * \overline{P2} + C) + P1 + P3$ |
| G 6 | $B * (A * \overline{P4} + C * \overline{P2} + D) + P1 + P3$ |
| G 7 | $C * (D * \overline{P4} + B * \overline{P2} + A) + P1 + P3$ |
| G 8 | $D * (C * \overline{P4} + A * \overline{P2} + B) + P1 + P3$ |

$$P1 = U * ( \text{PATTERN No. 1} )$$
$$P2 = U * ( \text{PATTERN No. 2} )$$
$$P3 = V * ( \text{PATTERN No. 3} )$$
$$P4 = V * ( \text{PATTERN No. 4} )$$

$$U = 1 \quad \text{FOR PATTERN No. 1, No. 2}$$
$$V = 1 \quad \text{FOR PATTERN No. 3, No. 4}$$

$$\overline{P2} = 0 \quad \text{FOR PATTERN No. 2}$$
$$\overline{P4} = 0 \quad \text{FOR PATTERN No. 4}$$

38

# Fig. 13C

## LOGIC CALCULATION

$$( \tfrac{1}{2} > p \geq \tfrac{1}{3}, \ \tfrac{1}{2} > q \geq \tfrac{1}{3} )$$

| SECTION | LOGIC CALCULATION |
|---|---|
| G 1 | $A * \overline{P1} * \overline{P3} * \overline{P5} + Q1 + Q3 + Q5$ |
| G 2 | $B * \overline{P1} * \overline{P3} * \overline{P5} + Q1 + Q3 + Q5$ |
| G 3 | $C * \overline{P2} * \overline{P4} * \overline{P6}$ |
| G 4 | $D * \overline{P2} * \overline{P4} * \overline{P6}$ |
| G 5 | $A * (B * \overline{P1} * \overline{P3} * \overline{P5} + C + D) + B * C * D + Q1 + Q3 + Q5$ |
| G 6 | $B * (A * \overline{P1} * \overline{P3} * \overline{P5} + C + D) + A * C * D + Q1 + Q3 + Q5$ |
| G 7 | $C * (D * \overline{P2} * \overline{P4} * \overline{P6} + A + B) + A * B * D + Q2 + Q4 + Q6$ |
| G 8 | $D * (C * \overline{P2} * \overline{P4} * \overline{P6} + A + B) + A * B * C + Q2 + Q4 + Q6$ |

$$P1 = A * B * \overline{C} * \overline{D} * E * F * G * H * I * J * K * L \cdots\cdots\text{PATTERN 7}$$

$$P2 = V1 * A * B * C * D * E * F * \overline{G} * \overline{H} * I * J * K * L \cdots\cdots\text{PATTERN 8}$$

$$P3 = V2 * A * B * E * F * I * J * K * L * (\overline{C}, \overline{D}, \overline{G}, \overline{H}) \cdots\cdots\text{PATTERNS 30~36}$$

$$P4 = \overline{A} * \overline{B} * C * D * E * F * G * H * I * J * K * L \cdots\cdots\text{PATTERN 5}$$

$$P5 = V3 * A * B * C * D * E * \overline{F} * \overline{G} * H * I * J * K * L \cdots\cdots\text{PATTERN 6}$$

$$P6 = V4 * C * D * G * H * I * J * K * L * (\overline{A}, \overline{B}, \overline{E}, \overline{F}) \cdots\cdots\text{PATTERNS 23~29}$$

$$Q1 = \overline{A} * \overline{B} * C * D * \overline{E} * \overline{F} * \overline{G} * \overline{H} * \overline{I} * \overline{J} * \overline{K} * \overline{L} \cdots\cdots\text{PATTERN 3}$$

$$Q2 = V1 * \overline{A} * \overline{B} * C * D * \overline{E} * \overline{F} * \overline{G} * \overline{H} * \overline{I} * \overline{J} * \overline{K} * \overline{L} \cdots\cdots\text{PATTERN 4}$$

$$Q3 = V2 * \overline{A} * \overline{B} * \overline{E} * \overline{F} * \overline{I} * \overline{J} * \overline{K} * \overline{L} * (C, D, G, H) \cdots\cdots\text{PATTERNS 16~22}$$

$$Q4 = A * B * \overline{C} * \overline{D} * \overline{E} * \overline{F} * \overline{G} * \overline{H} * \overline{I} * \overline{J} * \overline{K} * \overline{L} \cdots\cdots\text{PATTERN 1}$$

$$Q5 = V3 * \overline{A} * \overline{B} * \overline{C} * \overline{D} * E * F * \overline{G} * \overline{H} * \overline{I} * \overline{J} * \overline{K} * \overline{L} \cdots\text{PATTERN 2}$$

$$Q6 = V4 * C * D * G * H * I * J * K * L * (A, B, E, F) \cdots\text{PATTERNS 9~15}$$

$$V1 = 1 \quad \text{FOR} \quad X\text{shift1} = 3$$
$$V2 = 1 \quad \text{FOR} \quad X\text{shift1} = 2 \ \text{AND} \ X_2 > 0$$
$$\text{OR}$$
$$X\text{shift1} = 3 \ \text{AND} \ X_2 < 0$$
$$V3 = 1 \quad \text{FOR} \quad X\text{shift0} = 3 \ \text{AND} \ X_0 < 0$$
$$V4 = 1 \quad \text{FOR} \quad X\text{shift0} = 3$$

$$(\overline{C}, \overline{D}, \overline{G}, \overline{H}) = \overline{C} * \overline{H} + \overline{D} * \overline{G} + \overline{C} * \overline{D} * \overline{G} + \overline{C} * \overline{D} * \overline{H} + \overline{C} * \overline{G} * \overline{H} + \overline{D} * \overline{G} * \overline{H} + \overline{C} * \overline{D} * \overline{G} * \overline{H}$$

# Fig. 14A

SIGNAL (UPPER LINE)

PIXEL DATA INPUT UNIT ⌇~1

PIXEL I
PIXEL E
PIXEL A
PIXEL D
PIXEL H
PIXEL L

11

I
E
A
D
H
L

LOGIC CALCULATION CIRCUIT ⌇~4

MONOCHROME DATA OUTPUT (1/0)

12

PIXEL K
PIXEL G
PIXEL C
PIXEL B
PIXEL F
PIXEL J

K
G
C
B
F
J

SIGNAL (LOWER LINE)

3

CONTROL UNIT

31 — LINE DISAPPERANCE SUSCEPTIBILITY DATA GENERATION

32 — REGION DISCRIMINATION

# Fig. 14B

PIXEL DATA
INPUT UNIT

LOGIC
CALCULATION
CIRCUIT

MONOCHROME DATA
OUTPUT (I/O)

TWO DIMENSIONAL
PICTURE STORAGE

CONTROL UNIT

LINE DISAPPEARANCE SUS-
CEPTIBILITY DATA GENERATION

REGION DISCRIMINATION

# Fig. 15

## FINE LINE PATTERNS

$$\left( \begin{array}{c} \text{LINE WIDTH} \cdots\cdots \text{ONE UNIT} \\ 1/2 > P \geqq 1/3 \end{array} \right)$$

I E A D H L

PATTERN 1

J F B C G K

PATTERN 2

PATTERN 3

PATTERN 4

PATTERN 5

PATTERN 6

PATTERN 7

PATTERN 8

EP 0 333 496 B1

# Fig. 16

FINE LINE PATTERN

$$\frac{(\text{LINE WIDTH} \cdots \text{TWO UNITS})}{1/2 > P \geqq 1/3}$$

PATTERN 9

PATTERN 10

PATTERN 11

PATTERN 12

PATTERN 13

PATTERN 14

PATTERN 15

PATTERN 16

PATTERN 17

PATTERN 18

PATTERN 19

PATTERN 20

PATTERN 21

PATTERN 22

PATTERN 23

PATTERN 24

PATTERN 25

PATTERN 26

PATTERN 27

PATTERN 28

PATTERN 29

PATTERN 30

PATTERN 31

PATTERN 32

PATTERN 33

PATTERN 34

PATTERN 35

PATTERN 36

EP 0 333 496 B1

## Fig. 17

PIXEL DATA INPUT UNIT ~1

11  12

LOGIC CALCULATION CIRCUIT ~4

14

13

16

15

17  18

MONOCHROME DATA OUTPUT (I/O)

2

TWO DIMENSIONAL PICTURE STORAGE

CONTROL UNIT 3

31

LINE DISAPPEARANCE SUS- CEPTIBILITY DATA GENERATION

REGION DISCRIMINATION

32

# Fig. 18

## DISTRIBUTION OF ORIGINAL PICTURE PIXELS

# Fig. 19    <u>DIVISION OF AREA</u>

# Fig. 20    <u>REFERENCE PIXELS</u>
$$( 1 > p \geq \tfrac{1}{2},\ 1 > q \geq \tfrac{1}{2} )$$

EP 0 333 496 B1

## Fig. 21A

CONDITION FOR DETECTION PIXELS SUSCEPTIBLE TO DISAPPEARANCE

$$(1 > P \geq \tfrac{1}{2}, \; 1 > q \geq \tfrac{1}{2})$$

| REGION No. | CONDITION No. | x shift 1 | y shift 1 | LOCATION OF $X_1$ ($X_1 > 0$) | LOCATION OF $X_2$ ($X_2 > 0$) | LOCATION OF $Y_1$ ($Y_1 > 0$) | LOCATION OF $Y_2$ ($Y_2 > 0$) | DETECTION RESULT |
|---|---|---|---|---|---|---|---|---|
| REGION 1 | 1 | 1 | 1 | O | O | O | O | NO LINE SUSCEPTIBLE TO DISAPPEARANCE |
| | 2 | 1 | 1 | O | O | O | 1 | PATTERN No.1,2 |
| | 3 | 1 | 1 | O | 1 | O | O | PATTERN No.3,4 |
| | 4 | 1 | 1 | O | 1 | O | 1 | PATTERN No.1,2,3,4 |
| | 5 | 1 | 2 | O | O | O | O | PATTERN No.1,2 |
| | 6 | 1 | 2 | O | O | O | 1 | IMPOSSIBLE |
| | 7 | 1 | 2 | O | 1 | O | O | PATTERN No.1,2,3,4 |
| | 8 | 1 | 2 | O | 1 | O | 1 | IMPOSSIBLE |
| | 9 | 2 | 1 | O | O | O | O | PATTERN No.3,4 |
| | 10 | 2 | 1 | O | O | O | 1 | PATTERN No.1,2,3,4 |
| | 11 | 2 | 1 | O | 1 | O | O | IMPOSSIBLE |
| | 12 | 2 | 1 | O | 1 | O | 1 | IMPOSSIBLE |
| | 13 | 2 | 2 | O | O | O | O | PATTERN No.1,2,3,4 |
| | 14 | 2 | 2 | O | O | O | 1 | IMPOSSIBLE |
| | 15 | 2 | 2 | O | 1 | O | O | IMPOSSIBLE |
| | 16 | 2 | 2 | O | 1 | O | 1 | IMPOSSIBLE |

# Fig. 21 B

| REGION No. | CONDITION No. | x shift 1 | y shift 0 | LOCATION OF $X_1$ ($X_1 > 0$) | LOCATION OF $X_2$ ($X_2 > 0$) | LOCATION OF $Y_0$ ($Y_0 > 0$) | LOCATION OF $Y_1$ ($Y_1 > 0$) | DETECTION RESULT |
|---|---|---|---|---|---|---|---|---|
| REGION 2 | 1 | 1 | 1 | O | O | O | 1 | PATTERN No.1,2 (REDUNDANT) |
| | 2 | 1 | 1 | O | O | 1 | 1 | NO LINE SUSCEPTIBLE TO DISAPPEARANCE |
| | 3 | 1 | 1 | O | 1 | O | 1 | PATTERN No.1,2,3,4 (REDUNDANT) |
| | 4 | 1 | 1 | O | 1 | 1 | 1 | PATTERN No. 3,4 |
| | 5 | 1 | 2 | O | O | O | 1 | IMPOSSIBLE |
| | 6 | 1 | 2 | O | O | 1 | 1 | PATTERN No.1,2 |
| | 7 | 1 | 2 | O | 1 | O | 1 | IMPOSSIBLE |
| | 8 | 1 | 2 | O | 1 | 1 | 1 | PATTERN No.1,2,3,4 |
| | 9 | 2 | 1 | O | O | O | 1 | PATTERN No.1,2,3,4 (REDUNDANT) |
| | 10 | 2 | 1 | O | O | 1 | 1 | PATTERN No. 3,4 |
| | 11 | 2 | 1 | O | 1 | O | 1 | IMPOSSIBLE |
| | 12 | 2 | 1 | O | 1 | 1 | 1 | IMPOSSIBLE |
| | 13 | 2 | 2 | O | O | O | 1 | IMPOSSIBLE |
| | 14 | 2 | 2 | O | O | 1 | 1 | PATTERN No. 1,2,3,4 |
| | 15 | 2 | 2 | O | 1 | O | 1 | IMPOSSIBLE |
| | 16 | 2 | 2 | O | 1 | 1 | 1 | IMPOSSIBLE |

EP 0 333 496 B1

## Fig. 21C

| REGION No. | CONDITION No. | x shift O | y shift O | LOCATION OF $X_0$ ($X_0 > 0$) | LOCATION OF $X_1$ ($X_1 > 0$) | LOCATION OF $Y_0$ ($Y_0 > 0$) | LOCATION OF $Y_1$ ($Y_1 > 0$) | DETECTION RESULT |
|---|---|---|---|---|---|---|---|---|
| REGION 3 | 1 | 1 | 1 | O | 1 | O | 1 | PATTERN No.1,2,3,4 (REDUNDANT) |
| | 2 | 1 | 1 | O | 1 | 1 | 1 | PATTERN No.3,4 (REDUNDANT) |
| | 3 | 1 | 1 | 1 | 1 | O | 1 | PATTERN No.1,2 (REDUNDANT) |
| | 4 | 1 | 1 | 1 | 1 | 1 | 1 | NO LINE SUSCEPTIBLE TO DISAPPEARANCE |
| | 5 | 1 | 2 | O | 1 | O | 1 | IMPOSSIBLE |
| | 6 | 1 | 2 | O | 1 | 1 | 1 | PATTERN No.1,2,3,4 (REDUNDANT) |
| | 7 | 1 | 2 | 1 | 1 | O | 1 | IMPOSSIBLE |
| | 8 | 1 | 2 | 1 | 1 | 1 | 1 | PATTERN No.1,2 |
| | 9 | 2 | 1 | O | 1 | O | 1 | IMPOSSIBLE |
| | 10 | 2 | 1 | O | 1 | 1 | 1 | IMPOSSIBLE |
| | 11 | 2 | 1 | 1 | 1 | O | 1 | PATTERN No.1,2,3,4 (REDUNDANT) |
| | 12 | 2 | 1 | 1 | 1 | 1 | 1 | PATTERN No.3,4 |
| | 13 | 2 | 2 | O | 1 | O | 1 | IMPOSSIBLE |
| | 14 | 2 | 2 | O | 1 | 1 | 1 | IMPOSSIBLE |
| | 15 | 2 | 2 | 1 | 1 | O | 1 | IMPOSSIBLE |
| | 16 | 2 | 2 | 1 | 1 | 1 | 1 | PATTERN No.1,2,3,4 |

EP 0 333 496 B1

## Fig. 21D

| REGION No. | CONDITION No. | x shift 0 | y shift 1 | LOCATION OF $X_0$ ($X_0 > 0$) | LOCATION OF $X_1$ ($X_1 > 0$) | LOCATION OF $Y_1$ ($Y_1 > 0$) | LOCATION OF $Y_2$ ($Y_2 > 0$) | DETECTION RESULT |
|---|---|---|---|---|---|---|---|---|
| REGION 4 | 1 | 1 | 1 | O | 1 | O | O | PATTERN No.3,4 (REDUNDANT) |
| | 2 | 1 | 1 | O | 1 | O | 1 | PATTERN No.1,2,3,4 (REDUNDANT) |
| | 3 | 1 | 1 | 1 | 1 | O | O | NO LINE SUSCEPTIBLE TO DISAPPEARANCE |
| | 4 | 1 | 1 | 1 | 1 | O | 1 | PATTERN No. 1,2 |
| | 5 | 1 | 2 | O | 1 | O | O | PATTERN No.1,2,3,4 (REDUNDANT) |
| | 6 | 1 | 2 | O | 1 | O | 1 | IMPOSSIBLE |
| | 7 | 1 | 2 | 1 | 1 | O | O | PATTERN No. 1,2 |
| | 8 | 1 | 2 | 1 | 1 | O | 1 | IMPOSSIBLE |
| | 9 | 2 | 1 | O | 1 | O | O | IMPOSSIBLE |
| | 10 | 2 | 1 | O | 1 | O | 1 | IMPOSSIBLE |
| | 11 | 2 | 1 | 1 | 1 | O | O | PATTERN No. 3,4 |
| | 12 | 2 | 1 | 1 | 1 | O | 1 | PATTERN No. 1,2,3,4 |
| | 13 | 2 | 2 | O | 1 | O | O | IMPOSSIBLE |
| | 14 | 2 | 2 | O | 1 | O | 1 | IMPOSSIBLE |
| | 15 | 2 | 2 | 1 | 1 | O | O | PATTERN No. 1,2,3,4 |
| | 16 | 2 | 2 | 1 | 1 | O | 1 | IMPOSSIBLE |

EP 0 333 496 B1

# *Fig. 22*

LOGIC CALCULATION

$$( 1 > p \geqq \tfrac{1}{2}, \; 1 > q \geqq \tfrac{1}{2} )$$

| SECTION | LOGIC CALCULATION |
|---|---|
| G 1 | $A * \overline{P2} * \overline{P4} + P1 + P3$ |
| G 2 | $B * \overline{P2} * \overline{P4} + P1 + P3$ |
| G 3 | $C * \overline{P2} * \overline{P4} + P1 + P3$ |
| G 4 | $D * \overline{P2} * \overline{P4} + P1 + P3$ |
| G 5 | $A * (B * \overline{P4} + D * \overline{P2} + C) + B * C * D + P1 + P3$ |
| G 6 | $B * (A * \overline{P4} + C * \overline{P2} + D) + A * C * D + P1 + P3$ |
| G 7 | $C * (D * \overline{P4} + B * \overline{P2} + A) + A * B * D + P1 + P3$ |
| G 8 | $D * (C * \overline{P4} + A * \overline{P2} + B) + A * B * C + P1 + P3$ |

$$
\begin{aligned}
P1 &= U1 * (\text{PATTERN 1}) &&--- && \text{PATTERN 1 ( Fig.11 )} \\
P2 &= U1 * (\text{PATTERN 2}) &&--- && \text{PATTERN 2 ( } \prime\prime \text{ )} \\
P3 &= V1 * (\text{PATTERN 3}) &&--- && \text{PATTERN 3 ( } \prime\prime \text{ )} \\
P4 &= V1 * (\text{PATTERN 4}) &&--- && \text{PATTERN 4 ( } \prime\prime \text{ )}
\end{aligned}
$$

51

Fig. 23

REFERENCE PIXEL
$(\,\frac{1}{2}>P\geqq\frac{1}{3},\quad \frac{1}{2}>q\geqq\frac{1}{3}\,)$

EP 0 333 496 B1

# Fig. 24A

PATTERNS OF FINE LINE DISAPPEARANCE
$$( \tfrac{1}{2} > p \geqq \tfrac{1}{3}, \quad \tfrac{1}{2} > q \geqq \tfrac{1}{3} )$$

REGION 1

EP 0 333 496 B1

Fig. 24 B

REGION 2

Fig. 24 C

REGION 3

EP 0 333 496 B1

# Fig. 24 D

REGION 4

EP 0 333 496 B1

# Fig. 25A

CONDITION FOR DETECTING PIXELS SUSCEPTIBLE TO DISAPPEARANCE

$$( \; ^1\!/_2 > p \geqq ^1\!/_3, \quad ^1\!/_2 > q \geqq ^1\!/_3 \;)$$

| REGION No. | CONDITION No. | x shift 1 | y shift 1 | LOCATION OF $X_1$ ($X_1 > 0$) | LOCATION OF $X_2$ ($X_2 > 0$) | LOCATION OF $Y_1$ ($Y_1 > 0$) | LOCATION OF $Y_2$ ($Y_2 > 0$) | DETECTION RESULT |
|---|---|---|---|---|---|---|---|---|
| REGION 1 | 1 | 2 | 2 | O | O | O | O | PATTERN No. 1, 2, 19, 20 |
| | 2 | 2 | 2 | O | O | O | 1 | PATTERN No. 1~18, 19, 20 |
| | 3 | 2 | 2 | O | 1 | O | O | PATTERN No. 1, 2, 19~36 |
| | 4 | 2 | 2 | O | 1 | O | 1 | PATTERN No. 1~36 |
| | 5 | 2 | 3 | O | O | O | O | PATTERN No. 1~18, 19, 20 |
| | 6 | 2 | 3 | O | O | O | 1 | IMPOSSIBLE |
| | 7 | 2 | 3 | O | 1 | O | O | PATTERN No. 1~36 |
| | 8 | 2 | 3 | O | 1 | O | 1 | IMPOSSIBLE |
| | 9 | 2 | 2 | O | O | O | O | PATTERN No. 1, 2, 19~36 |
| | 10 | 2 | 2 | O | O | O | 1 | PATTERN No. 1~36 |
| | 11 | 2 | 2 | O | 1 | O | O | IMPOSSIBLE |
| | 12 | 2 | 2 | O | 1 | O | 1 | IMPOSSIBLE |
| | 13 | 2 | 3 | O | O | O | O | PATTERN No. 1~36 |
| | 14 | 2 | 3 | O | O | O | 1 | IMPOSSIBLE |
| | 15 | 2 | 3 | O | 1 | O | O | IMPOSSIBLE |
| | 16 | 2 | 3 | O | 1 | O | 1 | IMPOSSIBLE |

EP 0 333 496 B1

# Fig. 25B

EP 0 333 496 B1

| REGION No. | CONDITION No. | x shift 1 | y shift 0 | LOCATION OF $X_1$ ($X_1>0$) | LOCATION OF $X_2$ ($X_2>0$) | LOCATION OF $Y_0$ ($Y_0>0$) | LOCATION OF $Y_1$ ($Y_1>0$) | DETECTION RESULT |
|---|---|---|---|---|---|---|---|---|
| REGION 2 | 1 | 2 | 2 | O | O | O | 1 | PATTERN No.1~18,19,20(REDUNDANT) |
| | 2 | 2 | 2 | O | O | 1 | 1 | PATTERN No. 3,4,19,20 |
| | 3 | 2 | 2 | O | 1 | O | 1 | PATTERN No.1~36(REDUNDANT) |
| | 4 | 2 | 2 | O | 1 | 1 | 1 | PATTERN No. 3,4,19~36 |
| | 5 | 2 | 3 | O | O | O | 1 | IMPOSSIBLE |
| | 6 | 2 | 3 | O | O | 1 | 1 | PATTERN No.1~18,19,20 |
| | 7 | 2 | 3 | O | 1 | O | 1 | IMPOSSIBLE |
| | 8 | 2 | 3 | O | 1 | 1 | 1 | PATTERN No. 1~36 |
| | 9 | 3 | 2 | O | O | O | 1 | PATTERN No. 1~36(REDUNDANT) |
| | 10 | 3 | 2 | O | O | 1 | 1 | PATTERN No.3,4,19~36 |
| | 11 | 3 | 2 | O | 1 | O | 1 | IMPOSSIBLE |
| | 12 | 3 | 2 | O | 1 | 1 | 1 | IMPOSSIBLE |
| | 13 | 3 | 3 | O | O | O | 1 | IMPOSSIBLE |
| | 14 | 3 | 3 | O | O | 1 | 1 | PATTERN No. 1~36 |
| | 15 | 3 | 3 | O | 1 | O | 1 | IMPOSSIBLE |
| | 16 | 3 | 3 | O | 1 | 1 | 1 | IMPOSSIBLE |

# Fig. 25C

| REGION No. | CONDITION No. | x shift O | y shift O | LOCATION OF $X_0$ ($X_0 > 0$) | LOCATION OF $X_1$ ($X_1 > 0$) | LOCATION OF $Y_0$ ($Y_0 > 0$) | LOCATION OF $Y_1$ ($Y_1 > 0$) | DETECTION RESULT |
|---|---|---|---|---|---|---|---|---|
| REGION 3 | 1 | 2 | 2 | O | l | O | l | PATTERN No.1~36 (REDUNDANT) |
| | 2 | 2 | 2 | O | l | l | l | PATTERN No.3,4,19~36 (REDUNDANT) |
| | 3 | 2 | 2 | l | l | O | l | PATTERN No.1~18, 21, 22 |
| | 4 | 2 | 2 | l | l | l | l | PATTERN No.3,4,21,22 |
| | 5 | 2 | 3 | O | l | O | l | IMPOSSIBLE |
| | 6 | 2 | 3 | O | l | l | l | PATTERN No.1~36 (REDUNDANT) |
| | 7 | 2 | 3 | l | l | O | l | IMPOSSIBLE |
| | 8 | 2 | 3 | l | l | l | l | PATTERN No.1~18, 21, 22 |
| | 9 | 3 | 2 | O | l | O | l | IMPOSSIBLE |
| | 10 | 3 | 2 | O | l | l | l | IMPOSSIBLE |
| | 11 | 3 | 2 | l | l | O | l | PATTERN No.1~36 (REDUNDANT) |
| | 12 | 3 | 2 | l | l | l | l | PATTERN No.3,4,19~36 |
| | 13 | 3 | 3 | O | l | O | l | IMPOSSIBLE |
| | 14 | 3 | 3 | O | l | l | l | IMPOSSIBLE |
| | 15 | 3 | 3 | l | l | O | l | IMPOSSIBLE |
| | 16 | 3 | 3 | l | l | l | l | PATTERN No.1~36 |

Fig. 25 D

| REGION No. | CONDITION No. | x shift 0 | y shift 1 | LOCATION OF $X_0$ ($X_0 > 0$) | LOCATION OF $X_1$ ($X_1 > 0$) | LOCATION OF $Y_1$ ($Y_1 > 0$) | LOCATION OF $Y_2$ ($Y_2 > 0$) | DETECTION RESULT |
|---|---|---|---|---|---|---|---|---|
| REGION 4 | 1 | 2 | 2 | O | 1 | O | O | PATTERN No.1,2,19,36(REDUNDANT) |
| | 2 | 2 | 2 | O | 1 | O | 1 | PATTERN No.1~36 (REDUNDANT) |
| | 3 | 2 | 2 | 1 | 1 | O | O | PATTERN No.1,2,21,22 |
| | 4 | 2 | 2 | 1 | 1 | O | 1 | PATTERN No.1~18, 21,22 |
| | 5 | 2 | 3 | O | 1 | O | O | PATTERN No.1~36(REDUNDANT) |
| | 6 | 2 | 3 | O | 1 | O | 1 | IMPOSSIBLE |
| | 7 | 2 | 3 | 1 | 1 | O | O | PATTERN No. 1~18, 21,22 |
| | 8 | 2 | 3 | 1 | 1 | O | 1 | IMPOSSIBLE |
| | 9 | 3 | 2 | O | 1 | O | O | IMPOSSIBLE |
| | 10 | 3 | 2 | O | 1 | O | 1 | IMPOSSIBLE |
| | 11 | 3 | 2 | 1 | 1 | O | O | PATTERN No. 1,2,19~36 |
| | 12 | 3 | 2 | 1 | 1 | O | 1 | PATTERN No.1~36 |
| | 13 | 3 | 3 | O | 1 | O | O | IMPOSSIBLE |
| | 14 | 3 | 3 | O | 1 | O | 1 | IMPOSSIBLE |
| | 15 | 3 | 3 | 1 | 1 | O | O | PATTERN No.1~36 |
| | 16 | 3 | 3 | 1 | 1 | O | 1 | IMPOSSIBLE |

EP 0 333 496 B1

# Fig. 26  LOGIC CALCULATION  $( \frac{1}{2} > p \geqq \frac{1}{3},\ 1 > q \geqq \frac{1}{3})$

| SECTION | LOGIC CALCULATION |
|---------|-------------------|
| G 1 | $A * \overline{P2} * \overline{P4} * \overline{P6} * \overline{P8} * \overline{P10} * \overline{P12} + P1 + P3 + P5 + P7 + P9 + P11$ |
| G 2 | $B * \overline{P2} * \overline{P4} * \overline{P6} * \overline{P8} * \overline{P10} * \overline{P12} + P1 + P3 + P5 + P7 + P9 + P11$ |
| G 3 | $C * \overline{P2} * \overline{P4} * \overline{P6} * \overline{P8} * \overline{P10} * \overline{P12} + P1 + P3 + P5 + P7 + P9 + P11$ |
| G 4 | $D * \overline{P2} * \overline{P4} * \overline{P6} * \overline{P8} * \overline{P10} * \overline{P12} + P1 + P3 + P5 + P7 + P9 + P11$ |
| G 5 | $A*(B*\overline{P8}*\overline{P10}*\overline{P12}+D*\overline{P2}*\overline{P4}*\overline{P6}+C)+B*C*P + P1 + P3 + P5 + P7 + P9 + P11$ |
| G 6 | $B*(A*\overline{P8}*\overline{P10}*\overline{P12}+C*\overline{P2}*\overline{P4}*\overline{P6}+D)+A*C*D + P1 + P3 + P5 + P7 + P9 + P11$ |
| G 7 | $C*(D*\overline{P8}*\overline{P10}*\overline{P12}+B*\overline{P2}*\overline{P4}*\overline{P6}+A)+A*B*D + P1 + P3 + P5 + P7 + P9 + P11$ |
| G 8 | $D*(C*\overline{P8}*\overline{P10}*\overline{P12}+A*\overline{P2}*\overline{P4}*\overline{P6}+B)+A*B*C + P1 + P3 + P5 + P7 + P9 + P11$ |

$P1 = U1 * (PATTERN 1)$ ------------------------------ PATTERN 1 (Fig. 24)
$P2 = U1 * (PATTERN 2)$ ------------------------------ PATTERN 2 ( 〃 )
$P3 = U2 * (PATTERN 3)$ ------------------------------ PATTERN 3 ( 〃 )
$P4 = U2 * (PATTERN 4)$ ------------------------------ PATTERN 4 ( 〃 )
$P5 = U3 * (ODD\ No.\ PATTERNS\ OF\ 1\sim18$ ----------- ODD No. PATTERNS OF 1~18 (Fig. 24)
$P6 = U3 * (EVEN\ No.\ PATTERNS\ OF\ 1\sim18$ --------- EVEN No. PATTERNS OF 1~18 ( 〃 )
$P7 = V1 * (PATTERN 19)$ ----------------------------- PATTERN 19 (Fig. 24)
$P8 = V1 * (PATTERN 20)$ ----------------------------- PATTERN 20 ( 〃 )
$P9 = V2 * (PATTERN 21)$ ----------------------------- PATTERN 21 ( 〃 )
$P10 = V2 * (PATTERN 22)$ ---------------------------- PATTERN 22 ( 〃 )
$P11 = V3 * (ODD\ No.\ PATTERNS\ OF\ 19\sim36)$ ------- ODD No. PATTERNS OF 19~36 (Fig. 24)
$P12 = V3 * (EVEN\ No.\ PATTERNS\ No.OF\ 19\sim36)$ ----- EVEN No. PATTERNS OF 19~36 ( 〃 )

U1 = 1  FOR  PATTERN 1, PATTERN 2
U2 = 1  FOR  PATTERN 3, PATTERN 4
U3 = 1  FOR  PATTERNS 1~18
V1 = 1  FOR  PATTERN 19, PATTERN 20
V2 = 1  FOR  PATTERN 21, PATTERN 22
V3 = 1  FOR  PATTERNS 19~36

# Fig. 27

PIXEL DATA INPUT UNIT — 1

LOGIC CALCULATION CIRCUIT — 4

MONOCHROME DATA OUTPUT (I/O)

11  12
13  14
15  16

TWO DIMENSIONAL PICTURE STORAGE — 2

CONTROL UNIT — 3

LINE DISAPPEARANCE SUS-CEPTIBILITY DATA GENERATION — 31

REGION DISCRIMINATION — 32

# Fig. 28

DISTRIBUTION OF ORIGINAL PIXELS

# Fig. 29

## DIVISION OF AREA

# Fig. 30

## REFERENCE PIXELS

## Fig. 31A

CONDITION FOR DETECTING PIXELS SUSCEPTIBLE TO DISAPPEARANCE

$( 1 > p \geqq 1/2, \ 1 > q \geqq 1/2 )$

| REGION No. | CONDITION No. | x shift 1 | y shift 1 | LOCATION OF $X_1$ ($X_1 > 0$) | LOCATION OF $X_2$ ($X_2 > 0$) | LOCATION OF $Y_1$ ($Y_1 > 0$) | LOCATION OF $Y_2$ ($Y_2 > 0$) | DETECTION RESULT |
|---|---|---|---|---|---|---|---|---|
| REGION 1 | 1 | 1 | 1 | O | O | O | O | NO LINE SUSCEPTIBLE TO DISAPPEARANCE |
| | 2 | 1 | 1 | O | O | O | 1 | PATTERN No. 1,2 |
| | 3 | 1 | 1 | O | 1 | O | O | PATTERN No. 3,4 |
| | 4 | 1 | 1 | O | 1 | O | 1 | PATTERN No. 1,2,3,4 |
| | 5 | 1 | 2 | O | O | O | O | PATTERN No. 1,2 |
| | 6 | 1 | 2 | O | O | O | 1 | IMPOSSIBLE |
| | 7 | 1 | 2 | O | 1 | O | O | PATTERN No.1,2,3,4 |
| | 8 | 1 | 2 | O | 1 | O | 1 | IMPOSSIBLE |
| | 9 | 2 | 1 | O | O | O | O | PATTERN No. 3,4 |
| | 10 | 2 | 1 | O | O | O | 1 | PATTERN No. 1,2,3,4 |
| | 11 | 2 | 1 | O | 1 | O | O | IMPOSSIBLE |
| | 12 | 2 | 1 | O | 1 | O | 1 | IMPOSSIBLE |
| | 13 | 2 | 2 | O | O | O | O | PATTERN No. 1,2,3,4 |
| | 14 | 2 | 2 | O | O | O | 1 | IMPOSSIBLE |
| | 15 | 2 | 2 | O | 1 | O | O | IMPOSSIBLE |
| | 16 | 2 | 2 | O | 1 | O | 1 | IMPOSSIBLE |

EP 0 333 496 B1

## Fig.31 B

| REGION No. | CONDITION No. | x shift 1 | y shift O | LOCATION OF $X_1$ ($X_1 > 0$) | LOCATION OF $X_2$ ($X_2 > 0$) | LOCATION OF $Y_0$ ($Y_0 > 0$) | LOCATION OF $Y_1$ ($Y_1 > 0$) | DETECTION RESULT |
|---|---|---|---|---|---|---|---|---|
| REGION 2 | 1 | 1 | 1 | O | O | O | 1 | PATTERN No.1,2 (REDUNDANT) |
| | 2 | 1 | 1 | O | O | 1 | 1 | NO LINE SUSCEPTIBLE TO DISAPPEARANCE |
| | 3 | 1 | 1 | O | 1 | O | 1 | PATTERN No.1,2,3,4 (REDUNDANT) |
| | 4 | 1 | 1 | O | 1 | 1 | 1 | PATTERN No. 3,4 |
| | 5 | 1 | 2 | O | O | O | 1 | IMPOSSIBLE |
| | 6 | 1 | 2 | O | O | 1 | 1 | PATTERN No. 1,2 |
| | 7 | 1 | 2 | O | 1 | O | 1 | IMPOSSIBLE |
| | 8 | 1 | 2 | O | 1 | 1 | 1 | PATTERN No. 1,2,3,4 |
| | 9 | 2 | 1 | O | O | O | 1 | PATTERN No.1,2,3,4 (REDUNDANT) |
| | 10 | 2 | 1 | O | O | 1 | 1 | PATTERN No. 3,4 |
| | 11 | 2 | 1 | O | 1 | O | 1 | IMPOSSIBLE |
| | 12 | 2 | 1 | O | 1 | 1 | 1 | IMPOSSIBLE |
| | 13 | 2 | 2 | O | O | O | 1 | IMPOSSIBLE |
| | 14 | 2 | 2 | O | O | 1 | 1 | PATTERN No. 1,2,3,4 |
| | 15 | 2 | 2 | O | 1 | O | 1 | IMPOSSIBLE |
| | 16 | 2 | 2 | O | 1 | 1 | 1 | IMPOSSIBLE |

EP 0 333 496 B1

# Fig. 31C

| REGION No. | CONDITION No. | x shift 0 | y shift 0 | LOCATION OF $X_0$ ($X_0 > 0$) | LOCATION OF $X_1$ ($X_1 > 0$) | LOCATION OF $Y_0$ ($Y_0 > 0$) | LOCATION OF $Y_1$ ($Y_1 > 0$) | DETECTION RESULT |
|---|---|---|---|---|---|---|---|---|
| REGION 3 | 1 | 1 | 1 | 0 | 1 | 0 | 1 | PATTERN No.1,2,3,4(REDUNDANT) |
| | 2 | 1 | 1 | 0 | 1 | 1 | 1 | PATTERN No.3,4 (REDUNDANT) |
| | 3 | 1 | 1 | 1 | 1 | 0 | 1 | PATTERN No. 1,2 (REDUNDANT) |
| | 4 | 1 | 1 | 1 | 1 | 1 | 1 | NO LINE SUSCEPTIBLE TO DISAPPEARANCE |
| | 5 | 1 | 2 | 0 | 1 | 0 | 1 | IMPOSSIBLE |
| | 6 | 1 | 2 | 0 | 1 | 1 | 1 | PATTERN No.1,2,3,4(REDUNDANT) |
| | 7 | 1 | 2 | 1 | 1 | 0 | 1 | IMPOSSIBLE |
| | 8 | 1 | 2 | 1 | 1 | 1 | 1 | PATTERN No.1,2 |
| | 9 | 2 | 1 | 0 | 1 | 0 | 1 | IMPOSSIBLE |
| | 10 | 2 | 1 | 0 | 1 | 1 | 1 | IMPOSSIBLE |
| | 11 | 2 | 1 | 1 | 1 | 0 | 1 | PATTERN No.1,2,3,4( REDUNDANT ) |
| | 12 | 2 | 1 | 1 | 1 | 1 | 1 | PATTERN No. 3,4 |
| | 13 | 2 | 2 | 0 | 1 | 0 | 1 | IMPOSSIBLE |
| | 14 | 2 | 2 | 0 | 1 | 1 | 1 | IMPOSSIBLE |
| | 15 | 2 | 2 | 1 | 1 | 0 | 1 | IMPOSSIBLE |
| | 16 | 2 | 2 | 1 | 1 | 1 | 1 | PATTERN No. 1,2,3,4 |

EP 0 333 496 B1

## Fig. 31 D

| REGION No. | CONDITION No. | x shift 0 | y shift 1 | LOCATION OF $X_0$ ($X_0 > 0$) | LOCATION OF $X_1$ ($X_1 > 0$) | LOCATION OF $Y_1$ ($Y_1 > 0$) | LOCATION OF $Y_2$ ($Y_2 > 0$) | DETECTION RESULT |
|---|---|---|---|---|---|---|---|---|
| REGION 4 | 1 | 1 | 1 | 0 | 1 | 0 | 0 | PATTERN No. 3,4 (REDUNDANT) |
| | 2 | 1 | 1 | 0 | 1 | 0 | 1 | PATTERN No.1,2,3,4 (REDUNDANT) |
| | 3 | 1 | 1 | 1 | 1 | 0 | 0 | NO LINE SUSCEPTIBLE TO DISAPPEARANCE |
| | 4 | 1 | 1 | 1 | 1 | 0 | 1 | PATTERN No. 1, 2 |
| | 5 | 1 | 2 | 0 | 1 | 0 | 0 | PATTERN No.1,2,3,4 (REDUNDANT) |
| | 6 | 1 | 2 | 0 | 1 | 0 | 1 | IMPOSSIBLE |
| | 7 | 1 | 2 | 1 | 1 | 0 | 0 | PATTERN No.1,2 |
| | 8 | 1 | 2 | 1 | 1 | 0 | 1 | IMPOSSIBLE |
| | 9 | 2 | 1 | 0 | 1 | 0 | 0 | IMPOSSIBLE |
| | 10 | 2 | 1 | 0 | 1 | 0 | 1 | IMPOSSIBLE |
| | 11 | 2 | 1 | 1 | 1 | 0 | 0 | PATTERN No. 3,4 |
| | 12 | 2 | 1 | 1 | 1 | 0 | 1 | PATTERN No.1,2,3,4 |
| | 13 | 2 | 2 | 0 | 1 | 0 | 0 | IMPOSSIBLE |
| | 14 | 2 | 2 | 0 | 1 | 0 | 1 | IMPOSSIBLE |
| | 15 | 2 | 2 | 1 | 1 | 0 | 0 | PATTERN No.1,2,34 |
| | 16 | 2 | 2 | 1 | 1 | 0 | 1 | IMPOSSIBLE |

EP 0 333 496 B1

# Fig. 32

## DIVISION INTO SECTIONS

| G 1 | G 4 |
|-----|-----|
| G 2 | G 3 |

## LOGIC CALCULATION

| SECTION | LOGIC CALCULATION |
|---------|-------------------|
| G 1 | $A * \overline{P2} * \overline{P4} + P1 + P3$ |
| G 2 | $B * \overline{P2} * \overline{P4} + P1 + P3$ |
| G 3 | $C * \overline{P2} * \overline{P4} + P1 + P3$ |
| G 4 | $D * \overline{P2} * \overline{P4} + P1 + P3$ |

$$
\begin{array}{l}
U1 = 1 \quad \text{FOR PATTERN 1, PATTERN 2} \\
V1 = 1 \quad \text{FOR PATTERN 3, PATTERN 4} \\
P1 = U1 * (\text{PATTERN 1}) \ (\text{Fig. 11}) \\
P2 = U1 * (\text{PATTERN 2}) \ ( \quad '' \quad ) \\
P3 = V1 * (\text{PATTERN 3}) \ ( \quad '' \quad ) \\
P4 = V1 * (\text{PATTERN 4}) \ ( \quad '' \quad )
\end{array}
$$

EP 0 333 496 B1

Fig. 33A

Fig. 33

| Fig. 33 A | Fig. 33 B | Fig. 33 C |

APPARATUS STRUCTURE

( R··· REGISTER, SR··· SHIFT REGISTER )

70

# Fig. 33 B

# Fig. 33 C

*Fig. 34A*

OPERATION EXAMPLE
(REDUCTION OF $2/3$)

ORIGINAL PICTURE PIXEL
REDUCED PICTURE PIXEL

# Fig. 34B

## OPERATION EXAMPLE

Fig. 34C

OPERATION EXAMPLE

EP 0 333 496 B1